# EUROPEAN PATENT APPLICATION

(11) **EP 2 105 471 A1**
(43) Date of publication of application: **30.09.2009**
(21) Application number: 09004102.1
(22) Date of filing: 23.03.2009
(51) Int. Cl.: C09D 11/00

(54) **Method for forming ink jet image**

(30) Priority: 25.03.2008 JP 2008078920
(71) Applicant: FUJIFILM Corporation, Minato-ku Tokyo (JP)
(72) Inventor: Wachi, Naotaka, Kanagawa (JP); Kaimoto, Hideki, Fujinomiya-shi Shizuoka-ken (JP)
(74) Representative: HOFFMANN EITLE

(57) **Abstract**

The present invention provides a method for forming an ink jet image, the method comprising forming an image by using an apparatus to form an image on an image-receiving material by an ink jet system with an ink for ink jet recording containing at least a water-soluble dye, water and a water-soluble organic solvent and, after image formation, discharge and stack a plurality of the image-receiving materials respectively having images formed thereon, wherein the water-soluble organic solvent is selected from a water-soluble diol and/or a pyrrolidone derivative each having an I/O value of 3.0 or more, and is contained in an amount of 40 % by mass or more of the entire amount of water-soluble organic solvents in the ink for ink jet recording.

## Description

### BACKGROUND

### Field of the Invention

The present invention relates to a method for forming an ink jet image.

### Related Art

For color image recording materials, so-called subtractive three primary color dyes (dyes or pigments) and a black dye have been used to reproduce or record full color images. However, under the current circumstances, there is no dye with fastness having absorption properties capable of realizing preferable color reproduction regions and having resistance to various use conditions. Thus, improvement thereof has been strongly desired.
Ink jet recording methods have been rapidly popularized and are undergoing further development because the methods have advantages of low material costs, capability for high-speed recording, and low recording noise, and further allow color recording with ease.

The ink jet recording methods include continuous methods in which droplets are ejected in succession and on-demand methods in which droplets are ejected according to image information signals. In the ink jet recording methods, the droplets of an ink are discharged by a method of applying pressure to the ink by a piezo device; heating the ink to generate bubbles therein; using an ultrasonic wave; or aspirating the ink by an electrostatic force. As inks for ink jet recording, water-based inks, oil-based inks, or solid (melting-type) inks are used. Of various inks, aqueous ink is especially preferred from the aspects of handling properties such as safety and odor.

Colorants contained in the ink for ink jet recording are required to have excellent solubility or dispersibility in a solvent; to be capable of recording with a high density; to be excellent in hue; to have fastness with respect to light, heat, environmental active gases (e.g., SOx in addition to oxidizing gases such as NOx and ozone), water, and chemicals; to have exellent fixability with respect to an image receiving material and hardly blur; to be excellent in storability as an ink; to have no toxicity; to be high in purity; and to be available at a low price.

To these requirements, dyes for ink jet ink high in fastness, especially fast to active gas in the atmosphere have been vigorously developed by various manufacturers in recent years. A magenta dye having an anthrapyridone structure having high fastness is disclosed in JP-A No. 2007-77256. Also, the structure of a phthalocyanine dye that is strengthened in associating property of the dye is disclosed in JP-A No. 2007-23251. An ink-set using a dye whose oxidation potential is nobler than 0.8 V (vs SCE) is disclosed in JP-A No. 2004-331699.

Thus, with the improvement of fastness of dyes for ink jet recording, conventional photographic printing of digital images taken by a digital camera and a portable telephone has been increasingly replaced with ink jet recording.

### SUMMARY

The present invention has been made in view of the above circumstances and provides a method for forming an ink jet image.
A first aspect of the invention provides a method for forming an ink jet image, the method comprising forming an image by using an apparatus to form an image on an image-receiving material by an ink jet system with an ink for ink jet recording containing at least a water-soluble dye, water and a water-soluble organic solvent and, after image formation, discharge and stack a plurality of the image-receiving materials respectively having images formed thereon, wherein the water-soluble organic solvent is selected from a water-soluble diol and/or a pyrrolidone derivative each having an I/O value of 3.0 or more, and is contained in an amount of 40 % by mass or more of the entire amount of water-soluble organic solvents in the ink for ink jet recording

### DETAILED DESCRIPTION OF THE INVENTION

A method for forming an ink jet image according to the present invention will be described below.
The method for forming an ink jet image, the method comprising forming an image by using an apparatus to form an image on an image-receiving material by an ink jet system with an ink for ink jet recording containing at least a water-soluble dye, water and a water-soluble organic solvent and, after image formation, discharge and stack a plurality of the image-receiving materials respectively having images formed thereon, wherein the water-soluble organic solvent is selected from a water-soluble diol and/or a pyrrolidone derivative each having an I/O value of 3.0 or more, and is contained in an amount of 40 % by mass or more of the entire amount of water-soluble organic solvents in the ink for ink jet recording.
By using a water-soluble organic solvent having specific physical properties in an amount of 40 % by mass or more of the entire of the water-soluble organic solvents in the ink, the invention can provide a method for forming an ink jet image little in change in hue after recording, little in difference in densities of a stacked part and a non-stacked part, and further, capable of conspicuously exhibiting these effects even in the case of high speed printing.

### [Ink for ink jet recording]

### <Water-soluble organic solvent>

The ink for ink jet recording for use in the method for forming an ink jet image in the invention (hereinafter also referred to as "ink composition") contains at least a water-soluble organic solvent, in particular, contains water-soluble diol having an I/O value of 3.0 or more and/or a pyrrolidone derivativehaving an I/O value of 3.0 or more (hereinafter also referred to as "specific water-soluble organic solvent") in an amount of 40% or more of the entire of the water-soluble organic solvents.
By using ink containing the specific water-soluble organic solvent in a specific amount, difference in density in the case where image-receiving materials are stacked and the case not stacked just after printing is difficult to be caused.
The details of the reason why water-soluble diol and/or a pyrrolidone derivative having an I/O value of 3.0 or more exhibits the effect of the invention are unknown, but it is presumed that the structure of high polarity electronically affects the state of presence of the dye.

### (Water-soluble diol having I/O value of 3.0 or more)

The I/O value is important for judging the polarity of materials, and the details are described in I/O values (Inorganic/Organic) computed based on The Table of Inorganic Groups by Yoshio Koda, Yuki Gainenzu - Kiso to Oyo- (Organic Conceptual Drawings - Foundation and Application), Sankyo Publishing Co., Ltd., and the invention adopted this.
The calculating method of I/O value is described below. The Table of Inorganic Groups by Organic Conceptual Drawings that is the basis of computation of I/O values is shown below.

**TABLE 1**

| Inorganic Groups | I | Organic and Inorganic Groups | I | O |
|---|---|---|---|---|
| light metals | 500 | R⁴-Bi-OH | 250 | 80 |
| heavy metals, amines, ammonium salts | 400 | R⁴-Sb-OH | 250 | 60 |
| AsO₃Hs,AsO₂H | 300 | R⁴-As-OH | 250 | 40 |
| SO₂NHCO,-N=N-NH₂ | 260 | R⁴-P-OH | 250 | 20 |
| N⁺-OH,SO₃H,-NH-SO₂-NH- | 250 | -OSO₃H | 220 | 20 |
| CO-NH-CO-NH-CO- | 250 | >SO₂ | 170 | 40 |
| >-S-OH,-CO-NH-CO-NH- | 240 | >SO | 140 | 40 |
| SO₂-NH- | 240 | CSSH | 80 | 100 |
| CS-NH-*,-CONHCO-* | 230 | SCN | 80 | 90 |
| X=N-OH,-NH-CO-NH- | 220 | CSOH,-COSH | 80 | 80 |
| =N-NH-*,-CO-NH-NH₂ | 210 | NCS | 75 | 90 |
| CONH-* | 200 | >Bi- | 70 | 80 |
| 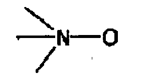 | 170 | NO₂ | 70 | 70 |
| | | | | |
| COOH | 150 | >Sb- | 70 | 60 |
| lactone rings | 120 | >As,-CN | 70 | 40 |
| CO-O-CO- | 110 | >P- | 70 | 20 |
| anthracene rings, phenanthrene rings | 105 | (CH₂CH₂O) | 60 | 30 |
| -OH | 100 | CSS-(Ph) | 50 | 130 |
| >Hg | 95 | CSO-(Ph),-COS-(Ph) | 50 | 80 |
| NH-NH-,-O-CO-O- | 80 | NO | 50 | 50 |
| N in amine-based compounds | 70 | O-NO₂ | 40 | 60 |
| C=O | 65 | -NC | 40 | 40 |
| COO-(Ar) | 60 | -Sb=Sb- | 30 | 90 |
| >C=NH | 50 | -As=As- | 30 | 60 |
| -O-O- | 40 | P=P-,-NCO | 30 | 30 |
| -N=N- | 30 | SH,-S-,-O-NO | 20 | 40 |
| -O- | 20 | I | 10 | 80 |
| benzene rings | 15 | Br | 10 | 60 |
| aliphatic rings | 10 | S= | 10 | 50 |
| triple bonds | 3 | Cl | 10 | 40 |
| double bonds | 2 | F | 5 | 5 |
| | | carbons | | 20 |
| | | terminal iso-branch | | -10 |
| * is applied to an acyclic part. | | terminal t-branch | | -20 |

In computing an I/O value, inorganic groups, the organic and concurrently inorganic groups, and the carbon atom number are examined from the structure of the objective compound, and the total number of numeric values of I values in the inorganic groups and the organic and concurrently inorganic groups, i.e., I₀ value, and the total number of O values in the organic and concurrently inorganic groups and the carbon atom number, i.e., O₀ value are computed, from which I₀/O₀ is computed, and the obtained numeric value is taken as the I/O value of the objective compound.
A specific method of computation is described taking the structural unit shown below as an example.

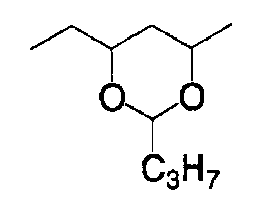

The case of the above compound has eight carbon atoms and two -O-. -O- is an inorganic group according to Table 1 above, and I: 20. The carbon atom number is O: 20. Accordingly, I value is 20×2=40, O value is 20×8=160, and I/O value of the structural unit is 40/160=0.25. In the case of a polymer having a plurality of structural unites, it is sufficient to find I/O value of each structural unit, and to perform computation according to polymerization ratio.

The water-soluble diols for use in the ink jet image-forming method in the invention are not especially restricted so long as they have an I/O value of 3.0 or more, but from the aspects of general-purpose properties, costs, and further, the viscosity increase in the case of being added to ink, ethylene glycol, diethylene glycol, triethylene glycol, tetraethylene glycol, propylene glycol, dipropylene glycol, and tripropylene glycol are preferably used, and ethylene glycol, diethylene glycol, triethylene glycol, propylene glycol, and dipropylene glycol are more preferred. The computed values of I/O values of these water-soluble diols are shown below.
Ethylene glycol (5.0), diethylene glycol (8.7), triethylene glycol (16.0), tetraethylene glycol (38.0), propylene glycol (3.3), and dipropylene glycol (3.7)

### (Pyrrolidone derivatives having I/O value of 3.0 or more)

As the pyrrolidone derivatives that can be used in the invention, for example, 2-pyrrolidone and N-alkyl-2-pyrrolidone (e.g., alkyl preferably has from 1 to 4 carbon atoms) are preferred, 2-pyrrolidone and N-methyl-2-pyrrolidone are more preferred, and 2-pyrrolidone is especially preferred.

Water-soluble diols and/or pyrrolidone derivatives having an I/O value of 3.0 or more for use in the invention are necessary to be contained in an amount of 40 % by mass or more, preferably 40 % by mass or more and 80 % by mass or less, and more preferably 50 % by mass or more and 70 % by mass or less of the entire of the water-soluble organic solvents.

As water-soluble organic solvents other than the specific water-soluble organic solvents, well-known water-soluble organic solvents can be used so long as the effect of the invention is not marred.
In the invention, the water-soluble organic solvents in the ink for ink jet recording may be used alone, or two or more solvents may be used in combination.

In the ink for ink jet recording for use in the method for forming an ink jet image of the invention, the water-soluble organic solvent is preferably used in an amount of from 1 to 60 % by mass in the total mass of the ink from the points of prevention of drying of the ink and osmosis of the ink into image-receiving paper, more preferably from 10 to 50 % by mass, and especially preferably from 15 to 40 % by mass.

### [Water-Soluble Dye]

It is preferred to use a water-soluble dye having oxidation potential of nobler than 1.0 V (vs SCE) in the ink for ink jet recording for use in the method for forming an ink jet image of the invention.
When the ink for ink jet recording is ink for ink jet recording containing each of a yellow dye, a magenta dye, a cyan dye, and a black dye, the content of the dye contained in each ink for ink jet recording, i.e., the yellow dye, magenta dye, cyan dye, and black dye, is preferably such that 50 wt% or more of the entire dye in the ink of each color has oxidation potential nobler than 1.0 V (vs SCE) from the point of giving fastness of image.
The nobler, the better is the oxidation potential. Oxidation potential is more preferably nobler than 1.1 V (vs SCE), and most preferably nobler than 1.15 V (vs SCE). The proportion of a dye having oxidation potential nobler than 1.0 V (vs SCE) accounting for in the entire dye is preferably the higher, more preferably 60 wt% or more, and most preferably 70 wt% or more. Further, it is preferred that the oxidation potentials of yellow, magenta, cyan and black dyes differ little in view of the balance at the time of discoloration, preferably within 0.3 V, and more preferably within 0.25 V.

The value of oxidation potential expresses the easiness of transfer of electrons from a sample to the electrode. The greater the value (i.e., oxidation potential is noble), the more difficult is the transfer of electrons from the sample to the electrode, in other words, difficult to be oxidized. In connection with the structure of a compound, oxidation potential becomes nobler by the introduction of an electron-attracting group, and oxidation potential becomes baser by the introduction of an electron-donating group.

As described in detail below, the value of oxidation potential means the potential where a compound is the anode in voltammetry and the electrons of a compound are extracted, and it is thought that the value of oxidation potential approximately concurs with HOMO energy level in the ground state of the compound.

As a result of the studies of the ozone fastness of a colored image by the present inventors, it has been found that there is correlation between the oxidation potential of the compound used in a colored image and ozone fastness, and by the use of a compound nobler in the value of oxidation potential to saturated calomel electrode (SCE), ozone fastness is improved.

The reason that the ozone fastness of a colored image is improved can be explained by the relationship of HOMO (Highest Occupied Molecular Orbital) and LUMO (Lowest Unoccupied Molecular Orbital) of a compound and ozone gas. That is, it is thought that a colorant is oxidized by the reaction of HOMO of the colorant and LUMO of ozone gas, so that the ozone fastness of the colored image is lowered. Accordingly, for the improvement of the ozone fastness, it is sufficient to lower HOMO of the colorant to reduce the reactivity with ozone gas.

The value of oxidation potential (Eox) can be easily measured in the industry. The measuring methods are described, for example, in P. Delahay, New Instrumental Methods in Electrochemistry, Interscience Publishers (1954), A.J. Bard et al., Electrochemical Methods, John Wiley & Sons (1980), and Akira Fujishima et al., Denkikagaku Sokutei-hou (Electrochemical Measuring Methods), Gihodo Shuppan Co., Ltd. (1984).

The measurement of oxidation potential will be described specifically below. Oxidation potential is measured as the value to SCE (saturated calomel electrode) by dissolving from 1×10⁻⁴ to 1×10⁻⁶ mol·dm⁻³ of a test sample in a solvent such as dimethylformamide or acetonitrile containing supporting electrolyte, e.g., sodium perchlorate or tetrapropylammonium perchlorate with cyclic voltammetry or direct current polarography.
Supporting electrolytes and solvents to be used can be selected appropriately depending upon the oxidation potential of and solubility of test samples. Supporting electrolytes and solvents that can be used are described in Akira Fujishima et al., Denkikagaku Sokutei-hou, pages 101 to 118, Giho-do Publishing Co. (1984).

There are cases where the value of oxidation potential deflects by several ten milli-volts or so by the influence of liquid junction potential and liquid resistance of sample solution or the like, but by correcting the deflection with a standard sample (e.g., hydroquinone), reproducibility of the measured value of potential can be secured.

As the oxidation potential in the invention, the value measured in N,N-dimethylformamide containing 0.1 mol·dm⁻³ of tetrapropylammonium perchlorate (the concentration of the compound is 1×10⁻³ mol·dm⁻³) as the supporting electrolyte using SCE (saturated calomel electrode) as the reference electrode, graphite electrode as the working electrode, and platinum electrode as the counter electrode with direct current polarography is used. When the dye is slightly soluble in N,N-dimethylformamide, water may be added within the range of 1%.

Dyes having any structure can be used in the invention so long as they satisfy the above oxidation potential. In particular, since yellow dyes are originally noble in oxidation potential (HOMO is low), they are hardly structurally restricted. The structures of dyes necessary to satisfy the oxidation potential are described in detail below.

In the invention, to lower the reactivity with ozone that is an electrophilic agent, it is preferred to introduce an electron-attracting group into a dye structure to make oxidation potential nobler. Accordingly, describing by using a σp value of Hammett's substitution constant that is the index of the electron attracting property and electron donating property of a substituent, it can be said that oxidation potential can be made nobler by the introduction of a substituent having a large σp value, such as a nitro group, a cyano group, a sulfinyl group, a sulfonyl group, or a sulfamoyl group.

Hammett's substitution constant σp value will be described briefly below. Hammett's rule is a rule of thumb advocated by L.P. Hammett in 1935 to discuss quantitatively the influence of a substituent on the reaction or equilibrium of a benzene derivative, and the validity of which is widely recognized today. There are a σp value and a σm value in the substitution constant required of Hammett's rule, and these values can be found in various ordinary publications, and described in detail in, for example, compiled by J.A. Dean, Lange's Handbook of Chemistry, 12th Edition, McGraw-Hill (1979), and Kagaku no Ryoiki (The Region of Chemistry), Extra Issue, No. 122, pages 96-103, Nankodo Co., Ltd. (1979).

Besides the above substituents, generally by containing the more the atoms high in the degree of negativity of electrons as the constituting atoms of the chromophore, the nobler can be made the oxidation potential. Accordingly, for example, oxidation potential can be made nobler by containing an unsaturated heterocyclic ring rather than an aryl group. As the hetero atoms high in the degree of negativity of electrons, a nitrogen atom, an oxygen atom and a sulfur atom can be exemplified, and a nitrogen atom is especially preferred.

Accordingly, the dyes for use in the invention are preferably those whose chromophore comprises hetero atoms, those containing an unsaturated heterocyclic ring, and those containing an electron-attracting group.
As preferred chromophores comprising hetero atoms, azo dyes, azomethine dyes, and phthalocyanine dyes can be exemplified, and azo dyes are especially preferred.
As the unsaturated heterocyclic rings, 5- or 6-membered unsaturated heterocyclic rings are preferred, and a thiophene ring, a furan ring, a pyrrole ring, a thiazole ring, an oxazole ring, an imidazole ring, an isothiazole ring, an isooxazole ring, a pyrazole ring, a thiadiazole ring, an oxadiazole ring, a triazole ring, a pyridine ring, a pyridazine ring, a pyrimidine ring, and a pyrazine ring are exemplified. The unsaturated heterocyclic ring may form a condensed ring with a hydrocarbon ring or a heterocyclic ring. In the case of a nitrogen-containing heterocyclic ring, the nitrogen atom may be quatemized. Further, with respect to heterocyclic rings capable of becoming tautomers, even when only one of tautomers is described, other tautomers are also included together. Of the above unsaturated heterocyclic rings, a thiazole ring, an isothiazole ring, a pyrazole ring, a thiadiazole ring, a pyridine ring, a pyrimidine ring, and a pyrazine ring are preferred, and an isothiazole ring, a pyrazole ring, a 1,2,4-thiadiazole ring, a 1,3,4-thiadiazole ring, and a pyridine ring are most preferred.

As preferred electron-attracting substituents, substituents having Hammett's σp value of 0.4 or more are preferred, substituents having σp value of 0.45 or more are more preferred, and substituents of 0.50 or more are most preferred. When a plurality of electron-attracting groups are present as the substituents on the chromophore, the sum total of σp values of the substituents is preferably 0.50 or more, more preferably 0.60 or more, and most preferably 0.70 or more. In connection with the specific examples of electron-attracting groups having a σp value of 0.40 or more, those described in J.A. Dean compiled, Lange's Handbook of Chemistry, 12th Edition, McGraw-Hill (1979), and Kagaku no Ryoiki (The Region of Chemistry), Extra Issue, No. 122, pages 96-103, Nankodo Co., Ltd. (1979) can be exemplified.

### (Water-Soluble Cyan Dye)

As the water-soluble cyan dye for use in the recording method of an ink jet image of the invention, a dye having oxidation potential of nobler than 1.0 V (vs SCE) represented by the following formula (C-1) is preferably used.
Further, it is preferred from the viewpoint of preservation stability of an image that 50 % by mass or more of water-soluble cyan dyes is a dye represented by formula (C-1), more preferably 70 % by mass or more, and especially preferably 80 % by mass or more.

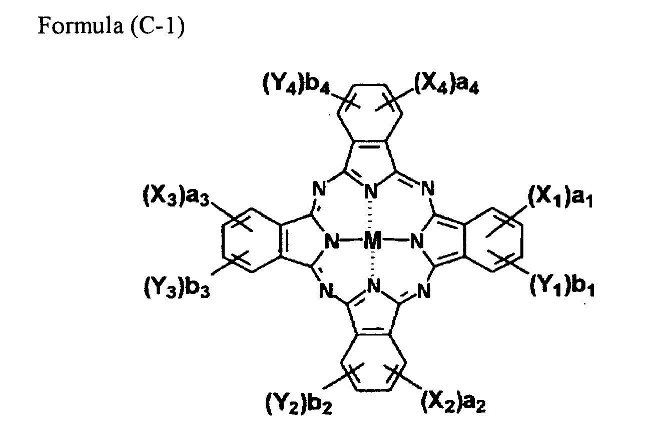

In formula (C-1), each of X₁, X₂, X₃ and X₄ independently represents any of -SO-Z, -SO₂-Z, -SO₂NV₁V₂, -CONV₁V₂, -CO₂Z, -CO-Z, or a sulfo group; each of Z independently represents a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group; and V₁ and V₂, which may be the same or different, each represent a hydrogen atom, a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group.
Each of Y₁, Y₂, Y₃ and Y₄ independently represents a hydrogen atom, a halogen atom, an alkyl group, a cycloalkyl group, an akenyl group, an aralkyl group, an aryl group, a heterocyclic group, a cyano group, a hydroxyl group, a nitro group, an amino group, an alkylamino group, an alkoxy group, an aryloxy group, an amido group, an arylamino group, a ureido group, a sulfamoylamino group, an alkylthio group, an arylthio group, an alkoxycarbonylamino group, a sulfonamido group, a carbamoyl group, a sulfamoyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imido group, a heterocyclic thio group, a phosphoryl group, an acyl group, or an ionic hydrophilic group, and each group may further have a substituent.
a₁ to a₄ and b₁ to b₄ respectively represent the number of substituent of X₁ to X₄ and Y₁ to Y₄.
Each of a₁ to a₄ independently represents an integer of from 0 to 4, provided that all of a₁ to a₄ do not represent 0 at the same time. Each of b₁ to b₄ independently represents an integer of from 0 to 4.
M represents a hydrogen atom, a metal atom or an oxide thereof, a hydroxide, or a halide, provided that at least one of X₁, X₂, X₃, X₄, Y₁, Y₂, Y₃ or Y₄ represents an ionic hydrophilic group, or a group having an ionic hydrophilic group as a substituent.

In the invention, in formula (C-1), it is preferred that each of a₁, a₂, a₃ and a₄ is 0 or 1, two or more of a₁, a₂, a₃ and a₄ are 1, and b₁, b₂, b₃ and b₄ are integers of making the sum with a₁, a₂, a₃ and a₄ of 4.

As described above, in formula (C-1), each of X₁, X₂, X₃ and X₄ independently represents any of -SO-Z, -SO₂-Z, -SO₂NV₁V₂, -CONV₁V₂, -CO₂Z, -CO-Z, and a sulfo group.

Z, which may be the same or different, each represents a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group.
Z is preferably a substituted or unsubstituted alkyl group, a substituted or unsubstituted aryl group, or a substituted or unsubstituted heterocyclic group, more preferably a substituted alkyl group, a substituted aryl group, or a substituted heterocyclic group, and most preferably a substituted alkyl group.

V₁ and V₂, which may be the same or different, each represents a hydrogen atom, a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group. Each of V₁ and V₂ preferably represents a hydrogen atom, a substituted or unsubstituted alkyl group, a substituted or unsubstituted aryl group, or a substituted or unsubstituted heterocyclic group, and most preferably represents a hydrogen atom, a substituted alkyl group, a substituted aryl group, or a substituted heterocyclic group.

Z, V₁ and V₂ may further have a substituent. As the substituents that Z, V₁ and V₂ may have independently, a halogen atom (e.g., a chlorine atom, a bromine atom), a straight chain or branched chain alkyl group having from 1 to 12 carbon atoms, an aralkyl group having from 7 to 18 carbon atoms, an alkenyl group having from 2 to 12 carbon atoms, a straight chain or branched chain alkynyl group having from 2 to 12 carbon atoms, a cycloalkyl group having from 3 to 12 carbon atoms that may have a side chain, a cycloalkenyl group having from 3 to 12 carbon atoms that may have a side chain (as these groups, e.g., methyl, ethyl, propyl, isopropyl, t-butyl, 2-methanesulfonylethyl, 3-phenoxypropyl, trifluoromethyl, cyclopentyl); an aryl group (e.g., phenyl, 4-t-butylphenyl, 2,4-di-t-amylphenyl); a heterocyclic group (e.g., imidazolyl, pyrazolyl, triazolyl, 2-furyl, 2-thienyl, 2-pyrimidinyl, 2-benzothiazolyl); an alkyloxy group (e.g., methoxy, ethoxy, 2-methoxyethoxy, 2-methanesulfonylethoxy); an aryloxy group (e.g., phenoxy, 2-methylphenoxy, 4-t-butylphenoxy, 3-nitrophenoxy, 3-t-butyloxycarbamoylphenoxy, 3-methoxycarbamoyl); an acylamino group (e.g., acetamido, benzamido, 4-(3-t-butyl-4-hydroxyphenoxy)butanamido); an alkylamino group (e.g., methylamino, butylamino, diethylamino, methylbutylamino); an anilino group (e.g., phenylamino, 2-chloroanilino); a ureido group (e.g., phenylureido, methylureido, N,N-dibutylureido); a sulfamoylamino group (e.g., N,N-dipropylsulfamoylamino); an alkylthio group (e.g., methylthio, octylthio, 2-phenoxyethylthio); an arylthio group (e.g., phenylthio, 2-butoxy-5-t-octylphenylthio, 2-carboxyphenylthio); an alkyloxycarbonylamino group (e.g., methoxycarbonylamino); a sulfonamido group (e.g., methanesulfonamido, benzenesulfonamido, p-toluenesulfonamido, octadecane); a carbamoyl group (e.g., N-ethylcarbamoyl, N,N-dibutylcarbamoyl); a sulfamoyl group (e.g., N-ethylsulfamoyl, N,N-dipropylsulfamoyl, N,N-diethylsulfamoyl); a sulfonyl group (e.g., methanesulfonyl, octanesulfonyl, benzenesulfonyl, toluenesulfonyl); an alkyloxycarbonyl group (e.g., methoxycarbonyl, butyloxycarbonyl); a heterocyclic oxy group (e.g., 1-phenyltetrazol-5-oxy, 2-tetrahydropyranyloxy); an azo group (e.g., phenylazo, 4-methoxyphenylazo, 4-pivaloylaminophenylazo, 2-hydroxy-4-propanoylphenylazo); an acyloxy group (e.g., acetoxy); a carbamoyloxy group (e.g., N-methylcarbamoyloxy, N-phenylcarbamoyloxy); a silyloxy group (e.g., trimethylsilyloxy, dibutylmethylsilyloxy); an aryloxycarbonylamino group (e.g., phenoxycarbonylamino); an imido group (e.g., N-succinimido, N-phthalimido); a heterocyclic thio group (e.g., 2-benzothiazolylthio, 2,4-di-phenoxy-1,3,5-triazole-6-thio, 2-pyridylthio); a sulfinyl group (e.g., 3-phenoxypropylsulfinyl); a phosphonyl group (e.g., phenoxyphosphonyl, octyloxyphosphonyl, phenylphosphonyl); an aryloxycarbonyl group (e.g., phenoxycarbonyl); an acyl group (e.g., acetyl, 3-phenylpropanoyl, benzoyl); an ionic hydrophilic group (e.g., a carboxyl group, a sulfo group, and a quaternary ammonium group); a cyano group; a hydroxyl group; a nitro group; and an amino group are exemplified.

As the substituted or unsubstituted alkyl group represented by Z, V₁ and V₂, an alkyl group having from 1 to 30 carbon atoms is preferred. A branched alkyl group is preferred for the reason that solubility of the dye and stability of the ink can be increased, and the case of having asymmetric carbon atoms (the use as racemic body) is especially preferred. As the examples of the substituents, the substituents that the compound represented by formula (I) described later may have can be exemplified. Of the substituents, a hydroxyl group, an ether group, an ester group, a cyano group, an amino group, an amido group, and a sulfonamido group are especially preferred for the reason of capable of improving an associating property and fastness of the dye. Besides the above, the substituted or unsubstituted alkyl group represented by Z, V₁ and V₂ may have a halogen atom or an ionic hydrophilic group.

As the substituted or unsubstituted cycloalkyl group represented by Z, V₁ and V₂, a cycloalkyl group having from 5 to 30 carbon atoms is preferred. The case of having asymmetric carbon atoms (used as racemic body) is especially preferred for the reason that solubility of the dye and stability of the ink can be increased. As the examples of the substituents, the substituents that the compound represented by formula (C-1) may have can be exemplified. Of the substituents, a hydroxyl group, an ether group, an ester group, a cyano group, an amino group, an amido group, and a sulfonamido group are especially preferred for the reason of capable of improving an associating property and fastness of the dye. Besides the above, the substituted or unsubstituted cycloalkyl group represented by Z, V₁ and V₂ may have a halogen atom or an ionic hydrophilic group.

As the substituted or unsubstituted alkenyl group represented by Z, V₁ and V₂, an alkenyl group having from 2 to 30 carbon atoms is preferred. A branched alkenyl group is preferred for the reason that solubility of the dye and stability of the ink can be increased, and the case of having asymmetric carbon atoms (the use as racemic body) is especially preferred. As the examples of the substituents, the substituents that the compound represented by formula (I) described later may have can be exemplified. Of the substituents, a hydroxyl group, an ether group, an ester group, a cyano group, an amino group, an amido group, and a sulfonamido group are especially preferred for the reason of capable of improving an associating property and fastness of the dye. Besides the above, the substituted or unsubstituted alkenyl group represented by Z, V₁ and V₂ may have a halogen atom or an ionic hydrophilic group.

As the substituted or unsubstituted alkynyl group represented by Z, V₁ and V₂, an alkynyl group having from 2 to 30 carbon atoms is preferred. A branched alkynyl group is preferred for the reason that solubility of the dye and stability of the ink can be increased, and the case of having asymmetric carbon atoms (the use as racemic body) is especially preferred. As the examples of the substituents, the substituents that the compound represented by formula (C-1) may have can be exemplified. Of the substituents, a hydroxyl group, an ether group, an ester group, a cyano group, an amino group, an amido group, and a sulfonamido group are especially preferred for the reason of capable of improving an associating property and fastness of the dye. Besides the above, the substituted or unsubstituted alkynyl group represented by Z, V₁ and V₂ may have a halogen atom or an ionic hydrophilic group.

As the substituted or unsubstituted aralkyl group represented by Z, V₁ and V₂, an aralkyl group having from 7 to 30 carbon atoms is preferred. A branched aralkyl group is preferred for the reason that solubility of the dye and stability of the ink can be increased, and the case of having asymmetric carbon atoms (the use as racemic body) is especially preferred. As the examples of the substituents, the substituents that the compound represented by formula (C-1) may have can be exemplified. Of the substituents, a hydroxyl group, an ether group, an ester group, a cyano group, an amino group, an amido group, and a sulfonamido group are especially preferred for the reason of capable of improving an associating property and fastness of the dye. Besides the above, the substituted or unsubstituted aralkyl group represented by Z, V₁ and V₂ may have a halogen atom or an ionic hydrophilic group.

As the substituted or unsubstituted aryl group represented by Z, V₁ and V₂, an aryl group having from 6 to 30 carbon atoms is preferred. As the examples of the substituents, the substituents that the compound represented by formula (I) described later may have can be exemplified. Above all, an electron-attracting group is especially preferred for the reason of capable of making oxidation potential of the dye noble and improving fastness.

As the heterocyclic group represented by Z, V₁ and V₂, 5- or 6-membered rings are preferred, and they may be further condensed. The heterocyclic group may be an aromatic heterocyclic ring or a non-aromatic heterocyclic ring. The heterocyclic groups represented by Z, V₁ and V₂ are shown in the form of heterocyclic ring omitting the positions of substitution. The positions of substitution are not restricted and, for example, pyridine can be substituted on the 2-, 3- and 4-positions. As the examples of the heterocyclic groups, pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, thiadiazole, isoxazole, benzisoxazole, pyrrolidine, piperidine, piperazine, imidazolidine, and thiazoline are exemplified. Aromatic heterocyclic groups are especially preferred and the preferred examples are shown below similarly to the above, e.g., pyridine, pyrazine, pyrimidine, pyridazine, triazine, pyrazole, imidazole, benzimidazole, triazole, thiazole, benzothiazole, isothiazole, benzisothiazole, and thiadiazole. Each of them may have a substituent, and as the examples of the substituents, the substituents that the compound represented by formula (I) described later may have can be exemplified. The preferred substituents are the same as the preferred substituents of the aryl group, and more preferred substituents are the same as the more preferred substituents of the aryl group, respectively.

When the phthalocyanine dye of the invention is water-soluble, it is preferred to have an ionic hydrophilic group. The examples of the ionic hydrophilic groups include a sulfo group, a carboxyl group, a phosphono group and a quaternary ammonium group. As the ionic hydrophilic groups, a carboxyl group, a phosphono group, and a sulfo group are preferred, and a carboxyl group and a sulfo group are especially preferred. The carboxyl group, phosphono group and sulfo group may take the state of a salt. The examples of counter ions to form a salt include an ammonium ion, an alkali metal ion (e.g., a lithium ion, a sodium ion, a potassium ion) and an organic cation (e.g., a tetramethylammonium ion, a tetramethylguanidinium ion, a tetramethylphosphonium ion). Of the counter ions, alkali metal salts are preferred, and lithium salts are especially preferred for capable of heightening solubility of dyes and improving stability of inks. The most preferred ionic hydrophilic group is a lithium salt of a sulfo group.

As the number of ionic hydrophilic groups, it is preferred to have at least two or more in one molecule of the phthalocyanine dye of the invention, and it is especially preferred to have at least two or more sulfo groups and/or carboxyl groups.

M is preferably a hydrogen atom, and as the metal atoms, Li, Na, K, Mg, Ti, Zr, V, Nb, Ta, Cr, Mo, W, Mn, Fe, Co, Ni, Ru, Rh, Pd, Os, Ir, Pt, Cu, Ag, Au, Zn, Cd, Hg, Al, Ga, In, Si, Ge, Sn, Pb, Sb, Bi and the like are exemplified. As the oxides, VO, GeO and the like are exemplified. As the hydroxides, Si(OH)₂Cr(OH)₂, Sn(OH)₂ and the like are exemplified. Further, as the halides, AlCl, SiCl₂, VCI, VCl₂, VOCl, FeCl, GaCl, ZrCl and the like are exemplified. Of the above, Cu, Ni, Zn and Al are especially preferred as M, and Cu is most preferred.

Pc (a phthalocyanine ring) may form a dimer (e.g., Pc-M-L-M-Pc) or a trimer via L (a divalent linking group), and M at that time may be the same or different from each other.

The divalent linking group represented by L is preferably an oxy group (-O-), a thio group (-S-), a carbonyl group (-CO-), a sulfonyl group (-SO₂-), an imino group (-NH-), a methylene group (-CH₂-), or a group formed by combination of these divalent linking groups.

As the chemical structure of the phthalocyanine dye in the invention, it is especially preferred to introduce an electron-attracting group such as a sulfinyl group (-SO-Z), a sulfonyl group (-SO₂-Z), a sulfamoyl group (-SO₂NV₁V₂), a carbamoyl group (-CONV₁V₂), an alkoxycarbonyl group, an aryloxycarbonyl group, a heterocyclic oxycarbonyl group (-CO₂Z), an acyl group (-CO-Z), or a sulfo group, at least one to every benzene ring of the phthalocyanine dye in the invention, so as to reach the total of σp value of the substituents of the phthalocyanine structure at large of 1.2 or more. Of the above electron-attracting groups, a sulfinyl group (-SO-Z), a sulfonyl group (-SO₂-Z), and a sulfamoyl group (-SO₂NV₁V₂) are preferred, a sulfonyl group (-SO₂-Z) and a sulfamoyl group (-SO₂NV₁V₂) are more preferred, and a sulfonyl group (-SO₂-Z) is most preferred.

With respect to preferred combinations of substituents of the compound represented by formula (C-1), the compound in which at least one of various substituents is the above preferred group is preferred, the compound in which various more substituents are the above preferred groups is more preferred, and the compound in which all the substituents are the above preferred groups is most preferred.

A cyan-based dye used as the colorant in the cyan ink composition represented by formula (C-1) is preferably a compound selected from the group consisting of a compound represented by the following formula (C-2) and the salts thereof.

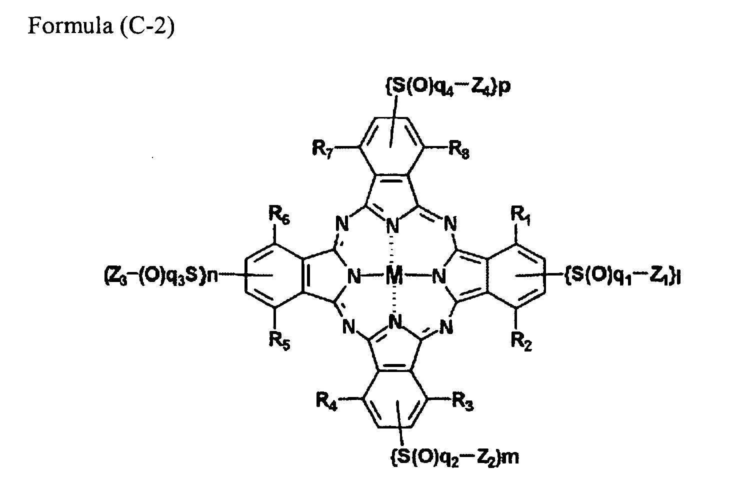

In formula (C-2), each of R₁, R₂, R₃, R₄, R₅, R₆, R₇ or R₈ independently represents a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxy group, an aryloxy group, an amido group, an arylamino group, a ureido group, a sulfamoylamino group, an alkylthio group, an arylthio group, an alkoxycarbonylamino group, a sulfonamido group, a carbamoyl group, a sulfamoyl group, a sulfinyl group, a sulfonyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imido group, a heterocyclic thio group, a phosphoryl group, an acyl group, or an ionic hydrophilic group, and these groups may further have a substituent.

Each of Z₁, Z₂, Z₃ or Z₄ independently represents a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group, provided that at least one of Z₁, Z₂, Z₃ or Z₄ has an ionic hydrophilic group as the substituent.

Each of 1, m, n, p, q₁, q₂, q₃ and q₄ independently represents an integer of 1 or 2.

M has the same meaning as in formula (C-1).

In formula (C-2) in the invention, each of 1, m, n and p independently represents an integer of 1 or 2, preferably two or more of 1, m, n and p represent 1, and most preferably 1=m=n=p=1.

In formula (C-2), each of q₁, q₂, q₃ or q₄ independently represents an integer of 1 or 2, preferably two or more of q₁, q₂, q₃ and q₄ represent 2, and most preferably q₁=q₂=q₃=q₄=2.

In formula (C-2), each of Z₁, Z₂, Z₃ or Z₄ independently represents a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group, preferably a substituted or unsubstituted alkyl group, a substituted or unsubstituted aryl group, or a substituted or unsubstituted heterocyclic group, more preferably a substituted alkyl group, a substituted aryl group, or a substituted heterocyclic group, and most preferably a substituted alkyl group, provided that at least one of Z₁, Z₂, Z₃ or Z₄ has an ionic hydrophilic group as the substituent.

In formula (C-2), each of R₁, R₂, R₃, R₄, R₅, R₆, R₇ or R₈ independently represents a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxy group, an aryloxy group, an amido group, an arylamino group, a ureido group, a sulfamoylamino group, an alkylthio group, an arylthio group, an alkoxycarbonylamino group, a sulfonamido group, a carbamoyl group, a sulfamoyl group, a sulfinyl group, a sulfonyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imido group, a heterocyclic thio group, a phosphoryl group, an acyl group, or an ionic hydrophilic group, preferably a hydrogen atom, a halogen atom, an alkyl group, an aryl group, a heterocyclic group, a cyano group, a hydroxyl group, a nitro group, a carbamoyl group, a sulfamoyl group, a sulfinyl group, a sulfonyl group, an alkoxycarbonyl group, an aryloxycarbonyl group, a phosphoryl group, an acyl group, or an ionic hydrophilic group, more preferably a hydrogen atom, a halogen atom, a cyano group, a hydroxyl group, a sulfamoyl group, a sulfinyl group, a sulfonyl group, or an ionic hydrophilic group, and most preferably a hydrogen atom.

M in formula (C-2) has the same meaning as M in formula (C-1), and preferred examples are also the same.

With respect to preferred combinations of substituents of the compound represented by formula (C-2), the compound in which at least one of various substituents is the above preferred group is preferred, the compound in which various more substituents are the above preferred groups is more preferred, and the compound in which all the substituents are the above preferred groups is most preferred.

A cyan-based dye used as the colorant in the cyan ink composition represented by formula (C-2) is preferably a compound selected from the group consisting of a compound represented by the following formula (C-3) and the salts thereof.

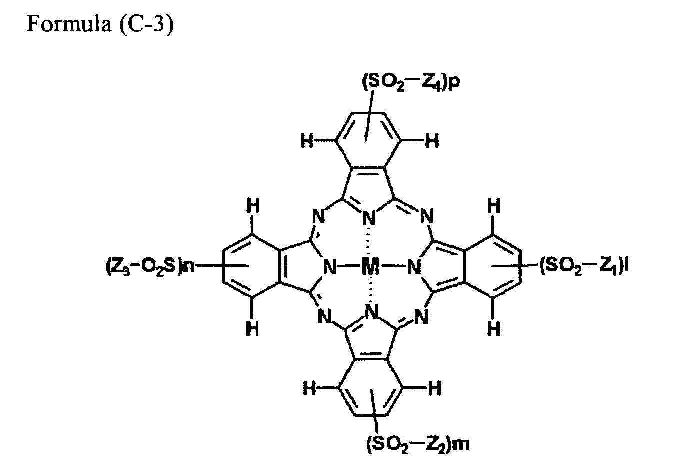

In formula (C-3), Z₁, Z₂, Z₃, Z₄, l, m, n, p and M respectively have the same meaning as Z₁, Z₂, Z₃, Z₄, l, m, n, p and M in formula (C-2).

In the invention, in formula (C-3), each of 1, m, n and p independently represents an integer of 1 or 2, preferably two or more of 1, m, n and p represent 1, and most preferably 1=m=n=p=1.

In formula (C-3), each of Z₁, Z₂, Z₃ or Z₄ independently represents a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group, preferably a substituted or unsubstituted alkyl group, a substituted or unsubstituted aryl group, or a substituted or unsubstituted heterocyclic group, more preferably a substituted alkyl group, a substituted aryl group, or a substituted heterocyclic group, and most preferably a substituted alkyl group.

In detail, each of Z₁, Z₂, Z₃ or Z₄ independently represents Z₁₁ (where Z₁₁ represents -(CH₂)₃SO₃M₂, here M₂ represents an alkali metal atom) and/or Z₁₂ (where Z₁₂ represents -(CH₂)₃SO₂NHCH₂CH(OH)CH₃). In particular, a dye mixture in which the molar ratio of Z₁₁ and Z₁₂ contained in the cyan dye represented by formula (C-3) at large of Z₁₁/Z₁₂ is 4/0, 3/1, 2/2, or 1/3 is preferred, and a dye mixture mainly comprising Z₁₁/Z₁₂ of 3/1 and/or a dye mixture mainly comprising Z₁₁/Z₁₂ of 2/2 are most preferred, provided that at least one of Z₁, Z₂, Z₃ and Z₄ has an ionic hydrophilic group as the substituent.

In -(CH₂)₃SO₃M₂ represented by Z₁₁, M₂ is preferably an alkali metal atom, more preferably a lithium, sodium, or potassium ion, and most preferably a lithium ion.

In formula (C-3), M has the same meaning as M in formula (C-2), and preferred examples are also the same.

With respect to preferred combinations of substituents of the compound represented by formula (C-3), the compound in which at least one of various substituents is the above preferred group is preferred, the compound in which various more substituents are the above preferred groups is more preferred, and the compound in which all the substituents are the above preferred groups is most preferred.

The content of the cyan-based dye contained in the cyan ink composition is determined depending upon the kinds of X₁ to X₄ and Y₁ to Y₄ in formula (C-1), and the kinds of the solvent components used in the manufacture of the ink composition, but it is preferred in the invention that the cyan-based dyes represented by formula (C-1) (the dyes of formula (C-1)) are contained in the cyan ink composition in an amount of from 1 to 10 % by mass in total based on the total mass of the cyan ink composition, and more preferably from 2 to 6 % by mass.

By making the amount of the dyes of formula (C-1) contained in the cyan ink composition in total of 1 % by mass or more, a coloring property of the ink on a recording medium when printed can be made good, and required image density can be secured. Further, by making the amount of the dyes of formula (C-1) contained in the cyan ink composition in total of 10 % by mass or less, good ejection of the cyan ink composition can be attained when used in an ink jet recording method, and the effect that the nozzles are difficult to be clogged can be obtained.

In the ink set in the invention, it is possible to include a cyan ink composition high in color density (a dark cyan ink composition) and a cyan ink composition low in color density (a light cyan ink composition) as the cyan ink compositions.

When the dark cyan ink composition and the light cyan ink composition are contained in the ink set in the invention, it is preferred that at least one of the dark cyan ink composition and the light cyan ink composition contains at least one dye represented by formula (C-1), (C-2) or (C-3) as a colorant.

Of the two kinds of cyan ink compositions different in color density, the cyan ink composition having low color density is preferably a mixture selected from the group consisting of a compound represented by formula (C-2) and the salts thereof wherein Z₁, Z₂, Z₃ and Z₄ independently represents Z₁₁ (where Z₁₁ represents -(CH₂)₃SO₃M₂, here M₂ represents an alkali metal atom) and/or Z₁₂ (where Z₁₂ represents -(CH₂)₃SO₂NHCH₂CH(OH)CH₃), in particular, a dye mixture in which the molar ratio of Z₁₁ and Z₁₂ contained in the cyan dye represented by formula (C-3) at large of Z₁₁/Z₁₂ is 4/0, 3/1, 2/2, or 1/3 is preferred, and a dye mixture mainly comprising Z₁₁/Z₁₂ of 2/2 is most preferred.

On the other hand, it is also preferred that, of the two kinds of cyan ink compositions different in color density, the cyan ink composition having low color density uses at least a compound selected from the group consisting of a compound represented by the following formula (C-4) and the salts thereof.

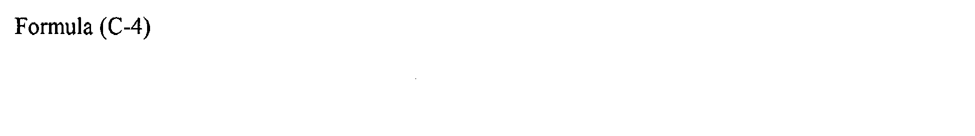

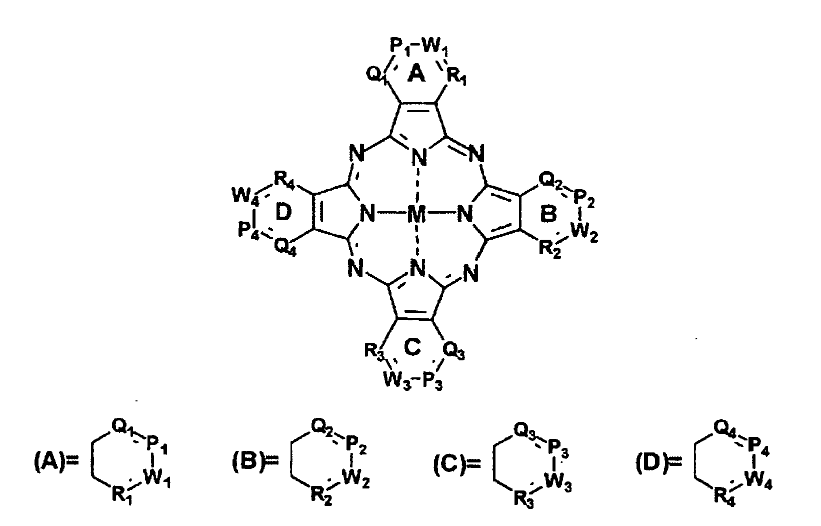

In formula (C-4), each of Q₁ to Q₄, P₁ to P₄, W₁ to W₄, and R₁ to R₄ independently represents (=C(J₁)- and/or -N=), (=C(J₂)- and/or -N=), (=C(J₃)- and/or -N=), or (=C(J₄)- and/or -N=). Each of J₁ to J₄ independently represents a hydrogen atom and/or a substituent. Of four rings [ring A (A), ring B (B), ring C (C), and ring D (D)] comprising (Q₁, P₁, W₁, R₁), (Q₂, P₂, W₂, R₂), (Q₃, P₃, W₃, R₃), or (Q₄, P₄, W₄, R₄), at least one ring is a heterocyclic ring.

In further detail, in the cyan ink composition represented by formula (C-4), of four rings [ring A (A), ring B (B), ring C (C), and ring D (D)] comprising (Q₁, P₁, W₁, R₁), (Q₂, P₂, W₂, R₂), (Q₃, P₃, W₃, R₃), or (Q₄, P₄, W₄, R₄), at least one heterocyclic ring is preferably a nitrogen-containing heterocyclic ring. The heterocyclic ring is preferably a pyridine ring, a pyrazine ring, a pyrimidine ring, or a pyridazine ring, more preferably the heterocyclic ring is a pyridine ring or a pyrazine ring, and most preferably a pyridine ring.

Still more preferably, in the cyan ink composition represented by formula (C-4), of four rings [ring A (A), ring B (B), ring C (C), and ring D (D)] comprising (Q₁, P₁, W₁, R₁), (Q₂, P₂, W₂, R₂), (Q₃, P₃, W₃, R₃), or (Q₄, P₄, W₄, R₄), when any ring represents an aromatic ring, the aromatic ring is preferably represented by the following formula (I).

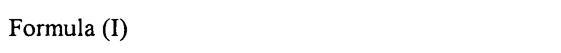

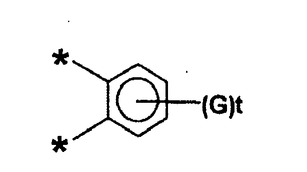

In formula (I), * represents a bonding position to a phthalocyanine structure. G represents -SO-Z₁, -SO₂-Z₁, -SO₂NZ₂Z₃, -CONZ₂Z₃, -CO₂Z₁, -COZ₁, or a sulfo group. t represents an integer of from 1 to 4.

Z₁, which may be the same or different, each represents a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group.

In formula (I), Z₁ preferably represents a substituted or unsubstituted alkyl group, a substituted or unsubstituted aryl group, or a substituted or unsubstituted heterocyclic group, more preferably a substituted alkyl group or a substituted aryl group, and most preferably a substituted alkyl group.

Z₂ and Z₃, which may be the same or different, each represents a hydrogen atom, a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group.

In formula (I), each of Z₁ and Z₂ preferably independently represents a hydrogen atom, a substituted or unsubstituted alkyl group, a substituted or unsubstituted aryl group, or a substituted or unsubstituted heterocyclic group, more preferably a hydrogen atom, a substituted alkyl group or a substituted aryl group, and most preferably one of Z₁ and Z₂ represents a hydrogen atom and the other represents a substituted alkyl group or a substituted aryl group.

In formula (I), G preferably represents -SO-Z₁, -SO₂-Z₁, -SO₂NZ₂Z₃, -CONZ₂Z₃, -CO₂Z₁ or -COZ₁, more preferably -SO-Z₁, -SO₂-Z₁, or -SO₂NZ₂Z₃, and most preferably -SO₂-Z₁.

In formula (I), t preferably represents an integer of from 1 to 3, more preferably an integer of 1 or 2, and most preferably 1.

In further detail, in the cyan ink composition represented by formula (C-4), when any arbitrary ring of ring A, ring B, ring C and ring D is an aromatic ring, it is preferred that at least one aromatic ring is a ring represented by the following formula (II).

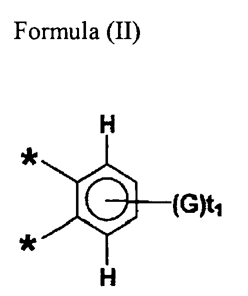

In formula (II), * represents a bonding position to a phthalocyanine structure.

G in formula (II) has the same meaning as G in formula (I), and preferred examples are also the same.

In formula (II), t₁ represents 1 or 2, and especially preferably t₁=1.

As the preferred specific examples of the dyes represented by formula (C-1), the compounds disclosed in JP-A No. 2007-138124, paragraphs [0582] to [0652] are exemplified.

### (Water-Soluble Yellow Dye)

As the water-soluble yellow dyes for use in the method for forming an ink jet image in the invention, dyes represented by formula (Y-I) having oxidation potential nobler than 1.0 V (vs SCE) are preferred.
Further, 50 % by mass or more of the water-soluble yellow dyes is preferably a dye represented by the following formula (Y-I) in view of preservation stability of the image, more preferably 60 % by mass or more, and especially preferably 70 % by mass or more.

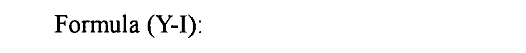

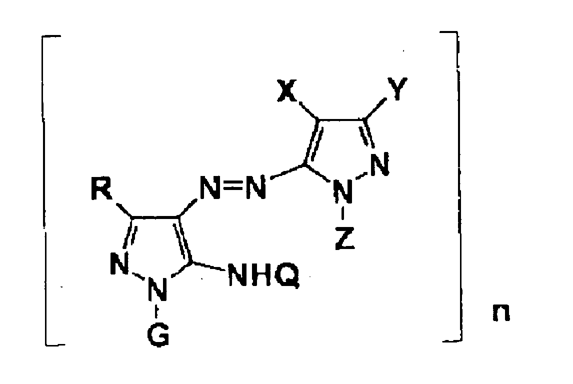

In formula (Y-I), G represents a heterocyclic group; n represents an integer from 1 to 3; when n is 1, R, X, Y, Z, Q, and G each represent a monovalent group; when n is 2, R, X, Y, Z, Q, and G each represent a monovalent or divalent substituent, in which at least one of R, X, Y, Z, Q, or G represents a divalent substituent; and when n is 3, R, X, Y, Z, Q, and G each represent a monovalent, divalent, or trivalent substituent, in which at least two of R, X, Y, Z, Q, or G represent a divalent substituent or represent a trivalent substituent.

In Formula (Y-I), preferable examples of substituents of G include 5- to 8-membered heterocyclic groups. Among the above, 5- or 6-membered substituted or unsubstituted aromatic or non-aromatic heterocyclic groups are preferable, and they may be further condensed. More preferable examples include 5- or 6-membered aromatic heterocyclic groups having 3 to 30 carbon atoms.

In the formula (Y-I), examples of the heterocyclic group represented by G include, with no limitation on substitution sites, pyridine, pyrazine, pyridazine, pyrimidine, triazine, quinoline, isoquinoline, quinazolin, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, thiadiazole, isoxazol, benzisoxazole, pyrrolidine, piperidine, piperazine, imidazolidine, thiazoline, and sulfolane.

When the heterocyclic group is a group capable of further having a substituent, the following substituents may be further contained.

In the formula (Y-I), examples include a straight or branched chain alkyl group having 1 to 12 carbon atoms, a straight or branched chain aralkyl group having 7 to 18 carbon atoms, a straight or branched chain alkenyl group having 2 to 12 carbon atoms, a straight or branched chain alkynyl group having 2 to 12 carbon atoms, a straight or branched chain cycloalkyl group having 3 to 12 carbon atoms, a straight or branched chain cycloalkenyl group having 3 to 12 carbon atoms (Among the above-mentioned respective groups, those having branched chains are preferable because they increase solubility of dyes and stability of inks, and those having asymmetrical carbons are particularly preferable. Examples include methyl, ethyl, propyl, isopropyl, sec-butyl, t-butyl, 2-ethylhexyl, 2-methylsulfonyl ethyl, 3-phenoxypropyl, trifluoromethyl, and cyclopentyl), a halogen atom (e.g., a chlorine atom or a bromine atom), an aryl group (e.g., phenyl, 4-t-butylphenyl, or 2,4-di-t-amyl phenyl), hetero 2-pyrimidinyl or 2-benzothiazolyl), a cyano group, a hydroxyl group, a nitro group, a carboxyl group, an amino group, an alkyloxy group (e.g., methoxy, ethoxy, 2-methoxyethoxy, or 2-methylsulfonyl ethoxy), an aryloxy group (e.g., phenoxy, 2-methylphenoxy, 4-t-butylphenoxy, 3-nitrophenoxy, 3-t-butyloxy carbonyl phenoxy, or 3-methoxycarbonyl phenyloxy), an acylamino group (e.g., acetamide, benzamide, or 4-(3-t-butyl-4-hydroxyphenoxy)butaneamide), an alkylamino group (e.g., methylamino, butylamino, diethylamino, or methylbutylamino), an anilino group (e.g., phenylamino or 2-chloroanilino), a ureido group (e.g., phenyl ureido, methyl ureido, or N,N-dibutyl ureido), a sulfamoylamino group (e.g., N,N-dipropylsulfamoylamino), an alkylthio group (e.g., methylthio, octylthio, or 2-phenoxyethylthio), an arylthio group (e.g., phenylthio, 2-butoxy-5-t-octyl phenylthio, or 2-carboxy phenylthio), an alkyloxy carbonylamino group (e.g., methoxycarbonylamino), an alkylsulfonylamino group and arylsulfonylamino group (e.g., methylsulfonylamino, phenylsulfonylamino, or p-toluenesulfonylamino), a carbamoyl group (e.g., N-ethylcarbamoyl or N,N-dibutylcarbamoyl), a sulfamoyl group (e.g., N-ethyl sulfamoyl, N,N-dipropyl sulfamoyl, or N-phenyl sulfamoyl), a sulfonyl group (e.g., methylsulfonyl, octylsulfonyl, phenylslufonyl, or p-toluenesulfonyl), an alkyloxy carbonyl group (e.g., methoxy carbonyl or butyloxy carbonyl), a heterocyclic oxy group (e.g., 1-phenyltetrazole-5-oxy or 2-tetrahydropyranyloxy), an azo group (e.g., phenylazo, 4-methoxy phenylazo, 4-pivaloyl amino phenylazo, or 2-hydroxy-4-propanoyl phenylazo), an acyloxy group (e.g., acetoxy), a carbamoyloxy group (e.g., N-methylcarbamoyloxy or N-phenylcarbamoyloxy), a silyloxy group (e.g., trimethylsilyloxy or dibutylmethyl silyloxy), an aryloxycarbonylamino group (e.g., phenoxycarbonylamino), an imido group (e.g., N-succinimide or N-phthalimide), a heterocyclic thio group (e.g., 2-benzothiazolylthio, 2,4-di-phenoxy-1,3,5-triazole-6-thio, or 2-pyridylthio), a sulfinyl group (e.g., 3-phenoxypropylsulfinyl), a phosphonyl group (e.g., phenoxy phosphonyl, octyloxy phosphonyl, or phenyl phosphonyl), an aryloxy carbonyl group (e.g., phenoxycarbonyl), an acyl group (e.g., acetyl, 3-phenylpropanoly, or benzoyl), and ionic hydrophilic groups (e.g., a carboxyl group, a sulfo group, a phosphono group, and a quaternary ammonium group).

Preferable examples of substituents of Q, R, X, Y, and Z in Formula (Y-I) will be described in detail.

When Q, R, X, Y, and Z represent a monovalent group, they each represent hydrogen atom or a monovalent substituent as a monovalent group. The monovalent substituent will be described in more detail. Examples of the monovalent substituent include a halogen atom, an alkyl group, a cycloalkyl group, an aralkyl group, an alkenyl group, an alkynyl group, an aryl group, a heterocyclic group, a cyano group, a hydroxyl group, a nitro group, an alkoxy group, an aryloxy group, a silyloxy group, a heterocyclic oxy group, an acyloxy group, a carbamoyloxy group, an alkoxy carbonyloxy group, an aryloxy carbonyloxy group, an amino group (an alkylamino group or an arylamino group), an acylamino group (an amide group), an aminocarbonyl amino group (a ureido group), an alkoxycarbonylamino group, an aryloxycarbonylamino group, a sulfamoylamino group, an alkylsulfonylamino group, an arylsulfonylamino group, an alkylthio group, an arylthio group, a heterocyclic thio group, a sulfamoyl group, an alkyl sulfinyl group, an aryl sulfinyl group, an alkyl sulfonyl group, an aryl sulfonyl group, an acyl group, an aryloxy carbonyl group, an alkoxycarbonyl group, a carbamoyl group, a phosphino group, a phosphinyl group, a phosphinyloxy group, a phosphinyl amino group, a silyl group, an azo group, and an imido group. Each group may further have a substituent.

Among the above, a hydrogen atom, a halogen atom, an alkyl group, an aryl group, a heterocyclic group, a cyano group, an alkoxy group, an amide group, a ureido group, an alkylsulfonylamino group, an arylsulfonylamino group, a sulfamoyl group, an alkylsulfonyl group, an arylsulfonyl group, a carbamoyl group, or an alkoxycarbonyl group is particularly preferable. In particular, a hydrogen atom, a halogen atom, an alkyl group, an aryl group, a cyano group, an alkylsulfonyl group, an arylsulfonyl group, or a heterocyclic group is preferable, and a hydrogen atom, an alkyl group, an aryl group, a cyano group, or an alkylsulfonyl group is the most preferable.

Hereinafter, the Q, R, X, Y, and Z will be described in more detail.

The halogen atoms represented by Q, R, X, Y, and Z each represent a chlorine atom, a bromine atom, or an iodine atom. Among the above, a chlorine atom or a bromine atom is preferable, and particularly a chlorine atom is preferable.

The alkyl group represented by Q, R, X, Y, and Z includes a substituted or unsubstituted alkyl group. As the substituted or unsubstituted alkyl group, an alkyl group having 1 to 30 carbon atoms is preferable. Examples of the substituent are the same as exemplified about in the case when G represents a group that may further have a substituent. In particular, a hydroxyl group, an alkoxy group, a cyano group, a halogen atom, a sulfo group (which may be in the form of a salt), or a carboxyl group (which may be in the form of a salt) is preferable. Examples of the alkyl group may include methyl, ethyl, butyl, t-butyl, n-octyl, eicosyl, 2-chloroethyl, hydroxyethyl, cyanoethyl, and 4-sulfobutyl.

The cycloalkyl group represented by Q, R, X, Y, and Z includes a substituted or unsubstituted cycloalkyl group. As the substituted or unsubstituted cycloalkyl group, a cycloalkyl group having 5 to 30 carbon atoms is preferable. Examples of the substituent are the same as exemplified about in the case when G represents a group that may further have a substituent. Examples of the cycloalkyl group may include cyclohexyl, cyclopentyl, and 4-n-dodecylcyclohexyl.

The aralkyl group represented by Q, R, X, Y, and Z includes a substituted or unsubstituted aralkyl group. As the substituted or unsubstituted aralkyl group, an aralkyl group having 7 to 30 carbon atoms is preferable. Examples of the substituent are the same as exemplified about in the case when G represents a group that may further have a substituent. Examples of the aralkyl group may include benzyl and 2-phenethyl.

The alkenyl group represented by Q, R, X, Y, and Z each represents a substituted or unsubstituted alkenyl group that may be a straight chain, branched chain, or cyclic form. Preferable examples include a substituted or unsubstituted alkenyl group having 2 to 30 carbon atoms, such as vinyl, allyl, prenyl, geranyl, oleyl, 2-cyclopentene-1-yl, and 2-cyclohexene-1-yl.

The alkynyl group represented by Q, R, X, Y, and Z may be a substituted or unsubstituted alkynyl group having 2 to 30 carbon atoms, such as, for example, ethynyl or propargyl.

The aryl group represented by Q, R, X, Y, and Z may be a substituted or unsubstituted aryl group having 6 to 30 carbon atoms, and examples may include phenyl, p-tolyl, naphthyl, m-chlorophenyl, and o-hexadecanoly aminophenyl. Examples of the substituent are the same as exemplified about in the case when G represents a group that may further have a substituent.

The heterocyclic group represented by Q, R, X, Y, and Z may be a monovalent group obtained by removing one hydrogen atom from a 5- or 6-membered substituted or unsubstituted aromatic or non-aromatic heterocyclic compound, which may be further condensed. A 5- or 6-membered aromatic heterocyclic group having 3 to 30 carbon atoms are more preferable. Examples of the substituent are the same as exemplified about in the case when G represents a group that may further have a substituent. Examples of the heterocyclic group include, with no limitation on substitution sites, pyridine, pyrazine, pyridazine, pyrimidine, triazine, quinoline, isoquinoline, quinazolin, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, thiadiazole, isoxazol, benzisoxazole, pyrrolidine, piperidine, piperazine, imidazolidine, and thiazoline.

The alkoxy group represented by Q, R, X, Y, and Z includes a substituted or unsubstituted alkoxy group. As the substituted or unsubstituted alkoxy group, an alkoxy group having 1 to 30 carbon atoms is preferable. Examples of the substituent are the same as exemplified about in the case when G represents a group that may further have a substituent. Examples of the alkoxy group may include methoxy, ethoxy, isopropoxy, n-octyloxy, methoxyethoxy, hydroxyethoxy, and 3-carboxypropoxy.

The aryloxy group represented by Q, R, X, Y, and Z may preferably be a substituted or unsubstituted aryloxy group having 6 to 30 carbon atoms. Examples of the substituent are the same as exemplified about in the case when G represents a group that may further have a substituent. Examples of the aryloxy group may include phenoxy, 2-methylphenoxy, 4-t-butylphenoxy, 3-nitrophenoxy, and 2-tetradecanoylamino phenoxy.

The silyloxy group represented by Q, R, X, Y, and Z may preferably be a silyloxy group having 3 to 20 carbon atoms, and examples may include trimethylsilyloxy and t-butyldimethylsilyloxy.

The heterocyclic oxy group represented by Q, R, X, Y, and Z may preferably be a substituted or unsubstituted heterocyclic oxy group having 2 to 30 carbon atoms. Examples of the substituent are the same as exemplified about in the case when G represents a group that may further have a substituent. Examples of the heterocyclic oxy group may include 1-phenyltetrazole-5-oxy and 2-tetrahydropyranyloxy.

The acyloxy group represented by Q, R, X, Y, and Z may preferably be a formyloxy group, a substituted or unsubstituted alkylcarbonyloxy group having 2 to 30 carbon atoms, or a substituted or unsubstituted arylcarbonyloxy group having 6 to 30 carbon atoms. Examples of the substituent are the same as exemplified about in the case when G represents a group that may further have a substituent. Examples of the acyloxy group may include formyloxy, acetyloxy, pivaloyloxy, stearoyloxy, benzoyloxy, and p-methoxypheny carbonyloxy.

The carbamoyloxy group represented by Q, R, X, Y, and Z may preferably be a substituted or unsubstituted carbamoyloxy group having 1 to 30 carbon atoms. Examples of the substituent are the same as exemplified about in the case when G represents a group that may further have a substituent. Examples of the carbamoyloxy group may include N,N-dimethylcarbamoyloxy, N,N-diethylcarbamoyloxy, morpholino carbonyloxy, N,N-di-n-octyl aminocarbonyloxy, and N-n-octyl carbamoyloxy.

The alkoxy carbonyloxy group represented by Q, R, X, Y, and Z may preferably be a substituted or unsubstituted alkoxy carbonyloxy group having 2 to 30 carbon atoms. Examples of the substituent are the same as exemplified about in the case when G represents a group that may further have a substituent. Examples of the alkoxy carbonyloxy group may include methoxycarbonyloxy, ethoxycarbonyloxy, t-buthoxycarbonyloxy, and n-octyl carbonyloxy.

The aryloxy carbonyloxy group represented by Q, R, X, Y, and Z may preferably be a substituted or unsubstituted aryloxy carbonyloxy group having 7 to 30 carbon atoms. Examples of the substituent are the same as exemplified about in the case when G represents a group that may further have a substituent. Example of the aryloxy carbonyloxy group may include phenoxy carbonyloxy, p-methoxy phenoxy carbonyloxy, and p-n-hexadecyloxyphenoxy carbonyloxy.

The amino group represented by Q, R, X, Y, and Z may preferably be a substituted or unsubstituted alkylamino group having 1 to 30 carbon atoms or a substituted or unsubstituted arylamino group having 6 to 30 carbon atoms. Examples of the substituent are the same as exemplified about in the case when G represents a group that may further have a substituent. Examples of the amino group may include amino, methylamino, dimethylamino, anilino, N-methyl-anilino, diphenylamino, hydroxyethylamino, carboxy ethylamino, sulfoethylamino, and 3,5-dicarboxyanilino.

The acylamino group represented by Q, R, X, Y, and Z may preferably be a formylamino group, a substituted or unsubstituted alkyl carbonylamino group having 1 to 30 carbon atoms, and a substituted or unsubstituted aryl carbonylamino group having 6 to 30 carbon atoms. Examples of the substituent are the same as exemplified about in the case when G represents a group that may further have a substituent. Examples of the acylamino group may include formylamino, acetylamino, pivaloyl amino, lauroyl amino, benzoylamino, and 3,4,5-tri-n-octyloxyphenylcarbonylamino.

The aminocarbonyl amino group represented by Q, R, X, Y, and Z may preferably be a substituted or unsubstituted aminocarbonyl amino group having 1 to 30 carbon atoms. Examples of the substituent are the same as exemplified about in the case when G represents a group that may further have a substituent. Examples of the aminocarbonyl amino group may include carbamoylamino, N,N-dimethylaminocarbonylamino, N,N-diethylaminocarbonylamino, and morpholinocarbonylamino.

The alkoxycarbonylamino group represented by Q, R, X, Y, and Z may preferably be a substituted or unsubstituted alkoxycarbonylamino group having 2 to 30 carbon atoms. Examples of the substituent are the same as exemplified about in the case when G represents a group that may further have a substituent. Examples of the alkoxycarbonylamino group may include methoxycarbonylamino, ethoxycarbonylamino, t-butoxycarbonylamino, n-octadecyloxycarbonylamino, and N-methyl-methoxycarbonylamino.

The aryloxycarbonylamine group represented by Q, R, X, Y, and Z may preferably be a substituted or unsubstituted aryloxycarbonylamino group having 7 to 30 carbon atoms. Examples of the substituent are the same as exemplified about in the case when G represents a group that may further have a substituent. Examples of the aryloxycarbonylamino group may include phenoxycarbonylamino, p-chlorophenoxycarbonylamino, and m-n-octyloxyphenoxycarbonylamino.

The sulfamoylamino group represented by Q, R, X, Y, and Z may preferably be a substituted or unsubstituted sulfamoylamino group having 0 to 30 carbon atoms. Examples of the substituent are the same as exemplified about in the case when G represents a group that may further have a substituent. Examples of the sulfamoylamino group may include sulfamoylamino, N,N-dimethylamino sulfonylamino, and N-n-octylamino sulfonylamino.

The alkylsulfonylamino group and the arylsulfonylamino group represented by Q, R, X, Y, and Z may preferably be a substituted or unsubstituted alkylsulfonylamino group having 1 to 30 carbon atoms or a substituted or unsubstituted arylsulfonylamino group having 6 to 30 carbon atoms. Examples of the substituent are the same as exemplified about in the case when G represents a group that may further have a substituent. Examples of the alkylsulfonylamino group and the arylsulfonylamino group may include methylsulfonylamino, butylsulphonylamino, phenylsulfonylamino, 2,3,5-trichlorophenyl sulfonylamino, and p-methylphenyl sulfonylamino.

The alkylthio group represented by Q, R, X, Y, and Z may preferably be a substituted or unsubstituted alkylthio group having 1 to 30 carbon atoms. Examples of the substituent are the same as exemplified about in the case when G represents a group that may further have a substituent. Examples of the alkylthio group may include methylthio, ethylthio, and n-hexadecylthio.

The arylthio group represented by Q, R, X, Y, and Z may preferably be a substituted or unsubstituted arylthio group having 6 to 30 carbon atoms. Examples of the substituent are the same as exemplified about in the case when G represents a group that may further have a substituent. Examples of the arylthio group may include phenylthio, p-chlorophenylthio, and m-methoxyphenylthio.

The heterocyclic thio group represented by Q, R, X, Y, and Z may preferably be a substituted or unsubstituted heterocyclic thio group having 2 to 30 carbon atoms. Examples of the substituent are the same as exemplified about in the case when G represents a group that may further have a substituent. Examples of the heterocyclic thio group may include 2-benzothiazolylthio and 1-phenyltetrazole-5-yl thio.

The sulfamoyl group represented by Q, R, X, Y, and Z may preferably be a substituted or unsubstituted sulfamoyl group having 0 to 30 carbon atoms. Examples of the substituent are the same as exemplified about in the case when G represents a group that may further have a substituent. Examples of the sulfamoyl group may include N-ethyl sulfamoyl, N-(3-dodecyloxypropyl) sulfamoyl, N,N-dimethyl sulfamoyl, N-acetyl sulfamoyl, N-benzoyl sulfamoyl, and N-(N'-phenylcarbamoyl) sulfamoyl.

The alkylsulfinyl group and the arylsulfinyl group represented by Q, R, X, Y, and Z may preferably be a substituted or unsubstituted alkyl sulfinyl group having 1 to 30 carbon atoms or a substituted or unsubstituted aryl sulfinyl group having 6 to 30 carbon atoms. Examples of the substituent are the same as exemplified about in the case when G represents a group that may further have a substituent. Examples of the alkyl sulfinyl group and the aryl sulfinyl group may include methylsulfinyl, ethylsulfinyl, phenylsulfinyl, and p-methylphenylsulfinyl.

The alkylsulfonyl group and the arylsulfonyl group represented by Q, R, X, Y, and Z may preferably be a substituted or unsubstituted alkylsulfonyl group having 1 to 30 carbon atoms and a substituted or unsubstituted arylsulfonyl group having 6 to 30 carbon atoms. Examples of the substituent are the same as exemplified about in the case when G represents a group that may further have a substituent. Examples of the alkylsulfonyl group and the arylsulfonyl group may include methylsulfonyl, ethylsulfonyl, phenylslufonyl, and p-toluenesulfonyl.

The acyl group represented by Q, R, X, Y, and Z may preferably be a formyl group, a substituted or unsubstituted alkylcarbonyl group having 2 to 30 carbon atoms, a substituted or unsubstituted arylcarbonyl group having 7 to 30 carbon atoms, or a substituted or unsubstituted heterocyclic carbonyl group having 4 to 30 carbon atoms that bonded to a carbonyl group via a carbon atom. Examples of the substituent are the same as exemplified about in the case when G represents a group that may further have a substituent. Examples of the acyl group may include acetyl, pivaloyl, 2-chloroacetyl, stearoyl, benzoyl, p-n-octyloxyphenyl carbonyl, 2-pyridylcarbonyl, and 2-furylcarbonyl.

The aryloxy carbonyl group represented by Q, R, X, Y, and Z may preferably be a substituted or unsubstituted aryloxy carbonyl group having 7 to 30 carbon atoms. Examples of the substituent are the same as exemplified about in the case when G represents a group that may further have a substituent. Examples of the aryloxy carbonyl group may include phenoxycarbonyl, o-chlorophenoxycarbonyl, m-nitrophenoxycarbonyl, and p-t-butylphenoxycarbonyl.

The alkoxycarbonyl group represented by Q, R, X, Y, and Z may preferably be a substituted or unsubstituted alkoxycarbonyl group having 2 to 30 carbon atoms. Examples of the substituent are the same as exemplified about in the case when G represents a group that may further have a substituent. Examples of the alkoxycarbonyl group may include methoxycarbonyl, ethoxycarbonyl, t-butoxycarbonyl, and n-octadecyloxycarbonyl.

The carbamoyl group represented by Q, R, X, Y, and Z may preferably be a substituted or unsubstituted carbamoyl group having 1 to 30 carbon atoms. Examples of the substituent are the same as exemplified about in the case when G represents a group that may further have a substituent. Examples of the carbamoyl group may include carbamoyl, N-methylcarbamoyl, N,N-dimethylcarbamoyl, N,N-di-n-octyl carbamoyl, and N-(methylsulfonyl)carbamoyl.

The phosphino group represented by Q, R, X, Y, and Z may preferably be a substituted or unsubstituted phosphino group having 2 to 30 carbon atoms. Examples of the substituent are the same as exemplified about in the case when G represents a group that may further have a substituent. Examples of the phosphino group may include dimethylphosphino, diphenylphosphino, and methylphenoxyphosphino.

The phosphinyl group represented by Q, R, X, Y, and Z may preferably be a substituted or unsubstituted phosphinyl group having 2 to 30 carbon atoms. Examples of the substituent are the same as exemplified about in the case when G represents a group that may further have a substituent. Examples of the phosphinyl group may include phosphinyl, dioctyloxyphosphinyl, and diethoxyphosphinyl.

The phosphinyloxy group represented by Q, R, X, Y, and Z may preferably be a substituted or unsubstituted phosphinyloxy group having 2 to 30 carbon atoms. Examples of the substituent are the same as exemplified about in the case when G represents a group that may further have a substituent. Examples of the phosphinyloxy group may include diphenoxyphosphinyloxy and dioctyloxyphosphinyloxy.

The phosphinyl amino group represented by Q, R, X, Y, and Z may preferably be a substituted or unsubstituted phosphinyl amino group having 2 to 30 carbon atoms. Examples of the substituent are the same as exemplified about in the case when G represents a group that may further have a substituent. Examples of the phosphinyl amino group may include dimethoxyphosphinylamino and dimethylaminophosphinylamino.

The silyl group represented by Q, R, X, Y, and Z may preferably be a substituted or unsubstituted silyl group having 3 to 30 carbon atoms. Examples of the substituent are the same as exemplified about in the case when G represents a group that may further have a substituent. Examples of the silyl group may include trimethylsilyl, t-butyldimethylsilyl, and phenyldimethylsilyl.

Examples of the azo group represented by Q, R, X, Y, and Z may include phenylazo, 4-methoxyphenylazo, 4-pivaloylaminophenylazo, and 2-hydroxy-4-propanoylphenylazo.

Examples of the imido group represented by Q, R, X, Y, and Z may include N-succinimide and N-phthalimide.

When Q, R, X, Y, and Z represent a divalent group, the divalent group is preferably an alkylene group (e.g., methylene, ethylene, propylene, butylene, or pentylene), an alkenylene group (e.g., ethenylene or propenylene), an alkynylene group (e.g., ethynylene or propynylene), an arylene group (e.g., phenylene or naphthylene), a divalent heterocyclic group (e.g., 6-chloro-1,3,5-triazine-2,4-diyl group, pyrimidine-2,4-diyl group, pyrimidine-4,6-diyl group, quinoxaline-2,3-diyl group, or pyridazine 3,6-diyl), -O-, -CO-, -NR'- (R' represents a hydrogen atom, an alkyl group, or an aryl group.), -S-, -SO₂-, -SO-, or combination thereof (e.g., -NHCH₂CH₂NH-, -NHCONH-, and the like).

An alkylene group, an alkenylene group, an alkynylene group, an arylene group, a divalent heterocyclic group, and an alkyl group or an aryl group of R may further have a substituent.

Examples of the substituent are the same as the substituents described for the G

The alkyl group and the aryl group of the R' are the same as the examples of the substituent of the G.

More preferable examples of divalent group may include an alkylene group having 10 or less carbon atoms, an alkenylene group having 10 or less carbon atoms, an alkynylene group having 10 or less carbon atoms, an arylene group having 6 to 10 carbon atoms, a divalent heterocyclic group, -S-, -SO-, -SO₂-, and a combination thereof (e.g., -SCH₂CH₂S- or -SCH₂CH₂CH₂S-) is more preferable.

The total number of carbon atoms of the divalent linking group is preferably from 0 to 50, more preferably from 0 to 30, and most preferably from 0 to 10.

When Q, R, X, Y, and Z each represent a trivalent group, the trivalent group is preferably a trivalent hydrocarbon group, a trivalent heterocyclic group, >N-, or a combination thereof and a divalent group (e.g., >NCH₂CH₂NH-, >NCONH-, and the like).

The total number of carbon atoms of the trivalent linking group is preferably from 0 to 50, more preferably from 0 to 30, and most preferably from 0 to 10.

In Formula (Y-I), preferable examples of n is 1 or 2, and 2 is particularly preferable.

In Formula (Y-I), preferable examples of a substituent of X is an electron attracting group. In particular, an electron attracting group with a Hammett's substituent constant δp value of 0.20 or more is preferable, and an electron attracting group with a δp value of 0.30 or more is more preferable. It is an electron attracting group of 1.0 or less as the upper limit.

Specific examples of X which is an electron attracting group with a δp value of 0.20 or more include an acyl group, an acyloxy group, a carbamoyl group, an alkyloxycarbonyl group, an aryloxycarbonyl group, a cyano group, a nitro group, a dialkylphosphono group, a diarylphosphono group, a diarylphosphinyl group, an alkylsulfinyl group, an arylsulfinyl group, an alkylsulfonyl group, an arylsulfonyl group, a sulfonyloxy group, an acylthio group, a sulfamoyl group, a thiocyanate group, a thiocarbonyl group, an alkyl halide group, an alkoxy halide group, an aryloxy halide group, an alkylamino halide group, an alkylthio halide group, an aryl group substituted with another electron attracting group with a δp value of 0.20 or more, a heterocyclic group, a halogen atom, an azo group, and a selenocyanate group.

Preferable examples of X may include an acyl group having 2 to 12 carbon atoms, an acyloxy group having 2 to 12 carbon atoms, a carbamoyl group having 1 to 12 carbon atoms, an alkyloxycarbonyl group having 2 to 12 carbon atoms, an aryloxycarbonyl group having 7 to 18 carbon atoms, a cyano group, a nitro group, an alkylsulfinyl group having 1 to 12 carbon atoms, an arylsulfinyl group having 6 to 18 carbon atoms, an alkylsulfonyl group having 1 to 12 carbon atoms, an arylsulfonyl group having 6 to 18 carbon atoms, a sulfamoyl group having 0 to 12 carbon atoms, an alkyl halide group having 1 to 12 carbon atoms, an alkyloxy halide group having 1 to 12 carbon atoms, an alkyl thio halide group having 1 to 12 carbon atoms, an aryloxy halide group having 7 to 18 carbon atoms, an aryl group having 7 to 18 carbon atoms, substituted with two or more electron attracting groups with a δp of 0.20 or more, and a 5- to 8-membered heterocyclic group having 1 to 18 carbon atomsincluding a nitrogen atom, an oxygen atom, or a sulfur atom.

More preferable examples include a cyano group, an alkylsulfonyl group having 1 to 12 carbon atoms, an arylsulfonyl group having 6 to 18 carbon atoms, and a sulfamoyl group having 0 to 12 carbon atoms.

Particularly preferable examples of X include a cyano group, an alkylsulfonyl group having 1 to 12 carbon atoms, and a sulfamoyl group having 0 to 12 carbon atoms. Most preferable examples of X include a cyano group and an alkylsulfonyl group having 1 to 12 carbon atoms.

In Formula (Y-I), preferable examples of the substituent ofZ include a hydrogen atom, a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, and a substituted or unsubstituted heterocyclic group.

Detailed examples of the substituent represented by Z are the same as the corresponding substituent examples described for the examples of the heterocyclic group represented by the G, and preferable examples thereof are also the same.

A particularly preferable substituents represented by Z include a substituted aryl group and a substituted heterocyclic group. Among the above, a substituted aryl group is particularly preferable.

In Formula (Y-I), preferable examples of the substituent of Q include a hydrogen atom, a substituted or unsubstituted alkyl group, a substituted or unsubstituted acyl group, a substituted or unsubstituted alkylsulfonyl group, and a substituted or unsubstituted arylsulfonyl group. Particularly preferable examples include a hydrogen atom, a substituted or unsubstituted alkyl group, and a substituted or unsubstituted acyl group. Among the above, a hydrogen atom is particularly preferable.

In Formula (Y-I), R is preferably a substituted or unsubstituted alkyl group having a total carbon number of 1 to 12, a substituted or unsubstituted aryl group having a total carbon number of 6 to 18, or a substituted or unsubstituted heterocyclic group having a total carbon number of 4 to 12. Among the above, a straight or branched chain alkyl group having a total carbon number of 1 to 8 is preferable, a secondary or tertiary alkyl group is particularly preferable, and a t-butyl group is most preferable.

In Formula (Y-I), Y is preferably a hydrogen atom, a substituted or unsubstituted alkyl group having a total carbon number of 1 to 12, a substituted or unsubstituted aryl group having a total carbon number of 6 to 18, or a substituted or unsubstituted heterocyclic group having a total carbon number of 4 to 12. Among the above, a hydrogen atom or a straight and/or branched chain alkyl group having a total carbon number of 1 to 8 are/is preferable, a hydrogen atom or an alkyl group having 1 to 8 carbon atoms is particularly preferable, and a hydrogen atom is most preferable.

As the combination of the preferable substituents of the dye represented by Formula (Y-I) of the invention, a compound in which at least one of various substituents is the above mentioned preferable group is preferable, a compound in which a larger number of various substituents are the above mentioned preferable groups is more preferable, and a compound in which all the substituents are the above mentioned preferable substituents is most preferable.

The particularly preferable combinations for the dye represented by Formula (Y-I) of the invention include the following (A) to (G):

(A) G is preferably a 5- to 8-membered nitrogen-containing heterocyclic ring. In particular, an S-triazine ring, a pyrimidine ring, a pyridazine ring, a pyrazine ring, a pyridine ring, an imidazole ring, a pyrazole ring, or a pyrrole ring is preferable. Among the above, an S-triazine ring, a pyrimidine ring, a pyridazine ring, or a pyrazine ring is preferable, with an S-triazine ring is most preferable.

(B) R is preferably a substituted or unsubstituted alkyl group having a total carbon number of 1 to 12, a substituted or unsubstituted aryl group having a total carbon number of 6 to 18, or a substituted or unsubstituted heterocyclic group having a total carbon number of 4 to 12. Among the above, a straight or branched chain alkyl group having a total carbon number of 1 to 8 is preferable, a secondary or tertiary alkyl group is particularly preferable, and a t-butyl group is most preferable.

(C) As X, a cyano group, an alkylsulfonyl group having 1 to 12 carbon atoms, an arylsulfonyl group having 6 to 18 carbon atoms, or a sulfamoyl group having 0 to 12 carbon atoms is particularly preferably. Among the above, a cyano group or an alkylsulfonyl group having 1 to 12 carbon atoms is preferable, and a cyano group is most preferable.

(D) Y is preferably a hydrogen atom, a substituted or unsubstituted alkyl group having a total carbon number of 1 to 12, a substituted or unsubstituted aryl group having a total carbon number of 6 to 18, or a substituted or unsubstituted heterocyclic group having a total carbon number of 4 to 12. Among the above, a hydrogen atom or a straight or branched chain alkyl group having a total carbon number of 1 to 8 is preferable, a hydrogen atom or an alkyl group having 1 to 8 carbon atoms is particularly preferable, and a hydrogen atom is most preferable.

(E) Z is preferably a hydrogen atom, a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group, further, a substituted aryl group or a substituted heterocyclic group is more preferable substituents. Among the above, a substituted aryl group is particularly preferable.

(F) Q is preferably a hydrogen atom, a substituted or unsubstituted alkyl group, a substituted or unsubstituted acyl group, a substituted or unsubstituted alkylsulfonyl group, or a substituted or unsubstituted arylsulfonyl group, further, a hydrogen atom, a substituted or unsubstituted alkyl group, or a substituted or unsubstituted acyl group is more preferable. Among the above, a hydrogen atom is particularly preferable.

(G) n represents an integer of 1 to 3, preferably 1 or 2, and 2 is most preferable.

Among the azo dyes represented by Formula (Y-I), the dyes represented by Formulae (Y-1) to (Y-5) are preferable:

Hereinafter, Formula (Y-1) will be described in detail.

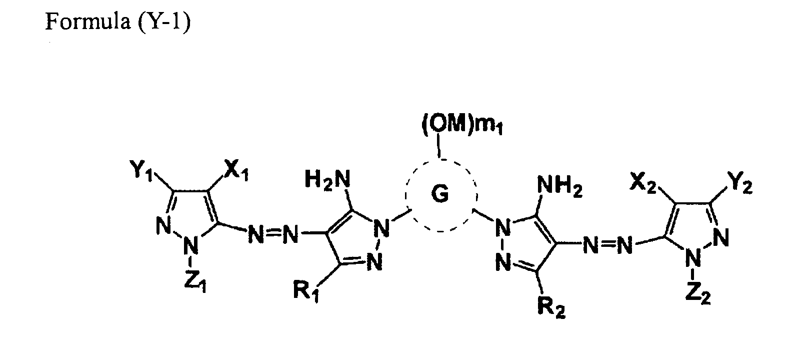

R₁, R₂, X₁, X₂, Y₁, Y₂, Z₁, and Z₂ each represent a monovalent group.
The monovalent group represents a hydrogen atom or a monovalent substituent. Examples of the monovalent substituent are the same as the examples of the monovalent substituents of R, X, Y, and Z in Formula (I), and preferable examples thereof are also the same. m₁ represents an integer of 0 to 3.

Hereinafter, the R₁, R₂, X₁, X₂, Y₁, Y₂, Z₁, and Z₂ will be described in more detail.

Examples of the substituents of R₁ and R₂ are each independently the same as the examples of R in Formula (Y-I), and preferable examples thereof are also the same.

Examples of the substituents of Y₁ and Y₂ are each independently the same as the examples ofY in Formula (Y-I), and preferable examples thereof are also the same.

Examples of the substituents of Z₁ and Z₂ are each independently the same as the examples of Z in Formula (Y-I), and preferable examples thereof are also the same.

Hereinafter, the G and m₁ will be described in more detail.

G represents an atomic group forming a 5- to 8-membered nitrogen-containing heterocyclic ring.

Preferable examples of the 5- to 8-membered nitrogen-containing heterocyclic ring represented by G include an S-triazine ring, a pyrimidine ring, a pyridazine ring, a pyrazine ring, a pyridine ring, an imidazole ring, a pyrazole ring, and a pyrrole ring. Among the above, an S-triazine ring, a pyrimidine ring, a pyridazine ring, or a pyrazine ring is more preferable, further an S-triazine ring is most preferable.

m₁ is an integer of 0 to 3. When a -OM group may be substituted on a structure of a preferable example of the 5- to 8-membered nitrogen-containing heterocyclic ring represented by G, m₁ is preferably from 0 to 2. Among the above, m₁ is preferably 0 or 1, and particularly m₁ = 1 is most preferable.

Hereinafter, the M will be described in more detail.

M represents a hydrogen atom or cation.

The cation represented by M includes an alkali metal ion, ammonium, and quaternary ammonium cation, and preferably Li, Na, K, NH₄ or N_{R}4. R includes an alkyl group and an aryl group, and the examples thereof are the same as the examples of the alkyl group and the aryl group represented by R and Y. Among the above, preferable examples of M include Li, Na, K, and NH₄, further, Li, Na, or K is particularly preferable.

As the combination of the preferable substituents of the dye represented by Formula (Y-1) of the invention, a compound in which at least one of various substituents is the above mentioned preferable group is preferable, a compound in which a larger number of various substituents are the above mentioned preferable groups is more preferable, and a compound in which all the substituents are the above mentioned preferable groups is most preferable.

The particularly preferable combinations for the dye represented by Formula (Y-1) of the invention include the following (A) to (G):

(A) R₁ and R₂ may be the same or different from each other, and preferable examples thereof include a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from 4 to 12. Among the above, a straight or branched chain alkyl group having a total number of carbon atoms of from 1 to 8 is preferable, a secondary or tertiary alkyl group is particularly preferable, and a t-butyl group is most preferable.

(B) X₁ and X₂ may be the same or different from each other, and preferably X₁ and X₂ each independently represent an electron attracting group with a Hammett's substituent constant δp value of 0.20 or more. Further, an electron attracting group with a δp value of 0.30 or more is preferable. An electron attracting group with a δp value of 1.0 or less is the upper limit. Among the above, a cyano group, an alkylsulfonyl group having 1 to 12 carbon atoms, an arylsulfonyl group having 6 to 18 carbon atoms, or a sulfamoyl group having 0 to 12 carbon atoms is preferable, and a cyano group or an alkylsulfonyl group having 1 to 12 carbon atoms is most preferable.

(C) Y₁ and Y₂ may be the same or different from each other, and preferable examples thereof include a hydrogen atom, a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from 4 to 12. Further, a hydrogen atom or a substituted or unsubstituted alkyl group is more preferable. Among the above, a hydrogen atom is most preferable.

(D) Z₁ and Z₂ may be the same or different from each other, and preferable examples thereof include a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from 4 to 12. Further, a substituted or unsubstituted aryl group or a substituted or unsubstituted heterocyclic group is more preferable. In particular, a substituted aryl group is most preferable.

(E) G represents an atomic group forming a 5- to 8-membered nitrogen-containing heterocyclic ring. Preferable examples of the 5- to 8-membered nitrogen-containing heterocyclic ring include an S-triazine ring, a pyrimidine ring, a pyridazine ring, a pyrazine ring, a pyridine ring, an imidazole ring, a pyrazole ring, and a pyrrole ring. Among the above, an S-triazine ring, a pyrimidine ring, a pyridazine ring, or a pyrazine ring is more preferable, and an S-triazine ring is most preferable.

(F) m₁ is an integer from 0 to 3. When a -OM group may be substituted to a structure of a preferable example of the 5- to 8-membered nitrogen-containing heterocyclic ring represented by G, m₁ is preferably from 0 to 2. Among the above, m₁ is preferably 0 or 1, and particularly m₁ = 1 is most preferable.

(G) M is preferably a hydrogen atom or a cation, particularly preferably a hydrogen atom, an alkali metal ion, or an ammonium or quaternary ammonium cation, and more preferably Li, Na, K, or NH₄.

Hereinafter, Formula (Y-2) will be described in detail.

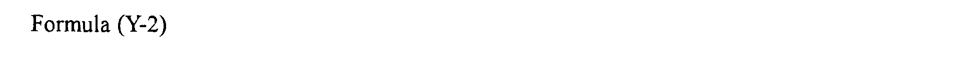

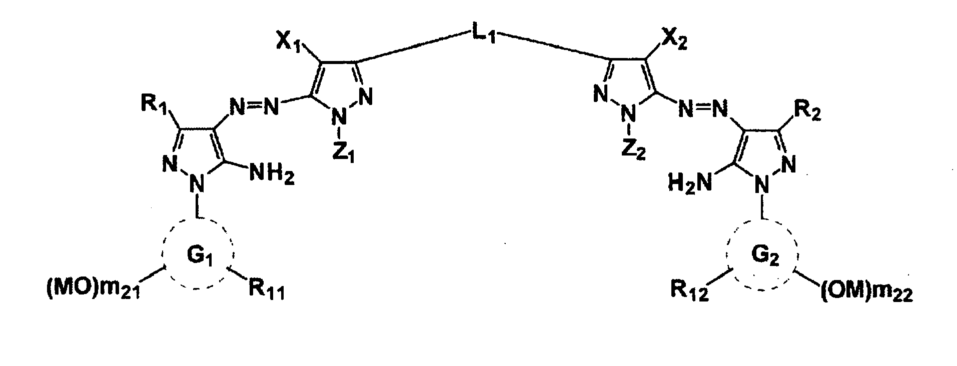

R₁, R₂, R₁₁, R₁₂, X₁, X₂, Z₁, and Z₂ each represent a monovalent group.

The monovalent group represents a hydrogen atom or a monovalent substituent.

L₁ represents a divalent linking group.

G₁ and G₂ each independently represent an atomic group forming a 5- to 8-membered nitrogen-containing heterocyclic ring.

m₂₁ and m₂₂ each independently represent an integer from 0 to 3. When a -OM group may be substituted to a structure of a preferable example of the 5- to 8-membered nitrogen-containing heterocyclic ring represented by G₁ or G₂, m₂₁ and m₂₂ each independently is preferably from 0 to 2 and more preferably 0 or 1. In particular, it is most preferable that m₂₁ is 1 and m₂₂ is also 1.

M represents a hydrogen atom or cation.

Hereinafter, Formula (Y-2) mentioned above will be described in more detail.

In Formula (Y-2), preferable examples of the substituents of R₁ and R₂ are the same as the examples of the substituents of R₁, R₂, Y₁, and Y₂ described for Formula (Y-1), and preferable examples thereof are also the same.

In Formula (Y-2), preferable examples of the substituents of X₁ and X₂ are the same as the examples of the substituents of X₁ and X₂ described for Formula (Y-1), and preferable examples thereof are also the same.

In Formula (Y-2), preferable examples of the substituents of Z₁ and Z₂ are the same as the examples of the substituents of Z₁ and Z₂ described for Formula (Y-1), and preferable examples thereof are also the same.

In Formula (Y-2), preferable examples of G₁ and G₂ are the same as the examples of G described for Formula (Y-1), and preferable examples thereof are also the same.

In Formula (Y-2), m₂₁ and m₂₂ each independently represent an integer from 0 to 3. When a -OM group may be substituted to a structure of a preferable example of the 5- to 8-membered nitrogen-containing heterocyclic ring represented by G₁ or G₂, m₂₁ and m₂₂ each independently is preferably from 0 to 2 and more preferably 0 or 1. In particular, it is most preferable that m₂₁ is 1 and m₂₂ is also 1.

In Formula (Y-2), preferable examples of M are the same as the examples of M described for Formula (Y-1), and preferable examples thereof are also the same.

In Formula (Y-2), preferable examples of the substituents of R₁₁ and R₁₂ are the same as the examples of the substituents of R₁, R₂, Y₁, and Y₂ described for Formula (Y-1). Preferable examples thereof include a -OM group (wherein M is a hydrogen atom or cation), a substituted or unsubstituted amino group; an alkylamino group having 1 to 12 carbon atoms, an arylamino group having 6 to 18 carbon atoms, a substituted or unsubstituted alkylthio group having 1 to 12 carbon atoms, and a substituted or unsubstituted arylthio group having 6 to 18 carbon atoms.

In Formula (Y-2), the divalent linking group represented by L₁ is preferably an alkylene group (e.g., methylene, ethylene, propylene, butylene, or pentylene), an alkenylene group (e.g., ethenylene or propenylene), an alkynylene group (e.g., ethynylene or propynylene), an arylene group (e.g., phenylene or naphthylene), a divalent heterocyclic group (e.g., a 6-chloro-1,3,5-triazine-2,4-diyl group, a pyrimidine-2,4-diyl group, a pyrimidine-4,6-diyl group, a quinoxaline-2,3-diyl group, or a pyridazine-3,6-diyl), -O-, -CO-, -NR- (wherein R is a hydrogen atom, an alkyl group, or an aryl group), -S-, -SO₂-, -SO-, or a combination thereof (e.g., -NHCH₂CH₂NH-, -NHCONH-, and the like).

An alkylene group, an alkenylene group, an alkynylene group, an arylene group, a divalent heterocyclic group, or an alkyl group or an aryl group of R may each have a substituent.

Examples of the substituent are the same as the substituents of R₁, R₂, Y₁, and Y₂ in Formula (Y-1).

The alkyl group and the aryl group of the R are the same as the examples of the substituents of R₁, R₂, Y₁, and Y₂ in Formula (Y-1).

More preferable examples of the divalent linking group include an alkylene group having 10 or less carbon atoms, an alkenylene group having 10 or less carbon atoms, an alkynylene group having 10 or less carbon atoms, an arylene group having 6 to 10 carbon atoms, -S-, -SO-, -SO₂-, or a combination thereof (e.g., -SCH₂CH₂S-, -SCH₂CH₂CH₂S-, and the like).

The total number of carbon atoms of the divalent linking group is preferably 0 to 50, more preferably 0 to 30, and most preferably 0 to 10.

As the combination of the preferable substituents of the dye represented by Formula (Y-2) of the invention, a compound in which at least one of various substituents is the above mentioned preferable group is preferable, a compound in which a larger number of various substituents are the above mentioned preferable groups is more preferable, and a compound in which all the substituents are the above mentioned preferable substituents is most preferable.

The particularly preferable combinations for the dye represented by Formula (Y-2) of the invention include the following (A) to (H):

(A) R₁ and R₂ may be the same or different from each other, and preferable examples thereof include a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from4 to 12. Among the above, a straight or branched chain alkyl group having a total number of carbon atoms of from 1 to 8 is more preferable, a secondary or tertiary alkyl group is particularly preferable, and a t-butyl group is most preferable.

(B) X₁ and X₂ may be the same or different from each other and preferably X₁ and X₂ each independently represent an electron attracting group with a Hammett's substituent constant δp value of 0.20 or more is preferable. An electron attracting group with a δp value of 0.30 or more is more preferable. An electron attracting group with a δp value of 1.0 or less is the upper limit. Among the above, a cyano group, an alkylsulfonyl group having 1 to 12 carbon atoms, an arylsulfonyl group having 6 to 18 carbon atoms, or a sulfamoyl group having 0 to 12 carbon atoms is preferable, and a cyano group or an alkylsulfonyl group having 1 to 12 carbon atoms is most preferable.

(C) Z₁ and Z₂ may be the same or different from each other, and preferable examples thereof include a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from 4 to 12. A substituted or unsubstituted aryl group or a substituted or unsubstituted heterocyclic group is more preferable, and particularly, a substituted aryl group is most preferable.

(D) G₁ and G₂ may be the same or different from each other, and represents an atomic group forming a 5- to 8-membered nitrogen-containing heterocyclic ring. Preferable examples of the 5- to 8-membered nitrogen-containing heterocyclic ring include an S-triazine ring, a pyrimidine ring, a pyridazine ring, a pyrazine ring, a pyridine ring, an imidazole ring, a pyrazole ring, and a pyrrole ring. Among the above, an S-triazine ring, a pyrimidine ring, a pyridazine ring, or a pyrazine ring is more preferable, and an S-triazine ring is most preferable.

(E) m₂₁ and m₂₂ each independently represent an integer from 0 to 3. When a -OM group may be substituted on a structure of a preferable example of the 5- to 8-membered nitrogen-containing heterocyclic ring represented by G₁ or G₂, m₂₁ and m₂₂ each independently is preferably from 0 to 2 and more preferably 0 or 1. In particular, it is most preferable that m₂₁ is 1 and m₂₂ is also 1.

(F) M is preferably a hydrogen atom or a cation, particularly preferably a hydrogen atom, an alkali metal ion, or an ammonium or quaternary ammonium cation, and more preferably Li, Na, K, or NH₄.

(G) R₁₁ and R₁₂ may be the same or different from each other, and preferable examples thereof include a -OM group (wherein M is a hydrogen atom or cation), a substituted or unsubstituted amino group (an alkylamino group having 1 to 12 carbon atoms, an arylamino group having 6 to 18 carbon atoms, etc.), a substituted or unsubstituted alkylthio group having 1 to 12 carbon atoms, or a substituted or unsubstituted arylthio group having 6 to 18 carbon atoms. Among the above, an unsubstituted amino group, an alkylamino group having 1 to 12 carbon atoms, an arylamino group having 6 to 18 carbon atoms, a substituted or unsubstituted alkylthio group having 1 to 12 carbon atoms, or a substituted or unsubstituted arylthio group having 6 to 18 carbon atoms is preferable. In particular, an unsubstituted amino group, a dialkylamino group having 1 to 12 carbon atoms, an arylamino group having 6 to 18 carbon atoms, or a substituted or unsubstituted alkylthio group having 1 to 12 carbon atoms is more preferable.

(H) L₁ is preferably an alkylene group having 10 or less carbon atoms, an alkenylene group having 10 or less carbon atoms, an alkynylene group having 10 or less carbon atoms, an arylene group having 6 to 10 carbon atoms, -S-, -SO-, -SO₂-, or a combination thereof (e.g., -SCH₂CH₂S- or -SCH₂CH₂CH₂S-), more preferably an alkylene group having 10 or less carbon atoms, an arylene group having 6 to 10 carbon atoms, -S-, -SO-, -SO₂-, or a combination thereof (e.g., -SCH₂CH₂S- or -SCH₂CH₂CH₂S-), and particularly preferably an alkylene group having 10 or less carbon atoms, -SCH₂CH₂S-, or -SCH₂CH₂CH₂S-.

Hereinafter, Formula (Y-3) will be described in detail.

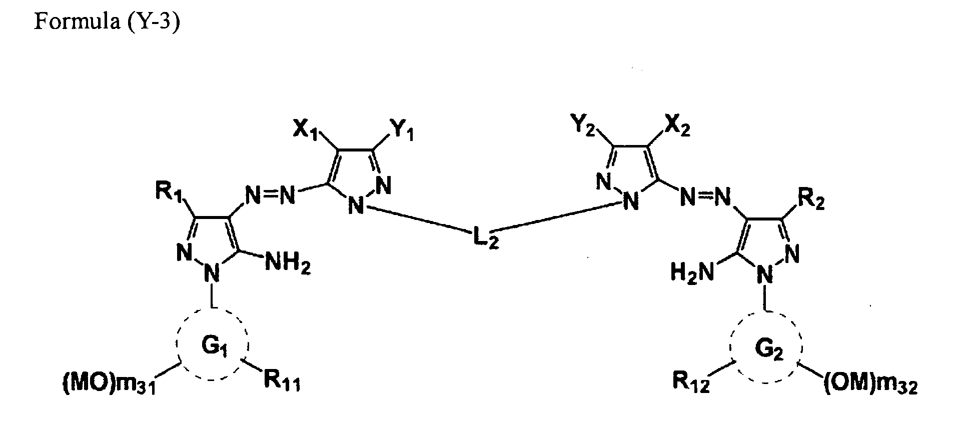

R₁, R₂, R₁₁, R₁₂, X₁, X₂, Y₁, and Y₂ each represent a monovalent group.

The monovalent group represents a hydrogen atom or a monovalent substituent.

L₂ represents a divalent linking group.

G₁ and G₂ each independently represent an atomic group forming a 5- to 8-membered nitrogen-containing heterocyclic ring.

m₃₁ and m₃₂ each independently represent an integer from 0 to 3.

M represents a hydrogen atom or a cation.

Hereinafter, Formula (Y-3) mentioned above will be described in more detail.

In Formula (Y-3), preferable examples of the substituents of R₁, R₂, Y₁, and Y₂ are the same as the examples of the substituents of R₁, R₂, Y₁, and Y₂ described for Formula (Y-1), and preferable examples thereof are also the same.

In Formula (Y-3), preferable examples of the substituents of X₁ and X₂ are the same as the examples of the substituents of X₁ and X₂ described for Formula (Y-1), and preferable examples thereof are also the same.

In Formula (Y-3), preferable examples of G₁ and G₂ are the same as the examples of G described for Formula (Y-1), and preferable examples thereof are also the same.

In Formula (Y-3), preferable examples of m₃₁ and m₃₂ are the same as the examples of m₃₁ and m₃₂ described for Formula (Y-2), and preferable examples thereof are also the same.

In Formula (Y-3), preferable examples of M are the same as the examples of M described for Formula (Y-1), and preferable examples thereof are also the same.

In Formula (Y-3), preferable examples of the substituents of R₁₁ and R₁₂ are the same as the examples of the substituents of R₁₁ and R₁₂ described for Formula (Y-2), and preferable examples thereof are also the same.

In Formula (Y-3), the divalent linking groups represented by L₂ are the same as the examples of L₁ described for Formula (Y-2), and the preferable examples thereof are also the same.

As the combination of the preferable substituents of the dye represented by Formula (Y-3) of the invention, a compound in which at least one of various substituents is the above mentioned preferable group is preferable, a compound in which a larger number of various substituents are the above mentioned preferable groups is more preferable, and a compound in which all the substituents are the above mentioned preferable substituents is most preferable.

The particularly preferable combinations for the dye represented by Formula (Y-3) of the invention include the following (A) to (H):

(A) R₁ and R₂ may be the same or different from each other. Preferable examples thereof include a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from 4 to 12. Among the above, a straight or branched chain alkyl group having a total number of carbon atoms of from 1 to 8 is preferable, a secondary or tertiary alkyl group is particularly preferable, and a t-butyl group is most preferable.

(B) X₁ and X₂ may be the same or different from each other. Preferably, X₁ and X₂ each independently represent an electron attracting group with a Hammett's substituent constant δp value of 0.20 or more. Further, an electron attracting group with a δp value of 0.30 or more is more preferable. An electron attracting group with a δp value of 1.0 or less is the upper limit. Among the above, a cyano group, an alkylsulfonyl group having 1 to 12 carbon atoms, an arylsulfonyl group having 6 to 18 carbon atoms, or a sulfamoyl group having 0 to 12 carbon atoms is preferable, and a cyano group or an alkylsulfonyl group having 1 to 12 carbon atoms is most preferable.

(C) Y₁ and Y₂ may be the same or different from each other. Preferable examples thereof include a hydrogen atom, a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from 4 to 12. A hydrogen atom or a substituted or unsubstituted alkyl group is more preferable. Among the above, a hydrogen atom is most preferable.

(D) G₁ and G₂ may be the same or different from each other, and represents an atomic group forming a 5- to 8-membered nitrogen-containing heterocyclic ring. Preferable examples of the 5- to 8-membered nitrogen-containing heterocyclic ring include an S-triazine ring, a pyrimidine ring, a pyridazine ring, a pyrazine ring, a pyridine ring, an imidazole ring, a pyrazole ring, and a pyrrole ring. Among the above, an S-triazine ring, a pyrimidine ring, a pyridazine ring, or a pyrazine ring is more preferable, and an S-triazine ring is most preferable.

(E) m₃₁ and m₃₂ each independently represent an integer from 0 to 3. When a -OM group may be substituted to a structure of a preferable example of the 5- to 8-membered nitrogen-containing heterocyclic ring represented by G₁ or G₂, m₃₁ and m₃₂ each independently is preferably from 0 to 2 and more preferably 0 or 1. In particular, it is most preferable that m₃₁ is 1 and m₃₂ is also 1.

(F) M is preferably a hydrogen atom or a cation, particularly preferably a hydrogen atom, an alkali metal ion, or an ammonium or quaternary ammonium cation, and more preferably Li, Na, K, or NH₄.

(G) R₁₁ and R₁₂ may be the same or different from each other. Preferable examples thereof include a -OM group (M represents a hydrogen atom or cation), a substituted or unsubstituted amino group (an alkylamino group having 1 to 12 carbon atoms, an arylamino group having 6 to 18 carbon atoms, etc.), a substituted or unsubstituted alkylthio group having 1 to 12 carbon atoms, or a substituted or unsubstituted arylthio group having 6 to 18 carbon atoms. Among the above, an unsubstituted amino group, an alkylamino group having 1 to 12 carbon atoms, an arylamino group having 6 to 18 carbon atoms, a substituted or unsubstituted alkylthio group having 1 to 12 carbon atoms, or a substituted or unsubstituted arylthio group having 6 to 18 carbon atoms is preferable. In particular, an unsubstituted amino group, a dialkylamino group having 1 to 12 carbon atoms, an arylamino group having 6 to 18 carbon atoms, or a substituted or unsubstituted alkylthio group having 1 to 12 carbon atoms is more preferable.

(H) L₂ is preferably an alkylene group having 10 or less carbon atoms, an alkenylene group having 10 or less carbon atoms, an alkynylene group having 10 or less carbon atoms, an arylene group having 6 to 10 carbon atoms, -S-, -SO-, -SO₂- or a combination thereof (e.g., -SCH₂CH₂S- or -SCH₂CH₂CH₂S-), more preferably an alkylene group having 10 or less carbon atoms, an arylene group having 6 to 10 carbon atoms, -S-, -SO-, -SO₂-, or a combination thereof (e.g., -SCH₂CH₂S- or -SCH₂CH₂CH₂S-), and particularly preferably an alkylene group having 10 or less carbon atoms, -SCH₂CH₂S-, or -SCH₂CH₂CH₂S-.

Hereinafter, Formula (Y-4) will be described in detail.

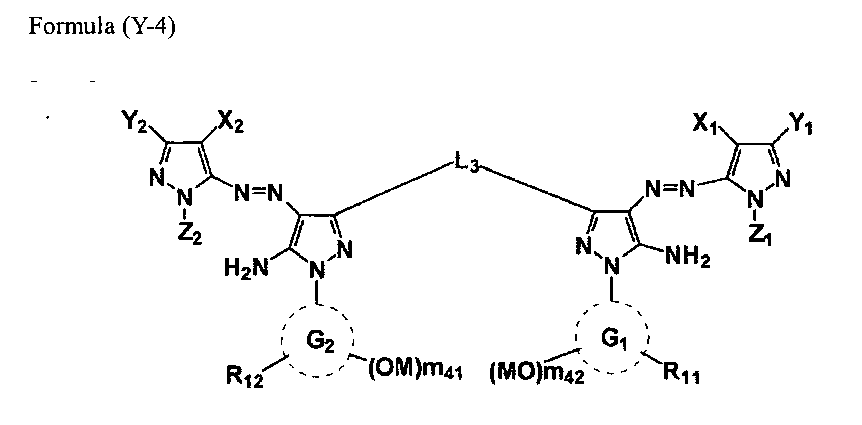

R₁₁, R₁₂, X₁, X₂, Y₁, and Y₂ represent a monovalent group.

The monovalent group represents a hydrogen atom or a monovalent substituent.

L₃ represents a divalent linking group.

G₁ and G₂ each independently represent an atomic group forming a 5- to 8-membered nitrogen-containing heterocyclic ring.

m₄₁ and m₄₂ each independently represent an integer from 0 to 3.

M represents a hydrogen atom or a cation.

Hereinafter, Formula (Y-4) mentioned above will be described in more detail.

In Formula (Y-4), preferable examples of the substituents of Y₁ and Y₂ are the same as the examples of the substituents of R₁, R₂, Y₁, and Y₂ described for Formula (Y-1), and preferable examples thereof are also the same.

In Formula (Y-4), preferable examples of the substituents of X₁ and X₂ are the same as the examples of the substituents of X₁ and X₂ described for Formula (Y-1), and preferable examples thereof are also the same.

In Formula (Y-4), preferable examples of G₁ and G₂ are the same as the examples of G described for Formula (Y-1), and preferable examples thereof are also the same.

In Formula (Y-4), preferable examples of m₄₁ and m₄₂ are the same as the examples of m₂₁ and m₂₂ described for Formula (Y-2), and preferable examples thereof are also the same.

In Formula (Y-4), preferable examples of M are the same as the examples of M described for Formula (Y-1), and preferable examples thereof are also the same.

In Formula (Y-4), preferable examples of the substituents of R₁₁ and R₁₂ are the same as the examples of the substituents of R₁₁ and R₁₂ described for Formula (Y-2), and preferable examples thereof are also the same.

In Formula (Y-4), the divalent linking groups represented by L₃ are the same as the examples of L₁ described for Formula (Y-2), and the preferable examples thereof are also the same.

As the combination of the preferable substituents of the dye represented by Formula (Y-4) of the invention, a compound in which at least one of various substituents is the above mentioned preferable group is preferable, a compound in which a larger number of various substituents are the above mentioned preferable groups is more preferable, and a compound in which all the substituents are the above mentioned preferable substituents is most preferable.

The particularly preferable combinations for the dye represented by Formula (Y-4) of the invention include the following (A) to (H):

(A) Y₁ and Y₂ may be the same or different from each other. Preferable examples thereof include a hydrogen atom, a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from 4 to 12. Further, a hydrogen atom or a substituted or unsubstituted alkyl group is preferable. Among the above, a hydrogen atom is most preferable.

(B) X₁ and X₂ may be the same or different from each other. Preferably, X₁ and X₂ each independently represent an electron attracting group with a Hammett's substituent constant δp value of 0.20 or more. An electron attracting group with a δp value of 0.30 or more is more preferable. An electron attracting group with a δp value of of 1.0 or less is the upper limit. Among the above, a cyano group, an alkylsulfonyl group having 1 to 12 carbon atoms, an arylsulfonyl group having 6 to 18 carbon atoms, or a sulfamoyl group having 0 to 12 carbon atoms is preferable, and a cyano group or an alkylsulfonyl group having 1 to 12 carbon atoms is most preferable.

(C) Z₁ and Z₂ may be the same or different from each other. Preferable examples thereof include a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from4 to 12. Further, a substituted or unsubstituted aryl group or a substituted or unsubstituted heterocyclic group is preferable, and particularly, a substituted aryl group is most preferable.

(D) G₁ and G₂ may be the same or different from each other, and represents an atomic group forming a 5- to 8-membered nitrogen-containing heterocyclic ring. Preferable examples of the 5- to 8-membered nitrogen-containing heterocyclic ring include an S-triazine ring, a pyrimidine ring, a pyridazine ring, a pyrazine ring, a pyridine ring, an imidazole ring, a pyrazole ring, and a pyrrole ring. Among the above, an S-triazine ring, a pyrimidine ring, a pyridazine ring, or a pyrazine ring is more preferable, and an S-triazine ring is most preferable.

(E) m₄₁ and m₄₂ each independently represent an integer from 0 to 3. When a -OM group may be substituted on a structure of a preferable example of a 5- to 8-membered nitrogen-containing heterocyclic ring represented by G₁ or G₂, m₄₁ and m₄₂ each independently is preferably from 0 to 2 and more preferably 0 or 1. In particular, it is most preferable that m₄₁ is 1 and m₄₂ is also 1.

(F) M is preferably a hydrogen atom or a cation, particularly preferably a hydrogen atom, an alkali metal ion, or an ammonium or quaternary ammonium cation, and more preferably Li, Na, K, or NH₄.

(G) R₁₁ and R₁₂ may be the same or different from each other. Preferable examples thereof include a -OM group (M represents a hydrogen atom or cation), a substituted or unsubstituted amino group (an alkylamino group having 1 to 12 carbon atoms, an arylamino group having 6 to 18 carbon atoms, etc.), a substituted or unsubstituted alkylthio group having 1 to 12 carbon atoms, and a substituted or unsubstituted arylthio group having 6 to 18 carbon atoms. Among the above, an unsubstituted amino group, an alkylamino group having 1 to 12 carbon atoms, an arylamino group having 6 to 18 carbon atoms, a substituted or unsubstituted alkylthio group having 1 to 12 carbon atoms, or a substituted or unsubstituted arylthio group having 6 to 18 carbon atoms is preferable. In particular, an unsubstituted amino group, a dialkylamino group having 1 to 12 carbon atoms, an arylamino group having 6 to 18 carbon atoms, or a substituted or unsubstituted alkylthio group having 1 to 12 carbon atoms is more preferable.

(H) L₃ is preferably an alkylene group having 10 or less carbon atoms, an alkenylene group having 10 or less carbon atoms, an alkynylene group having 10 or less carbon atoms, an arylene group having 6 to 10 carbon atoms, -S-, -SO-, -SO₂- or a combination thereof (e.g., -SCH₂CH₂S- or -SCH₂CH₂CH₂S-), more preferably an alkylene group having 10 or less carbon atoms, an arylene group having 6 to 10 carbon atoms, -S-, -SO-, -SO₂-, or a combination thereof (e.g., -SCH₂CH₂S- or -SCH₂CH₂CH₂S-), and particularly preferably an alkylene group having 10 or less carbon atoms, -SCH₂CH₂S-, or -SCH₂CH₂CH₂S-.

Hereinafter, Formula (Y-5) will be described in detail.

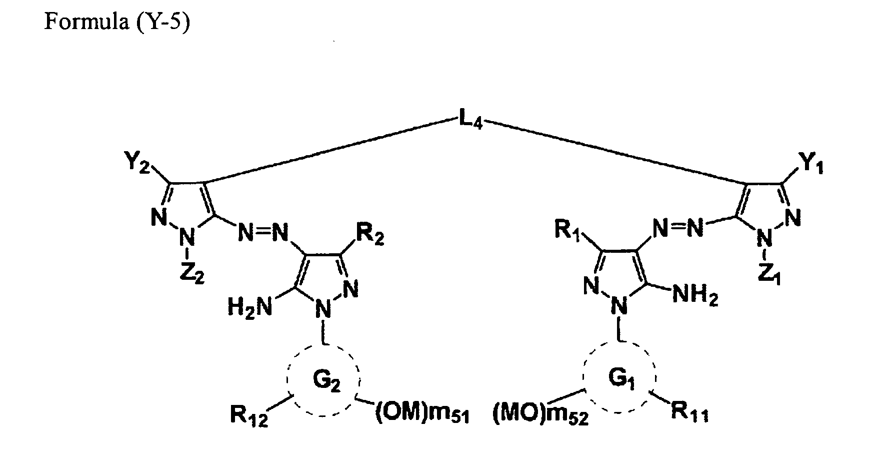

R₁, R₂, R₁₁, R₁₂, Y₁, Y₂, Z₁, and Z₂ represent a monovalent group.

The monovalent group represents a hydrogen atom or a monovalent substituent.

L₄ represents a divalent linking group.

G₁ and G₂ each independently represent an atomic group forming a 5- to 8-membered nitrogen-containing heterocyclic ring.

m₅₁ and m₅₂ each independently represent an integer from 0 to 3.

M represents a hydrogen atom or a cation.

Hereinafter, Formula (Y-5) mentioned above will be described in more detail.

In Formula (Y-5), preferable examples of the substituents of R₁, R₂, Y₁, and Y₂ are the same as the examples of the substituents of R₁, R₂, Y₁, and Y₂ described for Formula (Y-1), and preferable examples thereof are also the same.

In Formula (Y-5), preferable examples of the substituents of Z₁ and Z₂ are the same as the examples of the substituents of Z₁ and Z₂ described for Formula (Y-1), and preferable examples thereof are also the same.

In Formula (Y-5), preferable examples of G₁ and G₂ are the same as the examples of G described for Formula (Y-1), and preferable examples thereof are also the same.

In Formula (Y-5), preferable examples of m₅₁ and m₅₂ are the same as the examples of m₂₁ and m₂₂ described for Formula (Y-1), and preferable examples thereof are also the same.

In Formula (Y-5), preferable examples ofM are the same as the examples of M described for Formula (Y-2), and preferable examples thereof are also the same.

In Formula (Y-5), preferable examples of the substituents of R₁₁ and R₁₂ are the same as the examples of the substituents of R₁₁ and R₁₂ described for Formula (Y-2), and preferable examples thereof are also the same.

In Formula (Y-5), the divalent linking group represented by L₄ is the same as the examples of L₁ described for Formula (Y-2), and the preferable examples thereof are also the same.

As the combination of the preferable substituents of the dye represented by Formula (Y-5) of the invention, a compound in which at least one of various substituents is the above mentioned preferable group is preferable, a compound in which a larger number of various substituents are the above mentioned preferable groups is more preferable, and a compound in which all the substituents are the above mentioned preferable substituents is most preferable.

The particularly preferable combinations for the dye represented by Formula (Y-5) of the invention include the following (A) to (H):

(A) R₁ and R₂ may be the same or different from each other. Preferable examples thereof include a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from 4 to 12. Among the above, a straight or branched chain alkyl group having a total number of carbon atoms of from 1 to 8 is preferable, a secondary or tertiary alkyl group is particularly preferable, and a t-butyl group is most preferable.

(B) Y₁ and Y₂ may be the same or different from each other. Preferable examples thereof include a hydrogen atom, a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from 4 to 12. A hydrogen atom or a substituted or unsubstituted alkyl group is more preferable. Among the above, a hydrogen atom is most preferable.

(C) Z₁ and Z₂ may be the same or different from each other. A substituted or unsubstituted alkyl group having a total number of carbon atoms of from 1 to 12, a substituted or unsubstituted aryl group having a total number of carbon atoms of from 6 to 18, or a substituted or unsubstituted heterocyclic group having a total number of carbon atoms of from 4 to 12 is preferable. A substituted or unsubstituted aryl group or a substituted or unsubstituted heterocyclic group is more preferable. In particular, a substituted aryl group is most preferable.

(D) G₁ and G₂ may be the same or different, and represents an atomic group forming a 5- to 8-membered nitrogen-containing heterocyclic ring. Preferable examples of the 5- to 8-membered nitrogen-containing heterocyclic ring include an S-triazine ring, a pyrimidine ring, a pyridazine ring, a pyrazine ring, a pyridine ring, an imidazole ring, a pyrazole ring, and a pyrrole ring. Among the above, an S-triazine ring, a pyrimidine ring, a pyridazine ring, or a pyrazine ring is more preferable, and an S-triazine ring is most preferable.

(E) m₄₁ and m₄₂ each independently represent an integer of 0 to 3. When a -OM group may be substituted on a structure of a preferable example of the 5- to 8-membered nitrogen-containing heterocyclic ring represented by G₁ or G₂, m₄₁ and m₄₂ each independently is preferably from 0 to 2 and more preferably 0 or 1. In particular, it is most preferable that m₄₁ is 1 and m₄₂ is also 1.

(F) M is preferably a hydrogen atom or a cation, particularly preferably a hydrogen atom, an alkali metal ion, or an ammonium or quaternary ammonium cation, and more preferably Li, Na, K, or NH₄.

(G) R₁₁ and R₁₂ may be the same or different from each other. Preferable examples thereof include a -OM group (M represents a hydrogen atom or cation), a substituted or unsubstituted amino group; an alkylamino group having 1 to 12 carbon atoms, an arylamino group having 6 to 18 carbon atoms, a substituted or unsubstituted alkylthio group having 1 to 12 carbon atoms, or a substituted or unsubstituted arylthio group having 6 to 18 carbon atoms. Among the above, an unsubstituted amino group, an alkylamino group having 1 to 12 carbon atoms, an arylamino group having 6 to 18 carbon atoms, a substituted or unsubstituted alkylthio group having 1 to 12 carbon atoms, or a substituted or unsubstituted arylthio group having 6 to 18 carbon atoms is preferable. In particular, an unsubstituted amino group, a dialkylamino group having 1 to 12 carbon atoms, an arylamino group having 6 to 18 carbon atoms, or a substituted or unsubstituted alkylthio group having 1 to 12 carbon atoms is more preferable.

(H) L₄ is a divalent linking group, and preferably an electron attracting group with a Hammett's substituent constant δp value of 0.20 or more, and more preferably an electron attracting group with a δp value of 0.30 or more. L₄ is an electron attracting group with a δp value of 1.0 or less as the upper limit. Among the above, an alkylsulfonyl group having 1 to 12 carbon atoms: {-SO₂-CH₂)n-O₂S-; n = integer of 1 to 10} or an arylsulfonyl group having 6 to 18 carbon atoms: {-SO₂-Ar-O₂S-; preferably Ar is a substituted or unsubstituted aryl group) and most preferably, an alkylsulfonyl group having 1 to 12 carbon atoms: {-SO₂-(CH₂)n-O₂S-;n = integer of 1 to 5}.

The azo containing heterocyclic ring constituted by G, G₁ and G₂ represented by formulae (Y-1), (Y-2),(Y-3),(Y-4) and (Y-5), is preferably a s-triazine ring in view of preservation stability of dye in the ink.

Among the azo dyes represented by Formula (Y-1), the dye represented by Formula (Y-6) is preferable.

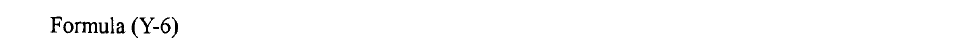

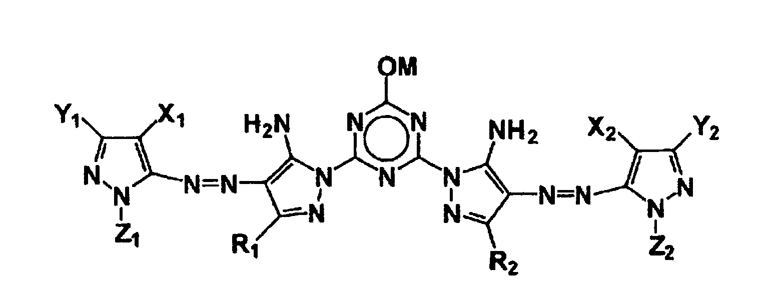

Hereinafter, Formula (Y-6) will be described in detail.

R₁, R₂, Y₁, and Y₂ each represent a monovalent group, X₁ and X₂ each independently represent an electron attracting group with a Hammett's substituent constant δp value of 0.20 or more. Z₁ and Z₂ each independently represent a hydrogen atom, a substituted or unsubstituted alkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group. M represents a hydrogen atom or cation.

Hereinafter, R₁, R₂, X₁, X₂, Y₁, Y₂, Z₁, Z₂, and M will be described in detail.

Examples of the substituents of R_{1,} R₂, Y₁, and Y₂ are the same as the examples of the substituents of R₁, R₂, Y₁, and Y₂ described for Formula (Y-1), and preferable examples thereof are also the same.

Examples of the substituents of X₁ and X₂ are the same as the examples of the substituents of X₁ and X₂ described for Formula (Y-1), and preferable examples thereof are also the same.

Examples of the substituents of Z₁ and Z₂ are the same as the examples of the substituents of Z₁ and Z₂ described for Formula (Y-1), and preferable examples thereof are also the same.

Examples ofM are the same as the examples of M described for Formula (Y-1), and preferable examples thereof are also the same.

As the combination of the preferable substituents of the dye represented by Formula (Y-6) of the invention, a compound in which at least one of various substituents is the above mentioned preferable group is preferable, a compound in which a larger number of various substituents are the above mentioned preferable groups is more preferable, and a compound in which all the substituents are the above mentioned preferable substituents is most preferable.

The particularly preferable combinations for the dye represented by Formula (Y-6) of the invention include the following (A) to (E):

(A) R₁ and R₂ may be the same or different from each other. Preferable examples thereof include a substituted or unsubstituted alkyl group having a total number of carbon atoms of from 1 to 12, a substituted or unsubstituted aryl group having a total carbon number of 6 to 18, and a substituted or unsubstituted heterocyclic group having a total number of carbon atoms of from 4 to 12. Among the above, a straight or branched chain alkyl group having a total number of carbon atoms of from 1 to 8 is preferable, a secondary or tertiary alkyl group is particularly preferable, and a t-butyl group is most preferable.

(B) X₁ and X₂ may be the same or different from each other. Preferably, X₁ and X₂ each independently represent an electron attracting group with a Hammett's substituent constant δp value of 0.20 or more is preferable. An electron attracting group with a δp value of 0.30 or more is more preferable. An electron attracting group with a δp value of 1.0 or less is the upper limit. Among the above, a cyano group, an alkylsulfonyl group having 1 to 12 carbon atoms, an arylsulfonyl group having 6 to 18 carbon atoms, or a sulfamoyl group having 0 to 12 carbon atoms is preferable, and a cyano group or an alkylsulfonyl group having 1 to 12 carbon atoms is most preferable.

(C) Y₁ and Y₂ may be the same or different from each other. Preferably examples thereof include a hydrogen atom, a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from 4 to 12. A hydrogen atom or a substituted or unsubstituted alkyl group is preferable. Among the above, a hydrogen atom is most preferable.

(D) Z₁ and Z₂ may be the same or different from each other. Preferable examples thereof include a substituted or unsubstituted alkyl group having a total number of carbon atoms of from 1 to 12, a substituted or unsubstituted aryl group having a total number of carbon atoms of from 6 to 18, and a substituted or unsubstituted heterocyclic group having a total number of carbon atoms of from 4 to 12. Further, a substituted or unsubstituted aryl group or a substituted or unsubstituted heterocyclic group is preferable. In particular, a substituted aryl group is most preferable.

(E) M is preferably a hydrogen atom or a cation, particularly preferably a hydrogen atom, an alkali metal ion, ammonium, or quaternary ammonium cation, and more preferably Li, Na, K, or NH₄.

In the invention, when the compounds represented by Formulae (Y-I), (Y-1), (Y-2), (Y-3), (Y-4), (Y-5), and (Y-6) are required to have hydrophilicity, each compound preferably has 2 or more ionic hydrophilic groups in the molecule, more preferably 2 to 10 ionic hydrophilic groups in the molecule, and particularly preferably 3 to 6 ionic hydrophilic groups in the molecule.

When water is not used as the medium, the compounds are not required to have an ionic hydrophilic group.

As the ionic hydrophilic group, any group is acceptable insofar as it is an ionic dissociation group. Specific examples may include a sulfo group, a carboxyl group (including salts thereof), a hydroxyl group (which may be in the form of a salt), a phosphono group (which may be in the form of a salt), and quaternary ammonium.

A sulfo group, a carboxyl group, or a hydroxyl group (including salts thereof) is preferable. When the ionic hydrophilic group is a salt, preferable countercations may include an alkali metal (e.g., lithium, sodium, or potassium), ammonium, and an organic cation (e.g., pyridinium, tetramethyl ammonium, or guadinium). Among the above, an alkali metal is preferable. In particular, in the case of a sulfo group, a lithium salt is preferable, and in the case of a carboxyl group, a sodium salt and/or a potassium salt are/is preferable.

As the combination of the preferable substituents of the dye represented by Formula (Y-6) of the invention, a compound in which at least one of various substituents is the above mentioned preferable group is preferable, a compound in which a larger number of various substituents are the above mentioned preferable groups is more preferable, and a compound in which all the substituents are the above mentioned preferable substituents is most preferable.

In the invention, among the compounds represented by Formula (Y-6), the compound represented by Formula (Y-6-I) is preferable.

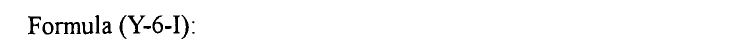

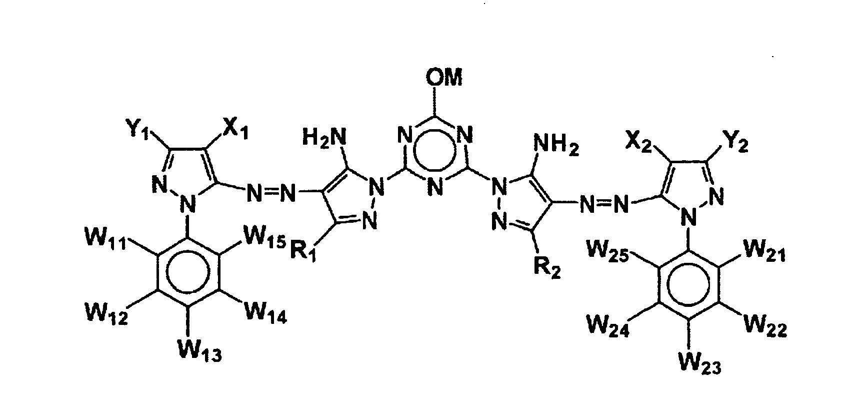

In Formula (Y-6-I), R₁, R₂, Y₁, Y₂, W₁₁, W₁₂, W₁₃, W₁₄, W₁₅, W₂₁, W₂₂, W₂₃, W₂₄, and W₂₅ each represent a monovalent group, and X₁ and X₂ each independently represent an electron attracting group with a Hammett's substituent constant δp value of 0.20 or more. M represents a hydrogen atom or cation. At least one of W₁₁, W₁₂, W₁₃, W₁₄, W₁₅, W₂₁, W₂₂, W₂₃, W₂₄, and W₂₅ is an ionic hydrophilic group or a group having an ionic hydrophilic group as a substituent.

In the invention, Formula (Y-6-I) mentioned above will be described in detail.

In the invention, in Formula (Y-6-I), W₁₁, W₁₂, W₁₃, W₁₄, W₁₅, W₂₁, W₂₂, W₂₃, W₂₄, and W₂₅ are the same as the examples of the monovalent group described for Y₁, Y₂, Z₁, and Z₂ in Formula (Y-6).

Preferable W₁₁, W₁₂, W₁₃, W₁₄, W₁₅, W₂₁, W₂₂, W₂₃, W₂₄, and W₂₅ include a hydrogen atom, a halogen atom, an alkyl group, an aryl group, a heterocyclic group, a cyano group, an alkoxy group, an amide group, a ureido group, an alkylsulfonylamino group, an arylsulfonylamino group, a sulfamoyl group, an alkylsulfonyl group, an arylsulfonyl group, a carbamoyl group, an alkoxycarbonyl group, a sulfo group (including salts thereof), a carboxyl group (including salts thereof), a hydroxyl group (which may be in the form of a salt), a phosphono group (which may be in the form of a salt), and quaternary ammonium. Among the above, a hydrogen atom, a halogen atom, an alkyl group, a sulfo group (including salts thereof), a carboxyl group (including salts thereof), or a hydroxyl group (which may be in the form of a salt) (including salts thereof) is preferable. A hydrogen atom, a sulfo group (including salts thereof), or a carboxyl group (including salts thereof) is more preferable. In particular, it is preferable that at least one of W₁₁, W₁₂, W₁₃, W₁₄, and W₁₅ is a sulfo group (including salts thereof) or a carboxyl group (including salts thereof) and that at least one of W₂₁, W₂₂, W₂₃, W₂₄, and W₂₅ is a sulfo group (including salts thereof) or a carboxyl group (including salts thereof).

In the invention, in Formula (Y-6-I), X₁ and X₂ are the same as X₁ and X₂ in Formula (Y-6), and preferable examples thereof are also the same.

In the invention, in Formula (Y-6-I), Y₁ and Y₂ are the same as Y₁ and Y₂ in Formula (Y-6), and preferable examples thereof are also the same.

In the invention, in Formula (Y-6-I), R₁ and R₂ are the same as R₁ and R₂ in Formula (Y-6), and preferable examples thereof are also the same.

In the invention, in Formula (Y-6-I), M is the same as M in Formula (Y-6), and preferable examples thereof are also the same.

The particularly preferable combinations for the compounds represented by Formula (Y-6-I) of the invention include the following (A) to (F):

(A) R₁ and R₂ may be the same or different from each other. Preferable examples thereof includea straight or branched chain alkyl group having a total number of carbon atoms of from 1 to 8, particularly preferably a secondary alkyl group or a tertiary alkyl group, and most preferably a t-butyl group.

(B) X₁ and X₂ may be the same or different from each other. Preferable examples thereof include a cyano group, an alkylsulfonyl group having 1 to 12 carbon atoms, an arylsulfonyl group having 6 to 18 carbon atoms, or a sulfamoyl group having 0 to 12 carbon atoms, and most preferably a cyano group.

(C) Y₁ and Y₂ may be the same or different from each other. Preferable examples thereof include a hydrogen atom, a substituted or unsubstituted alkyl group having a total number of carbon atoms of from 1 to 12, a substituted or unsubstituted aryl group having a total number of carbon atoms of from6 to 18, or a substituted or unsubstituted heterocyclic group having a total number of carbon atoms of from 4 to 12, and more preferably a hydrogen atom or a substituted or unsubstituted alkyl group. Among the above, a hydrogen atom and a methyl group are most preferable.

(D) Examples of W₁₁, W₁₂, W₁₃, W₁₄, W₁₅, W₂₁, W₂₂, W₂₃, W₂₄, and W₂₅, include a hydrogen atom, a halogen atom, an alkyl group, a sulfo group (including salts thereof), a carboxyl group (including salts thereof), and a hydroxyl group (which may be in the form of a salt) (including salts thereof) is preferable. A hydrogen atom, a sulfo group (including salts thereof), or a carboxyl group (including salts thereof) is more preferable. In particular, it is preferable that at least one of W₁₁, W₁₂, W₁₃, W₁₄, and W₁₅ is a sulfo group (including salts thereof) or a carboxyl group (including salts thereof) and that at least one of W₂₁, W₂₂, W₂₃, W₂₄, and W₂₅ is a sulfo group (including salts thereof) or a carboxyl group (including salts thereof).

(E) M is preferably a hydrogen atom or a cation, particularly preferably a hydrogen atom, an alkali metal ion, or an ammonium or quaternary ammonium cation, and more preferably Li, Na, K, or NH₄.

(F) In the invention, the compound represented by Formulae (Y-6-I) preferably has 2 or more ionic hydrophilic groups in the molecule, more preferably 2 to 16 ionic hydrophilic groups in the molecule, and particularly preferably 3 to 5 ionic hydrophilic groups in the molecule.

As the ionic hydrophilic group, any group is acceptable insofar as it is an ionic dissociation group. Specific examples may include a sulfo group, a carboxyl group (including salts thereof), a hydroxyl group (which may be in the form of a salt), a phosphono group (which may be in the form of a salt), and quaternary ammonium. A sulfo group, a carboxyl group, or a hydroxyl group (including salts thereof) is preferable.

When the ionic hydrophilic group is a salt, preferable countercations may include an alkali metal (e.g., lithium, sodium, or potassium), ammonium, and organic cation (e.g., pyridinium, tetramethyl ammonium, or guadinium). Among the above, an alkali metal is preferable. In particular, in the case of a sulfo group, a lithium salt is preferable, and in the case of a carboxyl group, a sodium salt and/or a potassium salt are/is preferable.

As the combination of the preferable substituents of the dye represented by Formula (Y-6-I) of the invention, a compound in which at least one of various substituents is the above mentioned preferable group is preferable, a compound in which a larger number of various substituents are the above mentioned preferable groups is more preferable, and a compound in which all the substituents are the above mentioned preferable substituents is most preferable.

The water-soluble dyes represented by Formulae (Y-I), (Y-1), (Y-2), (Y-3), (Y-4), (Y-5), (Y-6), and (Y-6-I) preferably have a maximum absorption wavelength (λmax) of 380 to 490 nm in H₂O, more preferably a λmax of 400 to 480 nm, and particularly preferably a λmax of 420 to 460 nm from the viewpoint of color reproduction.

Preferable examples of the compound represented by Formula (Y-I) include compounds described in JP-A No. 2007-138124, [0150] to [0470].

### -Water-Soluble Magenta Dye-

As the water-soluble magenta dyes for use in the method for forming an ink jet image in the invention, dyes represented by formula (M-1) having oxidation potential nobler than 1.0 V (vs SCE) are preferred.
Further, 50 % by mass or more of the water-soluble magenta dyes is preferably a dye represented by the following formula (M-1) in view of preservation stability of the image, more preferably 60 % by mass or more, and especially preferably 70 % by mass or more.

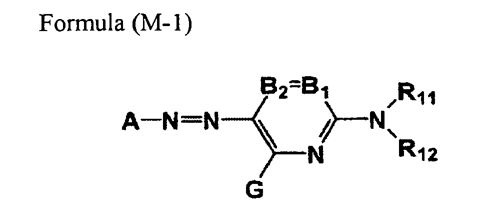

In Formula (M-1), A represents a residue of 5-membered heterocyclic diazo component A-NH₂. B₁ and B₂ each independently represent -CR₁₃= and -CR₁₄= or either one of them represents a nitrogen atom and the other one represents -CR₁₃= or -CR₁₄= R₁₁ and R₁₂ each independently represent a hydrogen atom, an alkyl group, a cycloalkyl group, an alkenyl group, an alkynyl group, an aralkyl group, an aryl group, a heterocyclic group, an acyl group, an alkoxycarbonyl group, an aryloxycarbonyl group, a carbamoyl group, an alkylsulfonyl group, an arylsulfonyl group, or a sulfamoyl group. Each group may further have a substituent. G, R₁₃, and R₁₄ each independently represent a hydrogen atom, a halogen atom, an alkyl group, an alkenyl group, an alkynyl group, an aralkyl group, an aryl group, a heterocyclic group, a cyano group, a carboxyl group, a carbamoyl group, an alkoxycarbonyl group, an aryloxy carbonyl group, an acyl group, a hydroxyl group, an alkoxy group, an aryloxy group, a silyloxy group, an acyloxy group, a carbamoyloxy group, a heterocyclic oxy group, an alkoxycarbonyloxy group, an aryloxycarbonyloxy group, an amino group substituted with an alkyl group, an aryl group, or a heterocyclic group, an acylamino group, an ureido group, a sulfamoylamino group, an alkoxycarbonylamino group, an aryloxycarbonylamine group, an alkyl- and aryl-sulfonyl amino group, a nitro group, an alkyl- and arylthio group, an alkyl- and aryl- sulfonyl group, an alkyl- and aryl sulfinyl group, a sulfamoyl group, a heterocyclic thio group, or an ionic hydrophilic group. Each group may be further substituted. R₁₃ and R₁₁ or R₁₁ and R₁₂ may be bonded to each other to form a 5-to 6- membered ring. Formula (M-1) contains at least one ionic hydrophilic group.

In formula (M-1), A represents the residue of a 5-membered heterocyclic diazo component A-NH₂; each of B₁ and B₂ represents -CR₁₃= or -CR₁₄=, or either one of B₁ and B₂ represents a nitrogen atom, and the other represents -CR₁₃= or -CR₁₄=; each of R₁₁ and R₁₂ independently represents a hydrogen atom, an alkyl group, a cycloalkyl group, an akenyl group, an alkynyl group, an aralkyl group, an aryl group, a heterocyclic group, an acyl group, an alkoxycarbonyl group, an aryloxycarbonyl group, a carbamoyl group, an alkylsulfonyl group, an arylsulfonyl group, or a sulfamoyl group. Each group may further have a substituent. Each of G, R₁₃ and R₁₄ independently represents a hydrogen atom, a halogen atom, an alkyl group, an akenyl group, an alkynyl group, an aralkyl group, an aryl group, a heterocyclic group, a cyano group, a carboxyl group, a carbamoyl group, an alkoxycarbonyl group, an aryloxycarbonyl group, an acyl group, a hydroxyl group, an alkoxy group, an aryloxy group, a silyloxy group, an acyloxy group, a carbamoyloxy group, a heterocyclic oxy group, an alkoxycarbonyloxy group, an aryloxycarbonyloxy group, an amino group substituted with an alkyl group or an aryl group or a heterocyclic group, an acylamino group, a ureido group, a sulfamoylamino group, alkoxycarbonylamino group, an aryloxycarbonylamino group, an alkylsulfonylamino group, an arylsulfonylamino group, a nitro group, an alkylthio group, an arylthio group, an alkylsulfonyl group, an arylsulfonyl group, an alkylsulfinyl group, an arylsulfinyl group, a sulfamoyl group, a heterocyclic thio group, or an ionic hydrophilic group. Each group may further be substituted. Further, R₁₃ and R₁₁, or R₁₁ and R₁₂ may be bonded to each other to form a 5- or 6-membered ring, provided that the dye represented by formula (M-1) has at least one ionic hydrophilic group.

In the invention, as preferred A in formula (M-1), N, O and S can be exemplified as the examples of the hetero atoms of the 5-membered heterocyclic ring. A nitrogen-containing 5-membered heterocyclic ring is preferred, and the heterocyclic ring may be condensed with an aliphatic ring, an aromatic ring or other heterocyclic ring. As the preferred examples of the heterocyclic rings represented by A, a pyrazole ring, an imidazole ring, a triazole ring, a thiazole ring, an isothiazole ring, a thiadiazole ring, a benzothiazole ring, a benzoxazole ring, and a benzisothiazole ring are exemplified. Each heterocyclic group may further have a substituent. Heterocyclic rings represented by any of the following formulae (a) to (i) are preferred.

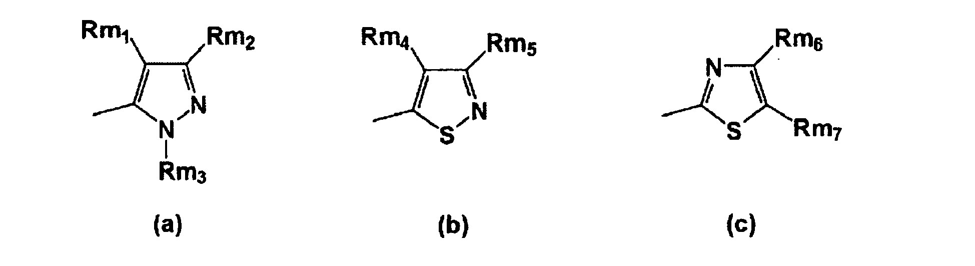

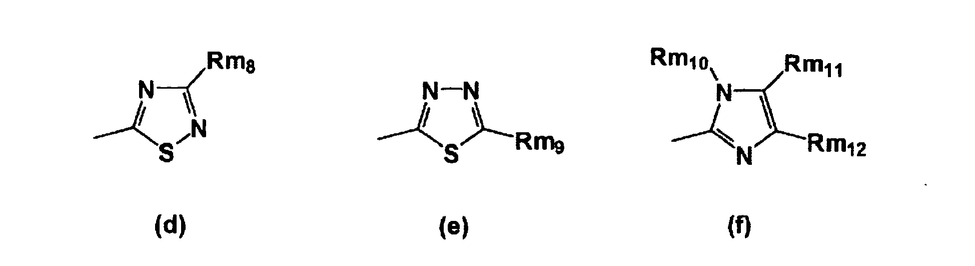

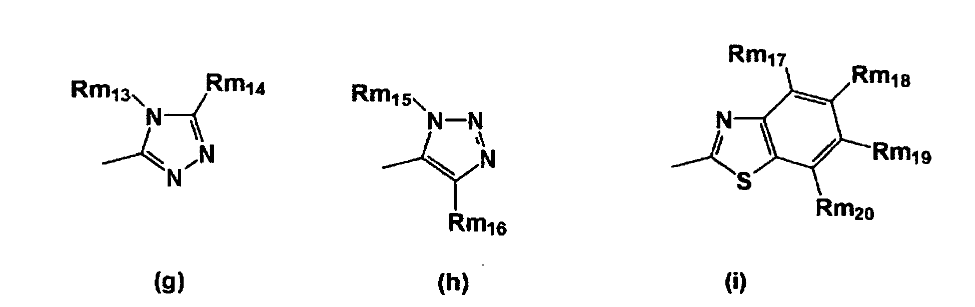

In formulae (a) to (i), Rm₁ to Rm₂₀ have the same meaning as R₁₃ or R₁₄ in formula (M-1).

In formula (M-1), each of B₁ and B₂ represents -CR₁₃= or -CR₁₄=, or either one represents a nitrogen atom and the other represents -CR₁₃= or -CR₁₄=, but the case where B₁ and B₂ represent -CR₁₃= or -CR₁₄= is preferred in the aspect of capable of exhibiting more excellent performances.

In formula (M-1), each of R₁₁ and R₁₂ independently preferably represents a hydrogen atom, a substituted or unsubstituted cycloalkyl group, a substituted or unsubstituted aryl group, a substituted or unsubstituted heterocyclic group, a substituted or unsubstituted acyl group, a substituted or unsubstituted alkylsulfonyl group, or a substituted or unsubstituted arylsulfonyl group, more preferably a hydrogen atom, a substituted aryl group, or a substituted heterocyclic group, and especially preferably a substituted aryl group, or a substituted heterocyclic group, provided that R₁₁ and R₁₂ do not represent a hydrogen atom at the same time.

In formula (M-1), G represents a hydrogen atom, a halogen atom, an alkyl group, an alkenyl group, an alkynyl group, an aralkyl group, an aryl group, a hydroxyl group, an alkoxy group, an aryloxy group, an acyloxy group, a heterocyclic oxy group, an amino group substituted with an alkyl group or an aryl group or a heterocyclic group, an acylamino group, a ureido group, a sulfamoylamino group, an alkoxycarbonylamino group, an aryloxycarbonylamino group, an alkylsulfonylamino group, an arylsulfonylamino group, an alkylthio group, an arylthio group, a heterocyclic thio group, or an ionic hydrophilic group. Each group may further be substituted.

Of the above groups, a hydrogen atom, a halogen atom, an alkyl group, a hydroxyl group, an alkoxy group, an aryloxy group, an acyloxy group, an amino group substituted with an alkyl group or an aryl group or a heterocyclic group, and an acylamino group are preferred.

Of the above groups, a hydrogen atom, an amino group substituted with an aryl group or a heterocyclic group, and an acylamino group are especially preferred. An amino group substituted with an aryl group having a substituent is most preferred.

In formula (M-1), each of R₁₃ and R₁₄ independently preferably represents a hydrogen atom, an alkyl group, a cyano group, a carboxyl group, a carbamoyl group, or an alkoxycarbonyl group. Each group may further be substituted.

In further detail, a hydrogen atom, an alkyl group, a cyano group, and a carboxyl group are preferred, it is especially preferred that R₁₃ represents a hydrogen atom and R₁₄ represents an alkyl group, and it is most preferred for R₁₃ to represent a hydrogen atom and R₁₄ represent a methyl group.

With respect to preferred combinations of substituents of the compound represented by formula (M-1), the compound in which at least one of various substituents is the above preferred group is preferred, the compound in which various more substituents are the above preferred groups is more preferred, and the compound in which all the substituents are the above preferred groups is most preferred.

In the invention, the compound represented by formula (M-1) is preferably represented by the following formula (M-2).

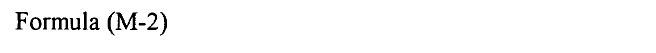

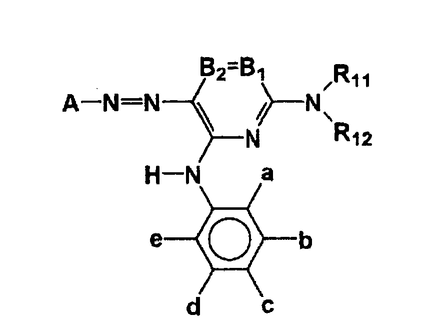

In the invention, A in formula (M-2) has the same meaning as A in formula (M-1), and preferred examples are also the same.

In the invention, B₁ and B₂ in formula (M-2) have the same meaning as B₁ and B₂ in formula (M-1), and preferred examples are also the same.

In the invention, R₁₁ and R₁₂ in formula (M-2) have the same meaning as R₁₁ and R₁₂ in formula (M-1), and preferred examples are also the same.

In the invention, each of a and e in formula (M-2) independently represents an alkyl group, an alkoxy group or a halogen atom, and when both a and e represent an alkyl group, the sum total of the carbon atoms constituting the alkyl group is 3 or more, which may further be substituted.

More preferably each of a and e independently represents a methyl group, an ethyl group, or an isopropyl group, more preferably an ethyl group or an isopropyl group, and most preferably a = b = an ethyl group or an isopropyl group.

Each of b, c and d independently has the same meaning as R₁₃ and R₁₄ in formula (M-1), and a and b, or e and d may be condensed to each other, provided that the dye represented by formula (M-2) has at least one ionic hydrophilic group.

More preferably c represents a hydrogen atom or an alkyl group, and especially preferably represents a hydrogen atom or a methyl group.

b and d preferably represents a hydrogen atom or an ionic hydrophilic group, and especially preferably represents a hydrogen atom, a sulfo group or a carboxyl group. The combination of b and d is most preferably a hydrogen atom and a sulfo group.

With respect to preferred combinations of substituents of the compound represented by formula (M-2), the compound in which at least one of various substituents is the above preferred group is preferred, the compound in which various more substituents are the above preferred groups is more preferred, and the compound in which all the substituents are the above preferred groups is most preferred.

In the invention, the compound represented by formula (M-2) is preferably represented by the following formula (M-3).

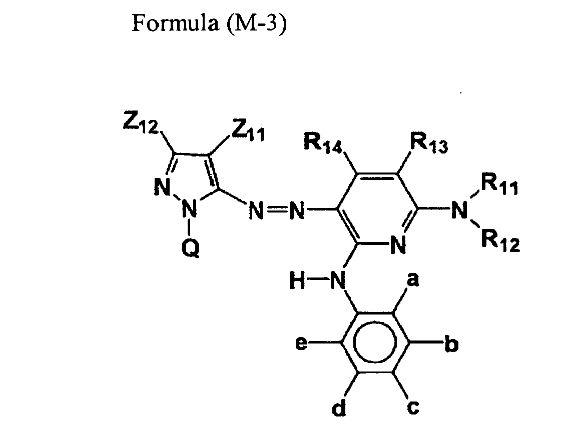

In formula (M-3), Z₁₁ represents an electron-attracting group having Hammett's substitution constant σp value of 0.20 or more. Z₁₂ represents a hydrogen atom, an alkyl group, an alkenyl group, an alkynyl group, an aralkyl group, an aromatic group, a heterocyclic group, or an acyl group. Each of R₁₁, R₁₂, R₁₃, R₁₄, a, b, c, d and e has the same meaning as those in formula (M-2). Q represents a hydrogen atom, an alkyl group, an alkenyl group, an alkynyl group, an aralkyl group, an aromatic group, or a heterocyclic group. Each of the groups represented by Z₁₁, Z₁₂ and Q may further have a substituent, provided that the compound represented by formula (M-3) has at least one ionic hydrophilic group.

In the invention, A in formula (M-3) has the same meaning as A in formula (M-1), and preferred examples are also the same.

In the invention, R₁₃ and R₁₄ in formula (M-3) have the same meaning as R₁₃ and R₁₄ in formula (M-1), and preferred examples are also the same.

In the invention, R₁₁ and R₁₂ in formula (M-3) have the same meaning as R₁₁ and R₁₂ in formula (M-1), and preferred examples are also the same.

In the invention, a, b, c, d and e in formula (M-3) have the same meaning as a, b, c, d and e in formula (M-2), and preferred examples are also the same.

In the invention, the electron-attracting group represented by Z₁₁ in formula (M-3) is an electron-attracting group having Hammett's substitution constant σp value of 0.20 or more, and preferably 0.30 or more. The least upper bound of σp value is preferably 1.0 or less.

As the specific examples of electron-attracting groups having σp value of 0.20 or more, an acyl group, an acyloxy group, a carbamoyl group, an alkyloxycarbonyl group, an aryloxycarbonyl group, a cyano group, a nitro group, a dialkylphosphono group, a diarylphosphono group, a diarylphosphinyl group, an alkylsulfinyl group, an arylsulfinyl group, an alkylsulfonyl group, an arylsulfonyl group, a sulfonyloxy group, an acylthio group, a sulfamoyl group, a thiocyanate group, a thiocarbonyl group, a halogenated alkyl group, a halogenated alkoxy group, a halogenated aryloxy group, a halogenated alkylamino group, a halogenated alkylthio group, a heterocyclic group, a halogen atom, an azo group, a selenocyanate group, and an aryl group substituted with other electron-attracting group having σp value of 0.20 or more are exemplified.

Z₁₁ preferably represents a cyano group, an alkylsulfonyl group, an arylsulfonyl group, a nitro group, or a halogen atom, more preferably a cyano group, an alkylsulfonyl group, or an arylsulfonyl group, and most preferably a cyano group.

Z₁₂ preferably represents a hydrogen atom, an alkyl group, a cycloalkyl group, an aralkyl group, an aryl group, a heterocyclic group, or an acyl group, and more preferably represents an alkyl group. Each substituent may further be substituted.

In further detail, an alkyl group having a substituent and an unsubstituted alkyl group are included in the alkyl group represented by Z₁₂. As the alkyl group, an alkyl group having from 1 to 12 carbon atoms exclusive of the carbon atoms of the substituent is preferred, and an alkyl group having from 1 to 6 carbon atoms is more preferred.

The examples of the substituents include a hydroxyl group, an alkoxy group, a cyano group, a halogen atom, and an ionic hydrophilic group.

The examples of the alkyl groups include methyl, ethyl, butyl, isopropyl, t-butyl, hydroxyethyl, methoxyethyl, cyanoethyl, trifluoromethyl, 3-sulfopropyl, and 4-sulfobutyl, and of these alkyl groups, methyl, ethyl, isopropyl and t-butyl are preferred, isopropyl and t-butyl are especially preferred, and t-butyl is most preferred.

A cycloalkyl group having a substituent and an unsubstituted cycloalkyl group are included in the cycloalkyl group represented by Z₁₂. As the cycloalkyl group, a cycloalkyl group having from 5 to 12 carbon atoms exclusive of the carbon atoms of the substituent is preferred. The examples of the substituents include an ionic hydrophilic group. The examples of the cycloalkyl group include a cyclohexyl group.

An aralkyl group having a substituent and an unsubstituted aralkyl group are included in the aralkyl group represented by Z_{12.} As the aralkyl group, an aralkyl group having from 7 to 12 carbon atoms exclusive of the carbon atoms of the substituent is preferred. The examples of the substituents include an ionic hydrophilic group. The examples of the aralkyl group include a benzyl group and a 2-phenethyl group.

An aryl group having a substituent and an unsubstituted aryl group are included in the aryl group represented by Z_{12.} As the aryl group, an aryl group having from 6 to 12 carbon atoms exclusive of the carbon atoms of the substituent is preferred. The examples of the substituents include an alkyl group, an alkoxy group, a halogen atom, an alkylamino group, an amido group, a carbamoyl group, a sulfamoyl group, a sulfonamido group, a hydroxyl group, an ester group, and an ionic hydrophilic group. The examples of the aryl group include phenyl, p-tolyl, p-methoxyphenyl, o-chlorophenyl, and m-(3-sulfopropylamino)phenyl.

A heterocyclic group having a substituent and an unsubstituted heterocyclic group are included in the heterocyclic group represented by Z₁₂. As the heterocyclic group, a 5- or 6-membered heterocyclic group is preferred. The examples of the substituents include an amido group, a carbamoyl group, a sulfamoyl group, a sulfonamido group, a hydroxyl group, an ester group, and an ionic hydrophilic group. The examples of the heterocyclic group include a 2-pyridyl group, a 2-thienyl group, a 2-thiazolyl group, a 2-benzothiazolyl group, and a 2-furyl group.

An acyl group having a substituent and an unsubstituted acyl group are included in the acyl group represented by Z_{12.} As the acyl group, an acyl group having from 1 to 12 carbon atoms exclusive of the carbon atoms of the substituent is preferred. The examples of the substituents include an ionic hydrophilic group. The examples of the acyl group include an acetyl group and a benzoyl group.

In the invention, Q in formula (M-3) represents a hydrogen atom, an alkyl group, an alkenyl group, an alkynyl group, an aralkyl group, an aromatic group, or a heterocyclic group. These substituents may further be substituted. The details of these substituents are the same as the case of R₁₃ and R₁₄.

Q preferably represents an aryl group or heterocyclic group substituted with an electron-attracting group. The electron-attracting group of the substituents of Q is an electron-attracting group having Hammett's substitution constant σp value of 0.20 or more, and preferably 0.30 or more. The least upper bound of σp value is preferably 1.0 or less.

The specific examples of electron-attracting groups having σp value of 0.20 or more are the same as the case of Z₁₁ in formula (M-3).

In further detail, Q preferably represents a heterocyclic group substituted with an electron-attracting group, preferably represents a sulfo group, a substituted or unsubstituted carbamoyl group or a benzoxazole ring and a benzothiazole ring substituted with a substituted or unsubstituted sulfamoyl group, and most preferably a sulfo group, or a benzothiazole ring substituted with a substituted sulfamoyl group.

With respect to preferred combinations of substituents of the compound represented by formula (C-3), the compound in which at least one of various substituents is the above preferred group is preferred, the compound in which various more substituents are the above preferred groups is more preferred, and the compound in which all the substituents are the above preferred groups is most preferred.

Especially preferred combinations of the compound represented by formula (M-1) in the invention include the following (A) to (D).

(A) The preferred examples of the heterocyclic rings represented by A include a pyrazole ring, an imidazole ring, a triazole ring, a thiazole ring, an isothiazole ring, a thiadiazole ring, a benzothiazole ring, a benzoxazole ring, and a benzisothiazole ring, more preferably a pyrazole ring, an imidazole ring, a triazole ring, a thiazole ring, an isothiazole ring, and a thiadiazole ring, still more preferably a pyrazole ring, a triazole ring, a thiazole ring, an isothiazole ring, and a thiadiazole ring, and most preferably a pyrazole ring.

(B) Each of B₁ and B₂ represents -CR₁₃= or -CR₁₄=, or either one represents a nitrogen atom, and the other represents -CR₁₃= or -CR₁₄=, preferably each of B₁ and B₂ represents -CR₁₃= or -CR₁₄=, more preferably R₁₃ represents a hydrogen atom (B₁ is an unsubstituted carbon atom), and R₁₄ represents a hydrogen atom or an alkyl group (B₂ is an unsubstituted carbon atom or a carbon atom substituted with an alkyl group), and especially preferably R₁₃ represents a hydrogen atom (B₁ is an unsubstituted carbon atom), and R₁₄ represents a methyl group (B₂ is a carbon atom substituted with a methyl group).

(C) Each of R₁₁and R₁₂ independently preferably represents a hydrogen atom, a substituted or unsubstituted cycloalkyl group, a substituted or unsubstituted aryl group, a substituted or unsubstituted heterocyclic group, a substituted or unsubstituted acyl group, a substituted or unsubstituted alkylsulfonyl group, or a substituted or unsubstituted arylsulfonyl group, more preferably a hydrogen atom, a substituted aryl group, or a substituted heterocyclic group, and especially preferably a substituted aryl group, or a substituted heterocyclic group, and most preferably an aryl group substituted with a sulfo group, or a heterocyclic group substituted with a sulfo group.

(D) G preferably represents a hydrogen atom, a halogen atom, an alkyl group, an alkenyl group, an alkynyl group, an aralkyl group, an aryl group, a hydroxyl group, an alkoxy group, an aryloxy group, an acyloxy group, a heterocyclic oxy group, an amino group substituted with an alkyl group or an aryl group or a heterocyclic group, an acylamino group, a ureido group, a sulfamoylamino group, an alkoxycarbonylamino group, an aryloxycarbonylamino group, an alkylsulfonylamino group, an arylsulfonylamino group, an alkylthio group, an arylthio group, a heterocyclic thio group, or an ionic hydrophilic group, more preferably represents a hydrogen atom, a halogen atom, an alkyl group, a hydroxyl group, an alkoxy group, an aryloxy group, an acyloxy group, an amino group substituted with an alkyl group or an aryl group or a heterocyclic group, or an acylamino group, especially preferably a hydrogen atom, an amino group substituted with an aryl group or a heterocyclic group, or an acylamino group, and most preferably an amino group substituted with an aryl group having a substituent.

Formula (M-1) is especially preferably represented by formula (M-2).

Especially preferred combinations of the compound represented by formula (M-2) in the invention include the following (A) to (D).

(A) The examples of the heterocyclic groups represented by A are the same as A in formula (M-1), and preferred examples are also the same.

(B) Each of B₁ and B₂ has the same meaning as B₁ and B₂ in formula (M-1), and preferred examples are also the same.

(C) Each of R₁₁ and R₁₂ has the same meaning as R₁₁ and R₁₂ in formula (M-1), and preferred examples are also the same.

(D) Each of a and e preferably represents an alkyl group or a halogen atom, and when both a and e represent an alkyl group, the alkyl group is an unsubstituted alkyl group, and the sum total of the carbon atoms of a and e is 3 or more (preferably 5 or less). Each of a, b, c and d preferably represents a hydrogen atom, a halogen atom, an alkyl group, or an ionic hydrophilic group (preferably each of them represents a hydrogen atom, an alkyl group having from 1 to 4 carbon atoms, or an ionic hydrophilic group), more preferably each of a and e independently represents a methyl group, an ethyl group, or an isopropyl group, especially preferably represents an ethyl group or an isopropyl group, and most preferably a=b=an ethyl group or an isopropyl group. Further, c preferably represents a hydrogen atom or an alkyl group, and especially preferably a hydrogen atom or a methyl group. Each of b and d preferably represents a hydrogen atom or an ionic hydrophilic group, especially preferably a hydrogen atom, a sulfo group, or a carboxyl group, and it is most preferred that the combination ofb and d is a hydrogen atom and a sulfo group.

Formula (M-2) is especially preferably represented by formula (M-3).

Especially preferred combinations of the compound represented by formula (M-3) in the invention include the following (A) to (F).

(A) Z₁₁ represents an electron-attracting group having Hammett's substitution constant σp value of 0.20 or more, and preferably 0.30 or more. The least upper bound of σp value is preferably 1.0 or less. Z₁₁ more preferably represents a cyano group, an alkylsulfonyl group, an arylsulfonyl group, a nitro group, or a halogen atom, still more preferably a cyano group, an alkylsulfonyl group, or an arylsulfonyl group, and especially preferably a cyano group.

(B) As Z₁₂, a hydrogen atom, an alkyl group, a cycloalkyl group, an aralkyl group, an aryl group, a heterocyclic group, and an acyl group are preferred, and an alkyl group is more preferred. Each substituent may further be substituted. In more detail, in the alkyl group represented by Z₁₂, an alkyl group having a substituent and an unsubstituted alkyl group are included. As the alkyl group, an alkyl group having from 1 to 12 carbon atoms exclusive of the carbon atoms of the substituent is preferred, and more preferably an alkyl group having from 1 to 6 carbon atoms. The examples of the substituents include a hydroxyl group, an alkoxy group, a cyano group, a halogen atom, and an ionic hydrophilic group. Of these groups, methyl, ethyl, butyl, isopropyl, t-butyl, hydroxyethyl, methoxyethyl, cyanoethyl, trifluoromethyl, 3-sulfopropyl, and 4-sulfobutyl are preferred, isopropyl and t-butyl are especially preferred, and t-butyl is most preferred.

(C) Q represents a hydrogen atom, an alkyl group, an alkenyl group, an alkynyl group, an aralkyl group, an aromatic group, or a heterocyclic group. Each of the substituents may further be substituted. Further, Q is preferably an aryl group or heterocyclic group substituted with an electron-attracting group. The electron-attracting group to be a substituent of Q is an electron-attracting group having Hammett's substitution constant σp value of 0.20 or more, and preferably 0.30 or more. The least upper bound of σp value is preferably 1.0 or less. In further detail, Q is more preferably a heterocyclic group substituted with an electron-attracting group, especially preferably a sulfo group, a substituted or unsubstituted carbamoyl group, a benzoxazole ring and benzothiazole ring substituted with a substituted or unsubstituted sulfamoyl group, and most preferably a sulfo group, and a benzothiazole ring substituted with a substituted sulfamoyl group.

(D) Each of a, b, c, d and e has the same meaning as a, b, c, d and e in formula (M-2), and preferred examples are also the same.

(E) Each of R₁₃ and R₁₄ has the same meaning as R₁₃ and R₁₄ in formula (M-2), and preferred examples are also the same.

(F) Each of R₁₁ and R₁₂ has the same meaning as R₁₁ and R₁₂ in formula (M-2), and preferred examples are also the same.

Each of the compounds represented by any of formulae (M-1), (M-2) and (M-3) (azo dyestuffs) has at least one ionic hydrophilic group in the molecule (preferably 3 or more and 6 or less). The examples of the ionic hydrophilic groups include a sulfo group, a carboxyl group, a phosphono group, and a quaternary ammonium group. As the ionic hydrophilic groups, a carboxyl group, a phosphono group, and a sulfo group are preferred, and a carboxyl group and a sulfo group are preferred above all. In particular, it is most preferred that at least one is a sulfo group. The carboxyl group, phosphono group and sulfo group may be in the state of a salt. The examples of counter ions to form a salt include an ammonium ion, an alkali metal ion (e.g., a lithium ion, a sodium ion, a potassium ion) and an organic cation (e.g., a tetramethylammonium ion, a tetramethylguanidinium ion, a tetramethylphosphonium ion). Of the counter ions, alkali metal salts are preferred, and of the alkali metal salts, a potassium ion, a sodium ion, and a lithium ion are preferred, and a lithium ion is most preferred. In view of the improvement of solubility and suppression of bronzing in ink jet printing, the combination of a sulfo group as the ionic hydrophilic group and a lithium ion as the counter ion is most preferred.

It is preferred that the azo dyestuffs have 3 or more and 6 or less ionic hydrophilic groups in the molecule, more preferably to have 3 or more and 6 or less sulfo groups, and still more preferably to have 3 or more and 5 or less sulfo groups.

As the preferred specific examples of the dyes represented by formula (M-1), the compounds disclosed in JP-ANo. 2007-138124, paragraphs from [0489] to [0563] are exemplified.

### -Water-Soluble Black Dye-

As the water-soluble black dyes for use in the method for forming an ink jet image in the invention, dyes represented by formula (B-1) having oxidation potential nobler than 1.0 V (vs SCE) are preferred.
Further, 50 % by mass or more of the water-soluble black dyes is preferably a dye represented by the following formula (B-1) in view of preservation stability of the image, more preferably 55 % by mass or more, and especially preferably 60 % by mass or more.

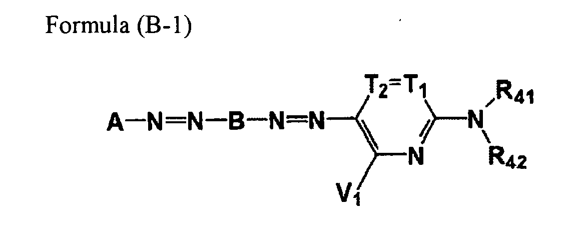

In Formula (B-1), A and B each independently represent an aromatic group which may be substituted or a heterocyclic group which may be substituted (A represents a monovalent group and B represents a divalent group).
T₁ and T₂ each represent =CR₄₃- and -CR₄₄=, or either one of them represents a nitrogen atom and the other one represents =CR₄₃- or -CR₄₄=. V₁, R₄₃, and R₄₄ each independently represent a hydrogen atom, a halogen atom, an alkyl group, an alkenyl group, an alkynyl group, an aralkyl group, an aryl group, a heterocyclic group, a cyano group, a carboxyl group, a carbamoyl group, an alkoxycarbonyl group, an aryloxycarbonyl group, a heterocyclicoxycarbonyl group, an acyl group, a hydroxyl group, an alkoxy group, an aryloxy group, a heterocyclic oxy group, a silyloxy group, an acyloxy group, a carbamoyloxy group, an alkoxycarbonyloxy group, an aryloxycarbonyloxy group, an amino group (including an alkylamino group, an arylamino group, and a heterocyclic amino group), an acylamino group, an ureido group, a sulfamoylamino group, an alkoxycarbonylamino group, an aryloxycarbonylamine group, an alkyl- or aryl- sulfonylamino group, a heterocyclic sulfonylamino group, a nitro group, an alkyl- and arylthio group, a heterocyclic thio group, an alkyl- and aryl- sulfonyl group, a heterocyclic sulfonyl group, an alkyl- and aryl- sulfinyl group, a heterocyclic sulfinyl group, a sulfamoyl group, or a sulfo group. Each group may be further substituted. R₄₁ and R₄₂ each independently represent a hydrogen atom, an alkyl group, an alkenyl group, an alkynyl group, an aralkyl group, an aryl group, a heterocyclic group, an acyl group, an alkoxycarbonyl group, an aryloxy carbonyl group, a carbamoyl group, an alkyl- or aryl- sulfonyl group, and a sulfamoyl group. Each group may further have a substituent. R₄₁ and R₄₂ are not simultaneously hydrogen atoms. R₄₃ and R₄₁ or R₄₁ and R₄₂ may be bonded to each other to form a 5- to 6- membered ring.

As the preferred specific examples of the dyes represented by formula (B-1), the compounds disclosed in JP-A No. 2007-138124, paragraphs from [0669] to [0772] are exemplified.

To the above yellow dyes, magenta dyes, cyan dyes and black dyes, other dyes may be used in combination for the purpose of regulation of hue and regulation of discoloring speed. As the specific examples of the dyes preferred for combination, the compounds disclosed in JP-ANo. 2007-138124, paragraphs from [0473] to [0481] (combination dyes for yellow dyes), paragraphs from [0507] to [0578] (combination dyes for magenta dyes), paragraphs from [0660] to [0664] (combination dyes for cyan dyes), and paragraphs from

### [0779] to [0792] (combination dyes for black dyes) are exemplified.

### <Ink for Ink Jet Recording>

The ink for ink jet recording in the invention can be manufactured by dissolving the water-soluble dye in an aqueous medium. Further, if necessary, other additives are added within the range of not impeding the effects of the invention. As other additives, well-known additives, for example, a drying preventive (a wetting agent), a discoloration inhibitor, an emulsification stabilizer, an osmosis accelerator, an ultraviolet absorber, an antiseptic, an antifungal agent, a pH adjustor, a surface tension adjustor, a defoaming agent, a viscosity regulator, a dispersant, a dispersion stabilizer, a rust preventive, and a chelating agent are exemplified. These various kinds of additives are directly added to an ink solution.

The anti-drying agent is preferably used for preventing clogging caused when the ink jet ink dries at an ink ejecting opening of a nozzle for use in an ink jet recording method.

As the anti-drying agent, a water-soluble organic solvent whose vapor pressure is lower than that of water is preferable. Specific example include polyhydric alcohols typified by ethylene glycol, propylene glycol, diethylene glycol, polyethylene glycol, thiodiglycol, dithio diglycol, 2-methyl-1,3-propanediol, 1,2,6-hexanetriol, acetylene glycol derivatives, glycerol, trimethylolpropane, etc.; lower alkyl ethers of polyhydric alcohols, such as ethylene glycol monomethyl (or ethyl) ether, diethylene glycol monomethyl (or ethyl) ether, and triethylene glycol monoethyl (or butyl) ether; heterocyclics, such as 2-pyrrolidone, N-methyl-2-pyrrolidone, 1,3-dimethyl-2-imidazolidinone, and N-ethylmorpholine; sulphur-containing compounds, such as sulfolane, dimethyl sulfoxide, and 3-sulfolene; polyifunctional compounds, such as diacetone alcohol and diethanolamine, and urea derivatives. Among the above, polyhydric alcohols, such as glycerol and diethylene glycol, are more preferable. The above-mentioned anti-drying agents may be used singly or in combination of two or more kinds. The anti-drying agents are preferably contained in the ink in a proportion of 10 to 50 % by mass.

The penetration accelerator is used in order for an ink jet ink to permeate in paper in a better manner. Examples of the penetration accelerator may include alcohols, such as ethanol, isopropanol, butanol, di(tri)ethylene glycol monobutyl ether, and 1,2-hexanediol, sodium lauryl sulfate, sodium oleate, and a nonionic surfactant. When the penetration accelerators are contained in the ink in a proportion of 5 to 30 % by mass, sufficient effects are obtained. It is preferable to add the penetration accelerators in a range such that printing blur and print through do not occur.

The UV absorber is used for increasing storageability of images. As the UV absorber, benzotriazole compounds described in JP-ANos. 58-185677, 61-190537, 2-782, 5-197075, 9-34057, etc., benzophenone compounds described in JP-ANos. 46-2784 and 5-194483, United States Patent No. 3214463, etc., cinnamic acid compounds described in JP-B Nos. 48-30492 and 56-21141, JP-A No. 10-88106, etc., triazine compounds described in JP-A Nos. 4-298503, 8-53427, 8-239368, and 10-182621, JP-A (Translation of PCT Application) No. 8-501291, etc., compounds described in Research Disclosure No. 24239, and compounds which absorb ultraviolet rays to emit fluorescence, i.e., a so-called fluorescent brightening agent, typified stilbene compounds or benzoxazole compounds may be used.

The fading inhibitor is used for increasing storageability of images. As the fading inhibitor, various organic-based and metal complex-based fading inhibitors may be used. Examples of organic-based fading inhibitors include hydroquinones, alkoxyphenols, dialkoxyphenols, phenols, anilines, amines, indans, chromans, alkoxyanilines, and heterocyclics, and examples of metal complex-based fading inhibitors include a nickel complex and a zinc complex. More specifically, compounds described in patent publications cited in Research disclosure Nos. 17643 (VII-I or J), 15162, 18716, p. 650, left column, 36544, p. 527, 307105, p. 872, and 15162 or compounds included in compounds represented by Formulae of typical compounds and examples of the compounds described in JP-A 62-215272, pp. 127 to 137 may be used.

Examples of the antifungal agent include sodium dehydroacetate, sodium benzoate, sodium pyridinethione-1-oxide, ethyl p-hydroxybenzoate, and 1,2-benzisothiazoline-3-one, and salts thereof. The antifungal agents are preferably used in a proportion of 0.02 to 1.00 % by mass in the ink.

As the pH adjustor, the neutralizer (an organic base, inorganic alkali) may be used. The pH adjustor is added for increasing storage stability of the ink jet ink in such a manner that the pH of the ink jet ink is preferably from 6 to 10, and more preferably from 7 to 10.

Examples of the surface tension adjuster include nonionic surfactants, cationic surfactants, and anionic surfactants. The surface tension of the ink jet ink of the invention is preferably from 25 to 70 mN/m, more preferably from 25 to 60 mN/m. The viscosity of the ink jet ink of the invention is preferably 30 mPa·s or lower. It is more preferable to adjust the viscosity of the ink jet ink to 20 mPa·s or lower. Preferable examples of the surfactant include anionic surfactants, such as fatty acid salt, alkyl sulfate, alkylbenzene sulfonate, alkylnaphthalene sulfonate, dialkyl sulfosuccinate, alkyl phosphate, a naphthalenesulfonic acid formalin condensate, and a polyoxyethylene alkyl sulfate and nonionic surfactants, such as polyoxyethylene alkyl ether, polyoxyethylene alkyl aryl ether, polyoxyethylene fatty acid ester, sorbitan fatty acid ester, polyoxyethylene sorbitan fatty acid ester, polyoxyethylene alkylamine, glycerine fatty acid ester, and an oxyethylene oxypropylene block copolymer. It is also preferable to use SURFYNOLS (product of Air Products & Chemicals Co.), which is an acetylene type polyoxyethylene oxide surfactant. It is also preferable to use an amineoxide type amphoteric surfactant, such as N,N-dimethyl-N-alkylamineoxide. Surfactants described in JP-ANo. 59-157636, pp. 37 to 38 and Research Disclosure No. 308119 (1989) may be used.

As the defoaming agent, fluorine compounds, silicone compounds, and chelating agents typified by EDTA, etc., may be used, as required.

The aqueous medium comprises water as the main component, and contains a water-soluble organic solvent (hereinafter also referred to as a water-miscible organic solvent). The water-soluble organic solvent includes the above specific water-soluble organic solvents.
As the aqueous medium, a mixture containing water as a main component, and as desired, containing a water-miscible organic solvent added therein can be used. Examples of the water-miscible organic solvent include alcohols (e.g., methanol, ethanol, propanol, isopropanol, butanol, isobutanol, sec-butanol, t-butanol, pentanol, hexanol, cyclohexanol, and benzyl alcohol), polyhydric alcohols (e.g., ethylene glycol, diethylene glycol, triethylene glycol, polyethylene glycol, propylene glycol, dipropylene glycol, polypropylene glycol, butylene glycol, hexanediol, pentanediol, glycerol, hexanetriol, and thiodiglycol), glycol derivatives (e.g., ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, and ethylene glycol monophenyl ether), amines (e.g., ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine, and tetramethyl propylenediamine), and other polar solvents (e.g., formamide, N, N dimethylformamide, N,N-dimethylacetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, and acetone). The water-miscible organic solvents may be used in combination of two or more kinds.

As the content of the water-soluble dye in the ink for ink jet recording in the invention, it is preferred to contain each of water-soluble dyes in the invention in an amount of 0.1 part by mass or more and 20 parts by mass or less in 100 parts by mass of the ink for inkjet recording.
Further, two or more kinds of dyes may be used in combination in each of yellow, magenta, cyan and black inks, and in that case, it is preferred that the oxidation potential of 50% or more of the dyes in each ink is nobler than 1.0 V
In particular, in the case of a black dye, since it is difficult to obtain preferred black tone by one kind of dye, it is preferred to mix two or more kinds of dyes. The oxidation potential of each dye used in that case is preferably nobler than 1.0 V. When two or more kinds of dyes are used in combination, it is preferred that the total of respective contents is in the above range.

In the invention, the fact that magenta and/or cyan ink has two or more inks having the same hue and different in density of the dye is advantageous in obtaining an image of high quality.
In the invention, it is preferred that every dye used in each of dark and light inks has oxidation potential of nobler than 1.0 V, more preferably nobler than 1.1 V, and especially preferably nobler than 1.15.

In the invention, when two or more kinds of different inks are used as inks having the same hue, it is preferable that the ink density of one ink is 0.05 to 0.5 times that of another ink.

For controlling ink properties, polyethyleneimine, polyamines, polyvinylpyrrolidone, polyethylene glycol, cellulose derivatives such as ethyl cellulose and carboxyethyl cellulose, polysaccharides and derivative thereof, other water-soluble polymers, polymer emulsions, cyclodextrin, macrocyclic amines, dendrimers, crown ethers, urea and derivatives thereof, acetamide, etc., may be used.

Examples of the chelating agent include ethylene diamine tetraacetic acid (EDTA), iminodiacetic acid (IDA), ethylene diamine-di(o-hydroxyphenyl acetic acid) (EDDHA), nitrilotriacetic acid (NTA), dihydroxyethyl glycine (DHEG),
trans-1,2-cyclohexanediaminetetraacetic acid (CyDTA);
diethylenetriamine-N,N,N',N',N'-pentaacetic acid (DTPA), and glycol ether diamine-N,N,N',N',-tetraacetic acid (GEDTA).

Examples of a viscosity controlling agent include methylcellulose, ethyl cellulose and derivatives thereof, glycerols, polyglycerin and a polyethylene oxide adduct thereof and a polypropylene oxide adduct thereof, and polysaccharides and derivatives thereof. Specific examples thereof include glucose, fructose, mannite, D-sorbit, dextran, xanthan gum, curdlan, cycloamylose, maltitol, and derivatives thereof.
In order to prevent blur between cyan ink, magenta ink or yellow ink and black ink in an ink set of the invention described later, a pH buffering agent may be added to the inks. Any pH buffering agent may be used insofar as the pH of ink can be stably maintained at 7.0 to 9.5. When the pH of ink is lower than 7.0, blur between colors and uneven coloring are likely to occur, resulting in deteriorated image fixability. When the pH of ink exceeds 9.5, a head member may be damaged. Preferable examples of a pH buffering agent include potassium dihydrogenphosphate/sodium hydroxide, sodium tetraborate/ hydrochloric acid, potassium dihydrogenphosphate/disodium hydrogenphosphate, ammonium chloride/ammonia, trisaminomethane/hydrochloric acid, and combinations of ACES, ADA, BES, Bicine, Bis-Tris, CHES, DISPO, EPPS, HEPES, HEPPSO, MES, MOPS, MOPSO, POPSO, TAPS, TAPSO, TES, and Tricine, which are good buffers, and sodium hydroxide, potassium hydroxide, and ammonia. Among the above, a pH buffering agent containing sodium hydroxide, potassium hydroxide, and ammonia as alkali is particularly preferable. Effects of these pH buffering agents are remarkably demonstrated when the amount of ink drops is from 1 to 20 pl, and preferably 2 to 18 pl. The effects are favorably demonstrated in a thermal ink jet system.

It is preferred that the ink set for use in the forming method of an ink jet image in the invention contains a betaine compound in ink composition of each color, according to necessity, and the betaine compound is especially preferably a betaine-type surfactant having an oil-soluble group. Of betaine compounds, a compound represented by the later-described formula is preferably used in the invention.

It is preferred that betaine compounds preferably used in the invention are betaine-type surfactants having a surface activation property.

The betaine compound used here means a compound having both a cationic site and an anionic site in the molecule.

As the cationic site, a nitrogen atom in an amine-based compound, a nitrogen atom in a hetero-aromatic ring, a boron atom having four bonds to carbons, and a phosphorus atom are exemplified. Of these, a nitrogen atom in an amine-based compound and a nitrogen atom in a hetero-aromatic ring are preferred. Quaternary nitrogen atoms are especially preferred.

As the anionic site, a hydroxyl group, a thio group, a sulfonamido group, a sulfo group, a carboxyl group, an imido group, a phosphoric acid group, and a phosphonic acid group are exemplified. Of these groups, a carboxyl group and a sulfo group are especially preferred. The charge as the molecule at large may be any of cationic, anionic and neutral, but neutral is preferred.

As the betaine compound, a compound represented by the following formula (W-1) is preferably used.

(R)ₚ-N-[L-(COOM)_{q}]ᵣ (W-1)

In formula (W-1), R represents a hydrogen atom, an alkyl group, an aryl group, or a heterocyclic group; L represents a divalent linking group; M represents a hydrogen atom, an alkali metal atom, an ammonium group, a protonated organic amine or a nitrogen-containing heterocyclic group, or a quaternary ammonium ion group, and when M becomes the counter ion of the ammonium ion ofN atom in the formula, M represents a group not present as cation. q represents an integer of 1 or more, and r represents an integer of 1 or more and 4 or less. p represents an integer of 0 or more and 4 or less, and p+r is 3 or 4. When p+r is 4, the N atom becomes a protonated ammonium atom (=N⁺=). When q is 2 or more, COOM may be the same with or different from each other. When r is 2 or more, L-(COOM)q may be the same or different. When p is 2 or more, R may be the same or different.

As the preferred specific examples of the betaine compounds, the compounds disclosed in JP-A No. 2007-138124, paragraphs [0810] to [0822] are exemplified.

The addition amount of the betaine compound may be any amount so long as the effects of the invention are exhibited, and preferably from 0.001 to 50 % by mass in the ink composition, and more preferably from 0.01 to 20 % by mass.

In the forming method of an ink jet image in the invention, cyan ink may contain a colorless water-soluble planar compound having 10 or more delocalization π electrons in one molecule as a bronzing improver. As the preferred specific examples of the bronzing improvers, the compounds disclosed in JP-A No. 2005-105261, paragraphs from [0017] to [0025], and JP-A No. 2006-249275, paragraph [0032] are exemplified.

The preferred addition amount of the bronzing improvers may be any amount so long as the effects of the invention are exhibited, and preferably from 0.001 to 50 % by mass in the ink composition, and more preferably from 0.01 to 20 % by mass.

For the purpose of prevention of color bleeding among cyan, magenta, yellow inks, and black ink in the ink set in the invention these inks may contain a pH buffer. Any pH buffer may be used so long as the pH buffer can stably maintain the pH of the ink from 7.0 to 9.5. When the pH of inks is less than 7.0, bleeding among colors and irregular colors are liable to occur, and fixing ability of images is deteriorated, while when the pH is higher than 9.5, there are cases where members of the head are damaged. As the examples of pH buffers, potassium dihydrogenphosphate/sodium hydroxide, sodium tetraborate/hydrochloric acid, potassium dihydrogenphosphate/disodium hydrogenphosphate, ammonium chloride/ammonia, trisaminomethane/hydrochloric acid, and combinations of sodium hydroxide, potassium hydroxide or ammonia with good buffer, such as ACES, ADA, BES, Bicine, Bis-Tris, CHES, DISPO, EPPS, HEPES, HEPPSO, MES, MOPS, MOPSO, POPSO, TAPS,TAPSO, TES, or Tricine are preferably used. Of these pH buffers, pH buffers using sodium hydroxide, potassium hydroxide and ammonia as alkalis are especially preferred. The effect of these pH buffers is especially conspicuous when used in the case where ink drop amount is from 1 to 20 pl, and preferably from 2 to 18 pl. Further, the effect is good in a thermal ink jet system.

The surface tension of cyan, magenta and yellow inks is preferably from 20 to 70 mN/m at 20°C, and more preferably from 25 to 60 mN/m. When the surface tension is lower than 20 mN/m, bleeding on paper is conspicuous and it is difficult to obtain stable ejection. While when the surface tension is greater than 70 mN/m, osmosis of the ink into paper does not occur sufficiently, and a color developing property of second colors such as blue, red, green and the like is deteriorated to show a tendency of not good. When the surface tension of black ink at 20°C is lower than the surface tension of any of cyan, magenta and yellow inks, the effect of the invention is exhibited more conspicuously.

The viscosity of cyan, magenta, yellow and black inks is preferably 30 mPa˙s or less at 20°C in common to all the inks, and more preferably from 1.5 to 20 mPa·s, by which best result can be obtained. When the viscosity is lower than 1.5 mPa·s, ejection stability is difficult to obtain, and when it is higher than 20 mPa·s, clogging is liable to occur to show a tendency of not good.

### [Ink Set]

An ink set for use in the forming method of an ink jet image in the invention has at least yellow ink containing a water-soluble yellow dye, magenta ink containing a water-soluble magenta dye, cyan ink containing a water-soluble cyan dye, and black ink containing a water-soluble black dye.
Further, if necessary, the ink set in the invention may use inks other than the yellow, magenta, cyan and black inks.
Inks such as yellow ink and the like contained in the ink set are the same as the inks described in the item of ink for ink jet recording, and preferred examples are also the same.

### [Forming Method of Ink Jet Image]

The method for forming an ink jet image in the invention comprising forming an image by using an apparatus to form an image on an image-receiving material by an ink jet system with an ink for ink jet recording of the invention and, after image formation, discharge and stack a plurality of the image-receiving materials respectively having images formed thereon.

When images are continuously formed by an ink jet system, an image is formed by applying ink for ink jet recording to the surface of a certain image-receiving material (hereinafter referred to as "the n^{th} image-receiving material", n means an integer of 1 or more), and then an image is formed on the surface of the next image-receiving material (hereinafter referred to as "the n+1^{th} image-receiving material") in the similar manner, and then the n+1^{th} image-receiving material is stacked on the n^{th} image-receiving material. In the similar manner, images are formed so forth on, the first...the n^{th}...the n+1^{th} ..., and stacked.

Here, when the n+1^{th} image-receiving material is stacked after image formation of the n^{th} image-receiving material, there are generated the part having superposition (stacked part) and the part not having superposition (non-stacked part) in the n^{th} image-receiving material and the n+1^{th} image-receiving material, by which difference in density and difference in hue are caused in the stacked part and the non-stacked part. In particular, when the image-receiving material is stacked just after recording, difference in density and difference in hue are conspicuous by the superposition of the upper image-receiving material on the surface of the image-receiving layer of the lower image-receiving material.

When the time is short from termination of image formation of the n^{th} image-receiving material until the stack of the n+1^{th} image-receiving material on the n^{tn} image-receiving material after image formation of the n+1^{th} image-receiving material (the lapse of time until stack after image formation), difference in density and difference in hue are particularly conspicuous. That is, difference in density and difference in hue become conspicuous by high speed printing.

The method for forming an ink jet image in the invention makes it possible to form an ink jet image little in difference in density and difference in hue by the formation of an image with the ink for ink jet recording of the invention.
When the lapse of time until stack after image formation is within 30 seconds, difference in density and difference in hue is very small, and preferably smaller when the lapse of time is within 10 seconds.

The ink jet recording method of the invention involves supplying energy to the ink composition or the ink composition of the ink set of the invention (hereinafter also merely referred to as an ink composition) to form an image on known image receiving materials, i.e., regular paper and resin-coated paper, such as ink jet-specific paper, film, electrophotographic common paper, cloth, glass, metal, or ceramic, descried in JP-A Nos. 8-169172, 8-27693, 2-276670, 7-276789, 9-323475, 62-238783, 10-153989, 10-217473, 10-235995, 10-337947, 10-217597, and 10-337947. Of these, for exhibiting the effect of the invention to the maximum, the image-receiving materials described later are most preferred.

In forming an image, a polymer latex compound may be used in combination for the purpose of imparting glossiness or water resistance, or improving weatherability. The timing of giving the polymer latex to the image receiving material may be before or after giving a colorant or simultaneously therewith. Accordingly, the receiving site may be in the image receiving paper or in the ink. Alternatively, the polymer latex may be used in the form of a liquid material of the polymer latex alone. Specifically, methods described in Japanese Patent Application Nos. 2000-363090, 2000-315231, 2000-354380, 2000-343944, and 2000-268952 may be preferably used.

Image-receiving materials such as recording paper and recording films for use in forming ink jet images with the inks for ink jet recording in the invention will be described below. The recording paper and recording film which are used for ink jet printing using the ink composition of the invention will be described below. As a support in the recording paper or recording film, those made of a chemical pulp, such as LBKP or NBKP; a mechanical pulp, such as GP, PGW, RMP, TMP, CTMP, CMP, or CGP; or a waste paper pulp such as DIP, to which known additives, such as pigments, binders, sizing agents, fixing agents, cationic agents, and paper strength additives, are added, as required, and produced by various devices such as a fourdrininer paper machine and a cylinder paper machine may be employed. Besides these supports, synthetic papers and plastic film sheets may also be employed. The support preferably has a thickness of from 10 to 250 µm and a basis weight of from 10 to 250 g/m². The support may be provided directly with an ink receiving layer or a backcoat layer, or may be provided with an ink receiving layer or a backcoat layer after size pressing with starch, polyvinyl alcohol, etc., or providing an anchor coat layer. Further, the support may be flattened by a calendering device, such as a machine calender, a TG calender, or a soft calender. In the invention, paper or plastic film, the both surfaces of which are laminated with polyolefin (such as polyethylene, polystyrene, polyethylene terephthalate, polybutene, and copolymers thereof), are more preferably used as the support. It is preferable to add a white pigment (e.g., titanium white and zinc oxide) or a toning dye (e.g., cobalt blue, ultramarine, and neodymium oxide) to polyolefin.

In the ink receiving layer to be provided on the support, a pigment and an aqueous binder are contained. As the pigment, white pigments are preferable, and examples thereof include white inorganic pigments, such as calcium carbonate, kaolin, talc, clay, diatomaceous earth, synthetic amorphous silica, aluminum silicate, magnesium silicate, calcium silicate, aluminum hydroxide, alumina, lithopone, zeolite, barium sulfate, calcium sulfate, titanium dioxide, zinc sulfide, and zinc carbonate; and organic pigments, such as styrene based pigments, acrylic pigments, urea resins, and melamine resins. As the white pigment to be contained in the ink receiving layer, porous inorganic pigments are preferable, and synthetic amorphous silica having a large pore area is particularly preferable. With respect to the synthetic amorphous silica, any of anhydrous silicate obtained by a dry production process and hydrated silicate obtained by a wet production process may be employed. The use of hydrated silicate is particularly preferable.

Examples of the aqueous binder to be contained in the ink receiving layer include water-soluble high-molecular compounds, such as polyvinyl alcohol, silanol-modified polyvinyl alcohol, starch, cationic starch, casein, gelatin, carboxymethylcellulose, hydroxyethylcellulose, polyvinylpyrrolidone, polyalkylene oxides, and polyalkylene oxide derivatives; and water-dispersible high-molecular compounds, such as a styrene-butadiene latex and acrylic emulsions. The aqueous binder can be used singly or in combination of two or more kinds. In the invention, among the above, polyvinyl alcohol and silanol-modified polyvinyl alcohol are particularly preferable from the viewpoint of adhesion to pigments and resistance to peeling of the ink receiving layer.
The ink receiving layer may contain a mordant, a waterproofing agent, a light fastness improver, a surfactant, and other additives in addition to the pigment and aqueous binder.

It is preferable that the mordant to be added in the ink receiving layer be immobilized. For achieving this purpose, a polymer mordant is preferably used.
The polymer mordant is described in JP-A Nos. 48-28325, 54-74430, 54-124726, 55-22766, 55-142339, 60-23850, 60-23851, 60-23852, 60-23853, 60-57836, 60-60643, 60-118834, 60-122940, 60-122941, 60-122942, 60-235134, and 1-161236, and United States Patent Nos. 2484430, 2548564, 3148061, 3309690, 4115124, 4124386, 4193800, 4273853, 4282305, and 4450224. Image receiving materials containing a polymer mordant described in JP-A No. 1-161236, pp. 212 to 215 are particularly preferable. When the polymer mordant described in the patent publication is used, images having excellent image quality are obtained, and the resistance to light of an image is improved.

The waterproofing agent is effective for waterproofing an image, and as the waterproofing agent, cationic resins are preferable. Examples of cationic resins include polyamidepolyamine epichlorohydrin, polyethyleneimine, polyaminesulfone, a dimethyldiallyammonium chloride polymer, cationic polyacrylamide, and colloidal silica. Among these cationic resins, polyamidepolyamine epichlorohydrin is particularly preferable. The content of the cationic resin is preferably from 1 to 15% by weight, and particularly preferably from 3 to 10% by weight based on the total solid content of the ink receiving layer.

Examples of the light fastness improver include zinc sulfate, zinc oxide, hindered amine based antioxidants, and benzophenone- or benzotriazole-based ultraviolet absorbers. Among the above, zinc sulfate is particularly preferable.

The surfactant functions as a coating aid, a release improver, a slipperiness improver, or an antistatic agent. The surfactant is described in JP-A Nos. 62-173463 and 62-183457. An organic fluoro compound may be used in place of the surfactant. It is preferable that the organic fluoro compound be hydrophobic. Examples of the organic fluoro compound include fluorine based surfactants, oily fluorine based compounds (e.g., fluoro oils), and solid-state fluoro compound resins (e.g., tetrafluoroethylene resins). The organic fluoro compounds are described in JP-B No. 57-9053 (columns 8 to 17), and JP-A Nos. 61-2099 and 62-135826. Examples of other additives to be added to the ink receiving layer include pigment dispersants, thickeners, antifoaming agents, dyes, fluorescent brighteners, antiseptics, pH adjustors, matting agents, and hardeners. The ink receiving layer may be of a single-layer or double-layer structure.

The recording paper or recording film may be provided with a backcoat layer. Examples of components that may be added to the backcoat layer include white pigments, aqueous binders, and other components. Examples of white pigments that are contained in the backcoat layer include white inorganic pigments, such as light calcium carbonate, heavy calcium carbonate, kaolin, talc, calcium sulfate, barium sulfate, titanium dioxide, zinc oxide, zinc sulfide, zinc carbonate, satinwhite, aluminum silicate, diatomaceous earth, calcium silicate, magnesium silicate, synthetic amorphous silica, colloidal silica, colloidal alumina, pseudoboehmite, aluminum hydroxide, alumina, lithopone, zeolite, hydrated halloysite, magnesium carbonate, and magnesium hydroxide; and organic pigments, such as styrene based plastic pigments, acrylic plastic pigments, polyethylene, microcapsules, urea resins, and melamine resins.

Examples of aqueous binders that are contained in the backcoat layer include water-soluble high-molecular compounds, such as styrene/maleic acid salt copolymers, styrene/acrylic acid salts copolymers, polyvinyl alcohol, silanol-modified polyvinylalcohol, starch, cationic starch, casein, gelatin, carboxymethyl cellulose, hydroxyethyl cellulose, and polyvinylpyrrolidone; and water-dispersible high-molecular compounds, such as a styrene-butadiene latex and acrylic emulsions. Examples of other components that are contained in the backcoat layer include antifoaming agents, foam inhibitors, dyes, fluorescent brighteners, antiseptics, and waterproofing agents.

In the structural layers (including the backcoat layer) of the ink jet recording paper or recording film, a polymer latex may be added. The polymer latex is used for the purpose of improving film physical properties, such as dimensional stabilization, curl prevention, adhesion prevention, and cracking prevention of film. The polymer latex is described in JP-A Nos. 62-245258, 62-136648, and 62-110066. When a polymer latex having a low glass transition temperature (40°C or lower) is added to a layer containing a mordant, it is possible to prevent cracking or curl of the layer. Even when a polymer latex having a high glass transition temperature is added to the backcoat layer, the layer may be prevented from curling.

The inks for ink jet recording in the invention can be used with no limitation on the ink jet recording system and used in conventionally well-known methods, such as a charge control system of ejecting inks by making use of electrostatic induction, a drop-on-demand system making use of vibration pressure of a piezo element (a pressure pulse system), an acoustic ink jet system of changing electric signal to acoustic beam, irradiating ink and ejecting the ink by making use of radiation pressure, and a thermal ink jet system of heating ink to form bubbles and utilizing generated pressure. The ink jet recording system includes a method of ejecting low density ink, what is called photo-ink, in a small volume and in large quantities, a method of improving images by using a plurality of inks substantially the same in hue and different in density, and a method of using colorless transparent ink.

The present inventors have examined in detail the effects of water-soluble organic solvents and additives contained in inks that affect changes of hue and printing density after recording, and have found that the above problems can be solved by using more than a certain amount of a water-soluble organic solvent having specific physical properties in ink, thus the invention has been completed. This effect is more conspicuous when inks different in density used in recent years for increasing color reproduction are used.
Further, by using water-soluble dyes having specific physical properties, it has become possible to obtain images satisfying good hue, light fastness and gas fastness (especially ozone gas).
The specific embodiments of the invention will be enumerated below.
<1> A method for forming an ink jet image, the method comprising forming an image by using an apparatus to form an image on an image-receiving material by an ink jet system with an ink for ink jet recording containing at least a water-soluble dye, water and a water-soluble organic solvent and, after image formation, discharge and stack a plurality of the image-receiving materials respectively having images formed thereon, wherein the water-soluble organic solvent is selected from a water-soluble diol and/or a pyrrolidone derivative each having an I/O value of 3.0 or more, and is contained in an amount of 40 % by mass or more of the entire amount of water-soluble organic solvents in the ink for ink jet recording.
<2> The method for forming an ink jet image according to claim 1, wherein the stacking is performed within 30 seconds after image formation.
<3> The method for forming an ink jet image described in the above item <1> or <2> wherein the stacking is performed within 10 seconds after image formation.
<4> The method for forming an ink jet image described in any of the above items <1> to <3>, wherein the water-soluble organic solvent comprises a water-soluble diol having an I/O value of 3.0 or more and the water-soluble diol having an I/O value of 3.0 or more contains one or more selected from ethylene glycol, diethylene glycol, triethylene glycol, propylene glycol and dipropylene glycol.
<5> The method for forming an ink jet image described in any of the above items <1> to <4>, using an ink set including a plurality of the inks for ink jet recording containing a water-soluble dye, water and a water-soluble organic solvent, wherein the plurality of inks for ink jet recording comprise yellow ink containing a water-soluble yellow dye, magenta ink containing a water-soluble magenta dye, cyan ink containing a water-soluble cyan dye, and black ink containing a water-soluble black dye.

<6> The method for forming an ink jet image described in the above item <5>, wherein the magenta ink and/or cyan ink comprises two or more inks of the same hue and different dye densities.
<7> The method for forming an ink jet image described in the above item <5> or <6>, wherein 50 % by mass or more of the dye contained in each ink of the ink set has an oxidation potential nobler than 1.0 V (vs SCE).
<8> The method for forming an ink jet image described in any of the above items <5> to <7>, wherein 50 % by mass or more of the cyanine dye is a water-soluble phthalocyanine dye having a structure represented by formula (C-1):

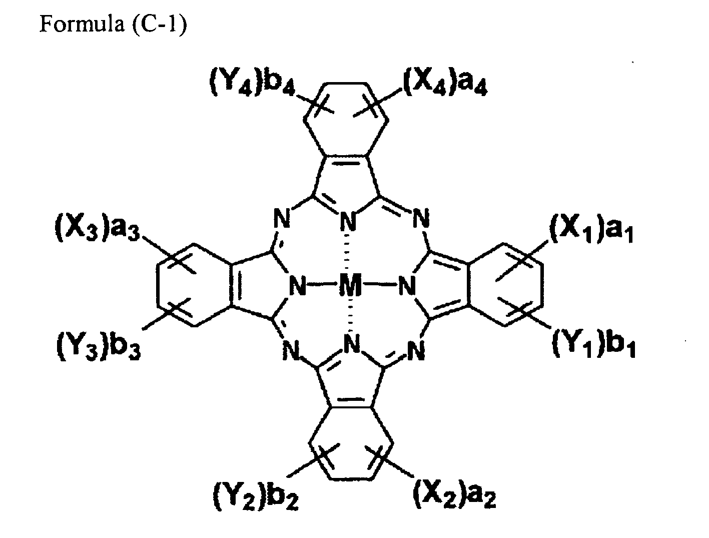

wherein each of X₁, X₂, X₃ and X₄ independently represents any of-SO-Z, -SO₂-Z, -SO₂NV₁V₂, -CONV₁V₂, -CO₂Z, -CO-Z, or a sulfo group; Z independently represents a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group; V₁ and V₂, which may be the same or different, each represent a hydrogen atom, a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group; each of Y₁, Y₂, Y₃ and Y₄ independently represents a hydrogen atom, a halogen atom, an alkyl group, a cycloalkyl group, an akenyl group, an aralkyl group, an aryl group, a heterocyclic group, a cyano. group, a hydroxyl group, a nitro group, an amino group, an alkylamino group, an alkoxy group, an aryloxy group, an amido group, an arylamino group, a ureido group, a sulfamoylamino group, an alkylthio group, an arylthio group, an alkoxycarbonylamino group, a sulfonamido group, a carbamoyl group, a sulfamoyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imido group, a heterocyclic thio group, a phosphoryl group, an acyl group, or an ionic hydrophilic group, and each group may further have a substituent; a₁ to a₄ and b₁ to b₄ respectively represent substituents of X₁ to X₄ and Y₁ to Y₄, each of a₁ to a₄ independently represents an integer of from 0 to 4, provided that all of a₁ to a₄ do not represent 0 at the same time, and each of b₁ to b₄ independently represents an integer of from 0 to 4; and M represents a hydrogen atom, a metal atom or an oxide thereof, a hydroxide, or a halide, provided that at least one of X₁, X₂, X₃, X₄, Y₁, Y₂, Y₃ or Y₄ represents an ionic hydrophilic group, or a group having an ionic hydrophilic group as a substituent.
<9> The method for forming an ink jet image described in any of the above items <5> to <8>, wherein 50 % by mass or more of the yellow dye is a water-soluble azo dye having a structure represented by formula (Y-1):

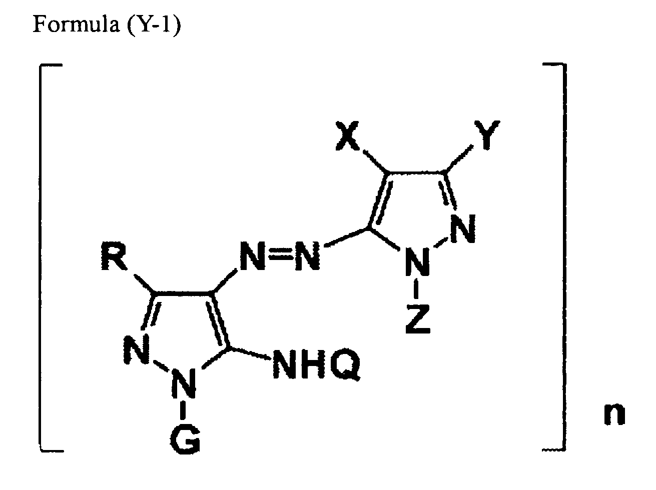

wherein G represents a heterocyclic group; n represents an integer of from 1 to 3; when n is 1, each of R, X, Y, Z, Q and G represents a monovalent substituent; when n is 2, each of R, X, Y, Z, Q and G represents a monovalent or divalent substituent, and at least one of R, X, Y, Z, Q and G represents a divalent substituent; and when n is 3, each of R, X, Y, Z, Q and G represents a monovalent, divalent, or trivalent substituent, and at least two of R, X, Y, Z, Q and G represent a divalent substituent or at least one of R, X, Y, Z, Q and G represents a trivalent substituent.
<10> The method for forming an ink jet image described in any of the above items <5> to <9>, wherein 50 % by mass or more of the magenta dye is a water-soluble azo dye having a structure represented by formula (M-1):

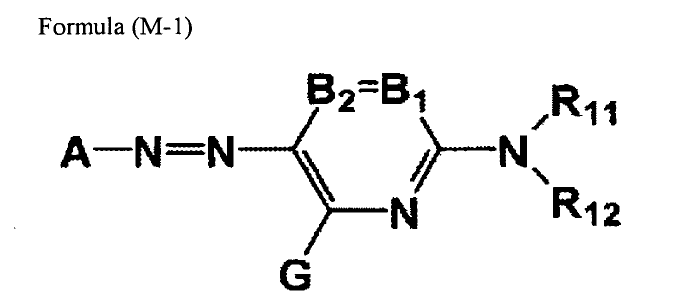

wherein A represents a residue of a 5-membered heterocyclic diazo component A-NH₂; each of B₁ and B₂ represents -CR₁₃= or -CR₁₄=, or either one represents a nitrogen atom and the other represents -CR₁₃= or -CR₁₄=; each of R₁₁ and R₁₂ independently represents a hydrogen atom, an alkyl group, a cycloalkyl group, an alkenyl group, an alkynyl group, an aralkyl group, an aryl group, a heterocyclic group, an acyl group, an alkoxycarbonyl group, an aryloxycarbonyl group, a carbamoyl group, an alkylsulfonyl group, an arylsulfonyl group, or a sulfamoyl group, and each group may further have a substituent; each of G, R₁₃ and R₁₄ independently represents a hydrogen atom, a halogen atom, an alkyl group, an alkenyl group, an alkynyl group, an aralkyl group, an aryl group, a heterocyclic group, a cyano group, a carboxyl group, a carbamoyl group, an alkoxycarbonyl group, an aryloxycarbonyl group, an acyl group, a hydroxyl group, an alkoxy group, an aryloxy group, a silyloxy group, an acyloxy group, a carbamoyloxy group, a heterocyclic oxy group, an alkoxycarbonyloxy group, an aryloxycarbonyloxy group, an amino group substituted with an alkyl group or an aryl group or a heterocyclic group, an acylamino group, a ureido group, a sulfamoylamino group, an alkoxycarbonylamino group, an aryloxycarbonylamino group, an alkylsulfonylamino group, an arylsulfonylamino group, a nitro group, an alkylthio group, an arylthio group, an alkylsulfonyl group, an arylsulfonyl group, an alkylsulfinyl group, an arylsulfinyl group, a sulfamoyl group, a heterocyclic thio group, or an ionic hydrophilic group, and each group may further have a substituent; and R₁₃ and R₁₁, or R₁₁ and R₁₂ may be bonded to form a 5- or 6-membered ring, provided that formula (M-1) has at least one ionic hydrophilic group.
<11> The method for forming an ink jet image described in any of the above items <5> to <10>, wherein 50 % by mass or more of the black dye is a water-soluble azo dye having a structure represented by formula (B-1):

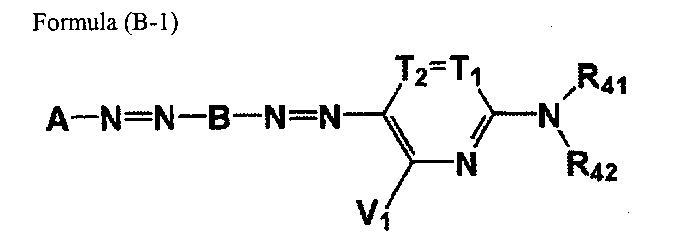

wherein each of A and B independently represents an aromatic group that may be substituted, or a heterocyclic group that may be substituted, in which A is a monovalent group and B is a divalent group; each of T₁ and T₂ represents =CR₄₃- or -CR₄₄=, or either one represents a nitrogen atom and the other represents =CR₄₃- or -CR₄₄=; each of V₁, R₄₃ and R₄₄ independently represents a hydrogen atom, a halogen atom, an alkyl group, an alkenyl group, an alkynyl group, an aralkyl group, an aryl group, a heterocyclic group, a cyano group, a carboxyl group, a carbamoyl group, an alkoxycarbonyl group, an aryloxycarbonyl group, a heterocyclic oxycarbonyl group, an acyl group, a hydroxyl group, an alkoxy group, an aryloxy group, a heterocyclic oxy group, a silyloxy group, an acyloxy group, a carbamoyloxy group, an alkoxycarbonyloxy group, an aryloxycarbonyloxy group, an amino group (including an alkylamino group, an arylamino group, and a heterocyclic amino group), an acylamino group, a ureido group, a sulfamoylamino group, an alkoxycarbonylamino group, an aryloxycarbonylamino group, an alkylsulfonylamino group, an arylsulfonylamino group, a heterocyclic sulfonylamino group, a nitro group, an alkylthio group, an arylthio group, a heterocyclic thio group, an alkylsulfonyl group, an arylsulfonyl group, a heterocyclic sulfonyl group, an alkylsulfinyl group, an arylsulfinyl group, a heterocyclic sulfinyl group, a sulfamoyl group, or a sulfo group, and each group may further be substituted; each of R₄₁ and R₄₂ independently represents a hydrogen atom, an alkyl group, an alkenyl group, an alkynyl group, an aralkyl group, an aryl group, a heterocyclic group, an acyl group, an alkoxycarbonyl group, an aryloxycarbonyl group, a carbamoyl group, an alkylsulfonyl group, an arylsulfonyl group, or a sulfamoyl group, and each group may further have a substituent, provided that R₄₁ and R₄₂ do not represent a hydrogen atom at the same time; and R₄₃ and R₄₁, or R₄₁ and R₄₂ may be bonded to form a 5- or 6-membered ring.
<12> The method for forming an ink jet image as described in any of the above items <1> to <11>, wherein the image-receiving material comprises a support having provided thereon an ink-receiving layer containing porous white inorganic pigment particles and the image is formed on the ink-receiving layer side of the image-receiving material.

### EXAMPLES

The invention will be described more specifically with reference to examples, but the scope of the invention is by no means restricted to the following specific examples. In the examples "parts" and "%" are based on mass unless otherwise indicated.

### EXAMPLE 1

### <Manufacture of Magenta Ink>

### -Preparation of ink solution for magenta ink-

Ion exchange water was added to the following components to make 1 liter, and the mixture was stirred for 1 hour with heating at 30 to 40°C. After that, the solution was filtered under reduced pressure through a micro filter having an average pore diameter of 0.25 µm to prepare ink solution for magenta ink (M-101).

### [Prescription of Magenta Ink M-101]

### (Solids Content)

· Magenta dyestuff (compound MAGENTA-1 disclosed in JP-A No. 2007-138124, paragraph [0887]) 30.0 g/liter
· PROXEL XL-2 (manufactured by Avecia Inkjet Limited) 1.0 g/liter
· Urea 48 g/liter

### (Liquid Components)

· Glycerol 84 g/liter
· Triethylene glycol 122 g/liter
· betaine compound (Betaine-1, disclosed in JP-ANo. 2007-138124, paragraph [0901] 17 g/liter

### <Printing of Magenta Image>

Magenta ink M-101 was filled in DRY MINILAB 400 ink cartridge (manufactured by Fuji Photo Film Co., Ltd.), and printing was performed at 23°C 50% RH with ink jet image-receiving paper "Kassai" roll paper (manufactured by Fuji Photo Film Co., Ltd.) of a size of 102 mm × 152 mm by processing speed of 650 sheets per an hour. A solid image of a single color was formed by printing with magenta ink of image density of 100% by DRY MINILAB 400. At this time, the drying unit of the printer was stopped during printing, and on about half of the printed surface (part b) was superposed the next discharged paper immediately after printing, and the printed paper was dried for 24 hours with the remaining half (part a) being exposed to atmospheric condition. After that, superposed paper was removed and image density was measured.

### [Evaluation of Printing Density]

The densities of part a and part b of the 100% print paper were measured with reflection densitometer X-RITE 310. The ratio of density of part b to part a (C_{b/a}) was calculated. The criteria of evaluation are as follows.
A: The case where C_{b/a} is 0.95 or more and 1.05 or less.
B: The case where C_{b/a} is less than 0.95 and 0.90 or more.
C: The case where C_{b/a} is less than 0.90.
The nearer C_{b/a} approaches 1, the more uniform is the print density regardless of drying condition after printing.

The results of print density of M-101 were as follows.
Density Cₐ of part a: 1.81
Density C_{b} of part b: 1.76
(C_{b/a}): 0.97 ... A

I/O values of triethylene glycol and glycerol used in M-101 as organic solvents are as follows.
· Triethylene glycol (TEG): 16.0
· Glycerol (Gly): 5.0

### EXAMPLES 2 TO 9 AND COMPARATIVE EXAMPLES 1 TO 6

Magenta inks M-102 to 115 were manufactured in the same manner as in Example 1 except that 122 g of triethylene glycol was changed as shown in Table 2.

I/O values of the organic solvents used in the manufacture of magenta ink M-102 to M-115 are shown below.

### (Organic solvent included in the invention)

· Diethylene glycol (DEG): 8.7
· Ethylene glycol (EG): 5.0
· Propylene glycol (PG): 3.3
· Dipropylene glycol (DPG): 3.7
· 2-Pyrrolidone: 3.5

### (Organic solvent not included in the invention)

· Triethylene glycol monobutyl ether (TEGmBE): 7.6
· Diethylene glycol monobutyl ether (DEGmBE): 5.3
· 1,4-Butanediol: 2.5
· 1,6-Hexanediol: 1.67

### <Printing of Magenta Image>

Print samples were manufactured in the same manner as in Example 1 by using inks M-102 to M-115, and densities of part a and part b were evaluated. The results obtained are shown in Table 2 below.

**TABLE 2**

| Example No. | Ink | (1) Water-Soluble Diol or 2-Pyrrolidone Derivative having I/O Value of 3.0 or more | | | Solvent Other Than (1) | | Ca | Cb | Cb/Ca | Evaluation | Remarks |
|---|---|---|---|---|---|---|---|---|---|---|---|
| | | Solvent | Amount Used | Content in All Solvents (% by mass) | Solvent | Amount Used | | | | | |
| Example 1 | M-101 | TEG | 122 | 59 | Gly | 84 | 1.81 | 1.76 | 0.97 | A | Invention |
| Example 2 | M-102 | DEG | 122 | 59 | Gly | 84 | 1.82 | 1.74 | 0.96 | A | Invention |
| Example 3 | M-103 | EG | 122 | 59 | Gly | 84 | 1.81 | 1.73 | 0.96 | A | Invention |
| Example 4 | M-104 | PG | 122 | 59 | Gly | 84 | 1.83 | 1.76 | 0.96 | A | Invention |
| Example 5 | M-105 | DPG | 122 | 59 | Gly | 84 | 1.81 | 1.73 | 0.96 | A | Invention |
| Example 6 | M-106 | 2-Pyrrolidone | 122 | 59 | Gly | 84 | 1.82 | 1.73 | 0.95 | A | Invention |
| Comparative Example 1 | M-107 | - | - | 0 | 1,4-Butanediol, Gly | 122, 84 | 1.84 | 1.52 | 0.83 | C | Comparison |
| Comparative Example 2 | M-108 | - | - | 0 | 1,6-Hexanediol, Gly | 122, 84 | 1.87 | 1.48 | 0.79 | C | Comparison |
| Comparative Example 3 | M-109 | - | - | 0 | TEGmBE, Gly | 122,84 | 1.84 | 1.65 | 0.9 | B | Comparison |
| Comparative Example 4 | M-110 | - | - | 0 | DEGmBE, Gly | 122,84 | 1.85 | 1.46 | 0.79 | C | Comparison |
| Example 7 | M-111 | TEG | 92 | 45 | TEGmBE, Gly | 30, 84 | 1.82 | 1.74 | 0.96 | A | Invention |
| Comparative Example 5 | M-112 | TEG | 72 | 35 | DEGmBE, Gly | 50, 84 | 1.81 | 1.68 | 0.93 | B | Comparison |
| Example 8 | M-113 | PG | 92 | 45 | TEGmBE, Gly | 30, 84 | 1.81 | 1.72 | 0.95 | A | Invention |
| Comparative Example 6 | M-114 | TEG | 72 | 35 | DEGmBE, Gly | 50,84 | 1.83 | 1.65 | 0.9 | B | Comparison |
| Example 9 | M-115 | EG, 2-Pyrrolidone | 72, 50 | 59 | Gly | 84 | 1.82 | 1.76 | 0.97 | A | Invention |

From the results shown in Table 2, it can be seen that good results were obtained when water-soluble diol or pyrrolidone derivative having an I/O value of 3.0 or more was used 40 wt% or more of the entire organic solvents. As can be seen from the results of M-107 and 108, sufficient effect could not be obtained when I/O value was less than 3.0 even if the same water soluble diol was used. From the results of M-109 and 110, the effect was not sufficient if the water-soluble organic solvent was not water-soluble diol even when I/O value was 3.0 or more. Further, from the results of M-111 to 114, it can be seen that the obtained effect was insufficient when the use amount of the organic solvents was less than 40 wt% of the entire organic solvents.

### EXAMPLES 10 TO 12 AND COMPARATIVE EXAMPLES 7 TO 9

### <Preparation of various color inks>

Yellow inks Y-101 and 102, cyan inks C-101 and 102, and black inks Bk-101 and 102 were prepared in the manner as described below.

### (Preparation of Yellow Ink Y-101)

Ion exchange water was added to the following components to make 1 liter, and the mixture was stirred for 1 hour with heating at 30 to 40°C. After that, the solution was filtered under reduced pressure through a micro filter having an average pore diameter of 0.25 µm to prepare yellow ink (Y-101).

### [Prescription of Yellow Ink Y-101]

### (Solids Content)

· Yellow dye (potassium salt of yellow dye Y-1 represented by the following structural formula) 60.0 g/liter
· PROPEL XL-2 (manufactured by Avecia Inkjet Limited) 1.0 g/liter

### (Liquid Components)

· Glycerol 81 g/liter
· Triethylene glycol 96 g/liter
· Triethylene glycol monobutyl ether 94 g/liter
· OLEFINE E1010 (manufactured by Shin-Etsu Chemical Co., Ltd.) 20 g/liter

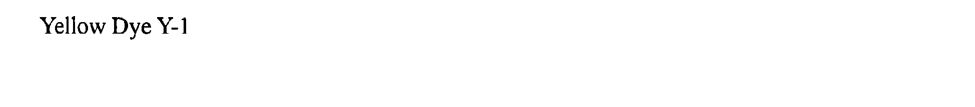

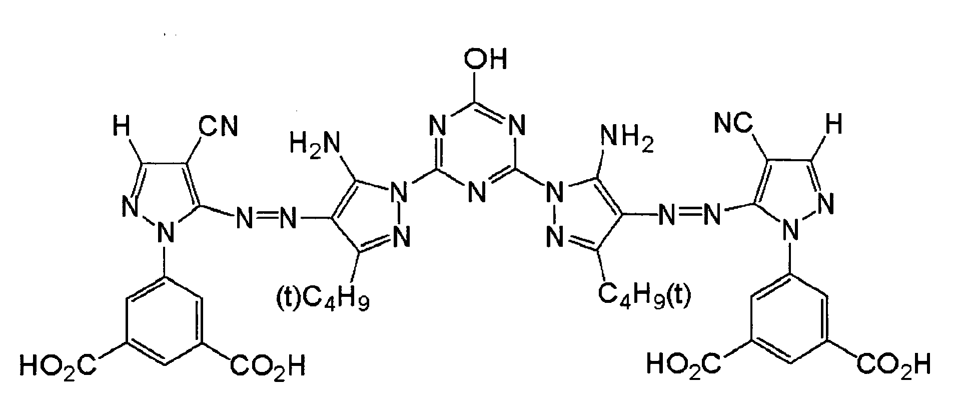

### (Preparation of Yellow Ink Y-102)

Yellow ink Y-102 was prepared in the same manner as in the preparation of yellow ink Y-101 1 except for changing 96 g/liter of triethylene glycol and 94 g/liter of triethylene glycol monobutyl ether to 190 g/liter of diethylene glycol.

### (Preparation of Cyan Ink C-101)

Ion exchange water was added to the following components to make 1 liter, and the mixture was stirred for 1 hour with heating at 30 to 40°C. After that, the solution was filtered under reduced pressure through a micro filter having an average pore diameter of 0.25 µm to prepare cyan ink (C-101).

(Prescription of Cyan Ink C-101)

### (Solids Content)

· Cyan dye (cyan dye C-1 represented by the following structural formula) 54.0 g/liter
· Urea 41.0 g/liter
· PROXEL XL-2 (manufactured by Avecia Inkjet Limited) 1.0 g/liter
(Liquid Components)
· Glycerol 91 g/liter
· Triethylene glycol 18 g/liter
· Triethylene glycol monobutyl ether 97 g/liter
· 1,2-Hexanediol 12 g/liter
· 2-Pyrrolidone 27 g/liter
· OLFINE E1010 (manufactured by Shin-Etsu Chemical Co., Ltd.) 10 g/liter

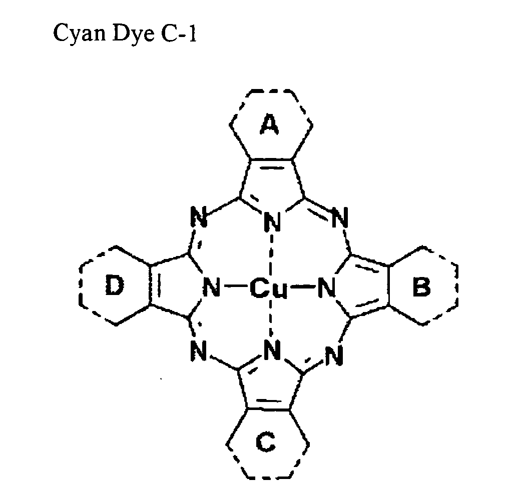

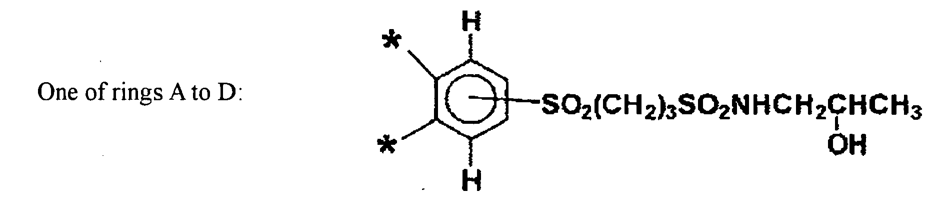

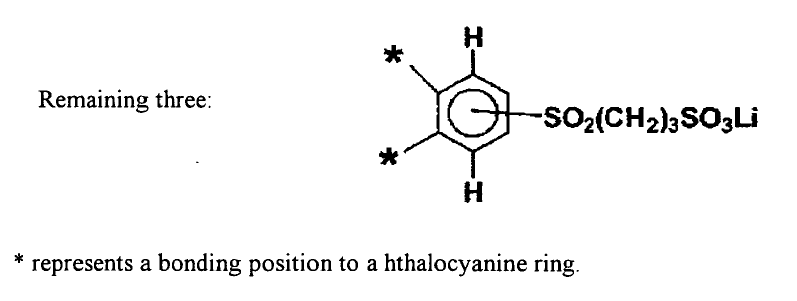

### (Preparation of Cyan Ink C-102)

Cyan ink C-102 was prepared in the same manner as in the preparation of cyan ink C-101 except for changing 18 g/liter of triethylene glycol, 97 g/liter of triethylene glycol monobutyl ether, 12 g/liter of 1,2-hexanediol, and 27 g/liter of 2-pyrrolidone to 127 g/liter of diethylene glycol and 27 g/liter of 1,2-hexanediol.

### (Preparation of Black Ink Bk-101)

Ion exchange water was added to the following components to make 1 liter, and the mixture was stirred for 1 hour with heating at 30 to 40°C. After that, the solution was filtered under reduced pressure through a micro filter having an average pore diameter of 0.25 µm to prepare black ink (Bk-101).

### [Prescription of Black Ink Bk-101]

### (Solids Content)

· Black dye 1 (main dye Bk-1 for black shown below) 62.0 g/liter
· Black dye 2 (complementary dye Bk-2 for black shown below) 10.0 g/liter
· PROXEL XL-2 (manufactured by Avecia Inkjet Limited) 1.0 g/liter

### (Liquid Components)

· Glycerol 83 g/liter
· Triethylene glycol 11 g/liter
· Triethylene glycol monobutyl ether 84 g/liter
· 1,2-Hexanediol 16 g/liter
· OLFINE E1010 (manufactured by Shin-Etsu Chemical Co., Ltd.) 10 g/liter

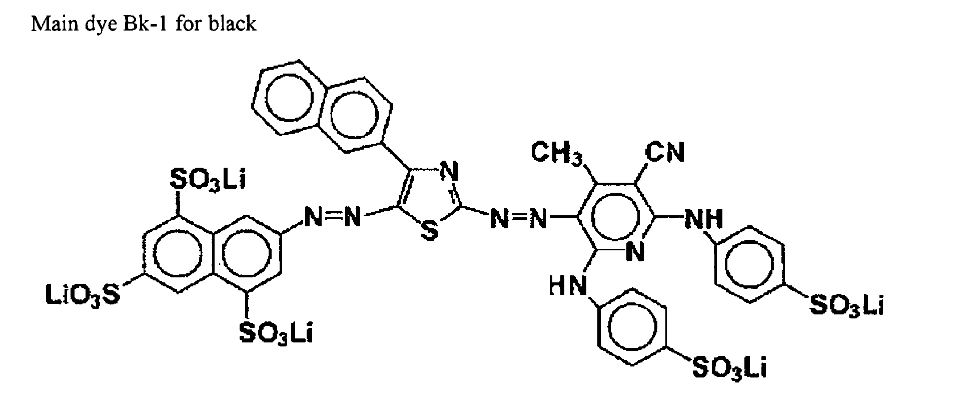

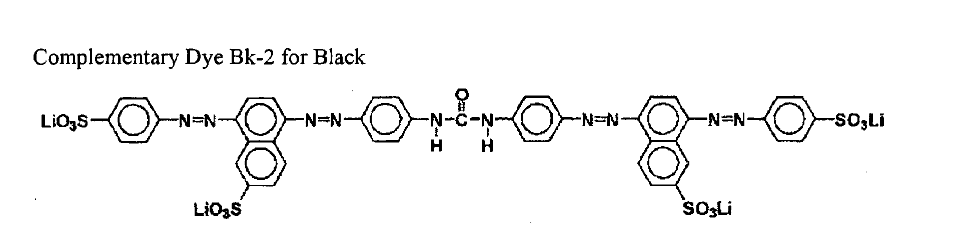

### (Preparation of Black Ink Bk-102)

Black ink Bk-102 was prepared in the same manner as in the preparation of black ink Bk-101 except for changing 11 g/liter of triethylene glycol, 84 g/liter of triethylene glycol monobutyl ether, and 16 g/liter of 1,2-hexanediol to 111 g/liter of propylene glycol.

### <Printing of Yellow Image, Cyan Image and Black Image, and Evaluation of Print Density>

A yellow image, a cyan image and a black image were printed in the same manner as in Example 1 by using yellow inks Y-101 1 and 102, cyan inks C-101 and 102, and black inks Bk-101 and 102 obtained above, and samples were processed in the same manner as in Example 1, and print density of each sample was evaluated. The results obtained are shown in Table 3 below.

**TABLE 3**

| Example No. | Ink No. | (1) Water-Soluble Diol or 2-Pyrrolidone Derivative having I/O Value of 3.0 or more | | | Solvent Other Than (1) | | Ca | Cb | Cb/Ca | Evaluation | Remarks |
|---|---|---|---|---|---|---|---|---|---|---|---|
| | | Solvent | Amount Used (g/liter) | Content in All Solvents (% by mass) | Solvent | Amount Used (g/liter) | | | | | |
| Comparative Example 7 | Y-101 | TEG | 96 | 35 | Gly, TEGmBE | 81, 94 | 1.65 | 1.31 | 0.79 | C | Comparison |
| Example 10 | Y-102 | DEG | 190 | 70 | GLY | 81 | 1.62 | 1.55 | 0.96 | A | Invention |
| Comparative Example 8 | C-101 | TEG, 2-Pyrrolidone | 18,27 | 18 | Gly, TEGMBE, 1,2-Hexanediol | 91, 97, 12 | 1.83 | 1.54 | 0.84 | C | Comparison |
| Example 11 | C-102 | DEG | 127 | 52 | Gly, 1,2-Hexanediol | 91, 27 | 1.81 | 1.75 | 0.97 | A | Invention |
| Comparative Example 9 | Bk-101 | TEG | 11 | 6 | Gly, TEGmBE, 1,2-Hexanediol | 83, 84, 16 | 2.31 | 2.02 | 0.87 | C | Comparison |
| Example 12 | Bk-102 | PG | 111 | 57 | Gly | 83 | 2.29 | 2.2 | 0.96 | A | Invention |

### EXAMPLE 13 AND COMPARATIVE EXAMPLE 10

### <Manufacture of Ink Set>

Ink set 1 (the invention) and ink set 2 (comparative example) of the following combinations were manufactured.

### <Printing with Ink Set>

Images of a figure and a landscape were formed by filling ink set 1 (the invention) and ink set 2 (comparative example) of the following combinations in DRY MINILAB 400 ink cartridge (manufactured by Fuji Photo Film Co., Ltd.) in the same manner as in Example 1, and printing was performed at 23°C 50% RH with roll paper of ink jet image-receiving paper "Kassai" (manufactured by Fuji Photo Film Co., Ltd.) of a size of 102 mm × 152 mm by processing speed of 650 sheets per an hour. At this time, the drying unit of the printer was stopped during printing, and on about half a part (part b) of the printed surface was superposed the next discharged paper immediately after printing, and the printed paper was dried for 24 hours with the remaining half (part a) being exposed to atmospheric condition.

### [Evaluation of Recorded Image]

After that, superposed paper was removed and image evaluation of image was carried out according to the following criteria. The combinations of ink sets 1 and 2 and the results of evaluation are shown in Table 4 below.

### -Criteria of Evaluation-

A: The difference in density between part a and part b of each image cannot be visually perceived.
B: The difference in density between part a and part b of each image can be slightly perceived.
C: The difference in density between part a and part b of each image can be clearly perceived.

**TABLE 4**

| | Sample | Yellow | Magenta | Cyan | Black | Recorded Image | Remarks |
|---|---|---|---|---|---|---|---|
| Comparative Example 10 | Ink set 1 | Y-101 | M-107 | C-101 | Bk-101 | C | Comparison |
| Example 13 | Ink set 2 | Y-102 | M-102 | C-102 | Bk-102 | A | Invention |

### EXAMPLE 14 AND COMPARATIVE EXAMPLES 11 AND 12

### <Preparation of Light Inks LM-101 to 102, and LC-101to102>

Light magenta ink LM-101 was prepared in the same manner as in the preparation of magenta ink M-107 except for changing the use amount of the magenta dye from 30 g/liter to 10 g/liter. Light magenta ink LM-102 was prepared in the same manner as in the preparation of magenta ink M-102 except for changing the use amount of the magenta dye from 30 g/liter to 10 g/liter.
In the next place, light cyan inks LC-101 and LC-102 were prepared in the same manner as in the preparation of cyan inks C-101 and 102 except for changing the use amount of the cyan dye from 54 g/liter to 18 g/liter.

### <Manufacture of Six-Color Ink Set>

Ink set 3 was manufactured by adding LM-101 and LC-101 1 to the above ink set 1. Ink set 4 was manufactured by adding LM-102 and LC-102 to the above ink set 2. These ink sets 3 and 4 were filled in the ink cartridges of ink jet printer PM-G860 (manufactured by SEIKO EPSON CORPORATION), and an image of a landscape of A4 size was printed on ink jet image-receiving paper "Kassai" Pro (manufactured by Fuji Photo Film Co., Ltd.). Within 10 seconds after printing, unused ink jet image-receiving paper was superposed on about half of the printed surface (part b) to cover there, and the paper was dried for 24 hours with the remaining half (part a) being exposed to atmospheric condition.

### [Evaluation of Recorded Image]

After that, superposed ink jet image-receiving paper was removed and evaluation of the image was carried out according to the same criteria of evaluation of ink sets 1 and 2. For comparison, genuine ink annexed to PM-G860 was also evaluated similarly. The results obtained are shown in Table 5 below.

**TABLE 5**

| | Sample | Result of Result of Evaluation | Remarks |
|---|---|---|---|
| Comparative Example 11 | Ink set 3 | C | Comparison |
| Example 14 | Ink set 4 | A | Invention |
| Comparative Example 12 | PM-G860 Ink set | B | Comparison |

From the results of the above experiments, it is apparent that the ink composition in the invention and the method for forming ink jet images using the ink set of the invention can reduce the difference in density of images between the stacked part and the non-stacked part even when an image-receiving material on which images are formed at high speed is stacked.

There are disclosed in JP-ANos. 2007-77256, 2007-23251 and 2004-331699 that dyes described therein reveal fastness equal to or more than pigment inks in dependence upon the test methods and the combinations with image-receiving materials.
However, as the defect of an ink jet recording system particularly using inks of water-soluble dyes, densities and hues of images vary.
In particular, when an image-receiving material is stacked just after recording, difference in density occurs between a stacked part and a non-stacked part by the superposition of the upper image-receiving material on the surface of the image-receiving layer of the lower image-receiving material. In addition, when image-receiving materials are slipped out of place and stacked, a stacked part and a non-stacked part are generated in one and the same image-receiving material and the difference in density is observed more conspicuously. Accordingly, a method for forming an ink jet image little in change of hue after recording and little in the difference in density at a stacked part and a non-stacked part has been strongly desired.
The invention has been made in view of the above, and an object of the invention is to provide a method for forming an ink jet image little in change of hue after recording and little in the difference in density at a stacked part and a non-stacked part. Another object of the invention is to provide a method for forming an ink jet image capable of exhibiting these effects even in the case of high speed image formation.

The invention can provide a method for forming an ink jet image little in change of hue after recording and little in the difference in density at a stacked part and a non-stacked part.

## Claims

1. A method for forming an ink jet image, the method comprising forming an image by using an apparatus to form an image on an image-receiving material by an ink jet system with an ink for ink jet recording containing at least a water-soluble dye, water and a water-soluble organic solvent and, after image formation, discharge and stack a plurality of the image-receiving materials respectively having images formed thereon,
wherein the water-soluble organic solvent is selected from a water-soluble diol and/or a pyrrolidone derivative each having an I/O value of 3.0 or more, and is contained in an amount of 40 % by mass or more of the entire amount of water-soluble organic solvents in the ink for ink jet recording.

2. The method for forming an ink jet image according to claim 1, wherein the stacking is performed within 30 seconds after image formation.

3. The method for forming an ink jet image according to claim 2, wherein the stacking is performed within 10 seconds after image formation.

4. The method for forming an ink jet image according to any of claims 1-3,
wherein the water-soluble organic solvent comprises a water-soluble diol having an I/O value of 3.0 or more and the water-soluble diol having an I/O value of 3.0 or more contains one or more selected from ethylene glycol, diethylene glycol, triethylene glycol, propylene glycol and dipropylene glycol.

5. The method for forming an ink jet image according to any of claims 1-4, using an ink set including a plurality of the inks for ink jet recording containing a water-soluble dye, water and a water-soluble organic solvent,
wherein the plurality of inks for ink jet recording comprise yellow ink containing a water-soluble yellow dye, magenta ink containing a water-soluble magenta dye, cyan ink containing a water-soluble cyan dye, and black ink containing a water-soluble black dye.

6. The method for forming an ink jet image according to claim 5, wherein the magenta ink and/or cyan ink comprises two or more inks of the same hue and different dye densities.

7. The method for forming an ink jet image according to claim 5 or 6, wherein 50 % by mass or more of the dye contained in each ink of the ink set has an oxidation potential nobler than 1.0 V (vs SCE).

8. The method for forming an ink jet image according to any of claims 5-7, wherein 50 % by mass or more of the cyan dye is a water-soluble phthalocyanine dye having a structure represented by formula (C-1): 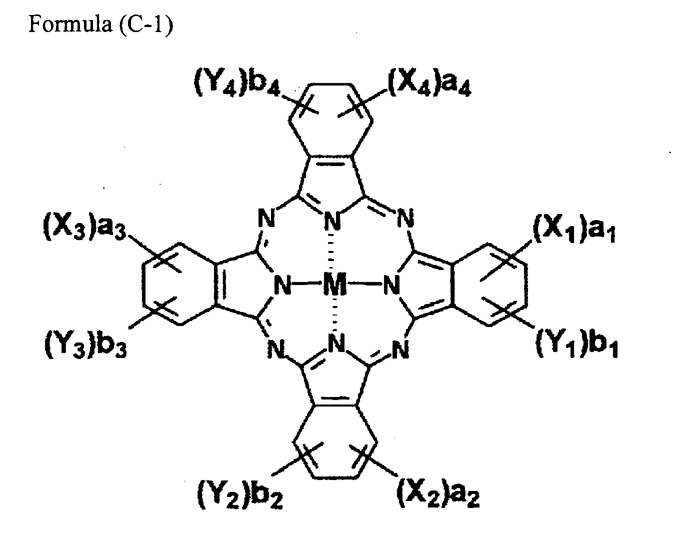 wherein each of X₁, X₂, X₃ and X₄ independently represents any of -SO-Z, -SO₂-Z, - SO₂NV₁V₂, -CONV₁V₂, -CO₂Z, -CO-Z, or a sulfo group; Z independently represents a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group; V₁ and V₂, which may be the same or different, each represent a hydrogen atom, a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group; each of Y₁, Y₂, Y₃ and Y₄ independently represents a hydrogen atom, a halogen atom, an alkyl group, a cycloalkyl group, an akenyl group, an aralkyl group, an aryl group, a heterocyclic group, a cyano group, a hydroxyl group, a nitro group, an amino group, an alkylamino group, an alkoxy group, an aryloxy group, an amido group, an arylamino group, a ureido group, a sulfamoylamino group, an alkylthio group, an arylthio group, an alkoxycarbonylamino group, a sulfonamido group, a carbamoyl group, a sulfamoyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imido group, a heterocyclic thio group, a phosphoryl group, an acyl group, or an ionic hydrophilic group, and each group may further have a substituent; a₁ to a₄ and b₁ to b₄ respectively represent substituents of X₁ to X₄ and Y₁ to Y₄, each of a₁ to a₄ independently represents an integer of from 0 to 4, provided that all of a₁ to a₄ do not represent 0 at the same time, and each of b₁ to b₄ independently represents an integer of from 0 to 4; and M represents a hydrogen atom, a metal atom or an oxide thereof, a hydroxide, or a halide, provided that at least one of X₁, X₂, X₃, X₄, Y₁, Y₂, Y₃ or Y₄ represents an ionic hydrophilic group, or a group having an ionic hydrophilic group as a substituent.

9. The method for forming an ink jet image according to any of claims 5-8, wherein 50 % by mass or more of the yellow dye is a water-soluble azo dye having a structure represented by formula (Y-1): 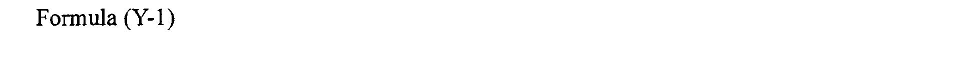 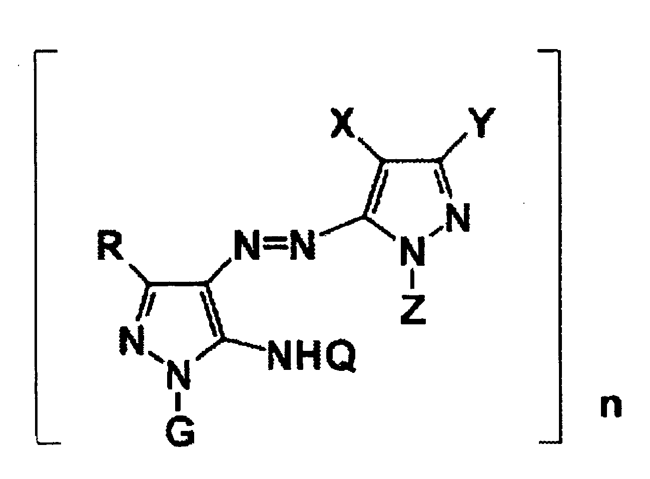 wherein G represents a heterocyclic group; n represents an integer of from 1 to 3; when n is 1, each of R, X, Y, Z, Q and G represents a monovalent substituent; when n is 2, each of R, X, Y, Z, Q and G represents a monovalent or divalent substituent, and at least one of R, X, Y, Z, Q and G represents a divalent substituent; and when n is 3, each of R, X, Y, Z, Q and G represents a monovalent, divalent, or trivalent substituent, and at least two of R, X, Y, Z, Q and G represent a divalent substituent or at least one of R, X, Y, Z, Q and G represents a trivalent substituent.

10. The method for forming an ink jet image according to any of claims 5-9, wherein 50 % by mass or more of the magenta dye is a water-soluble azo dye having a structure represented by formula (M-1): 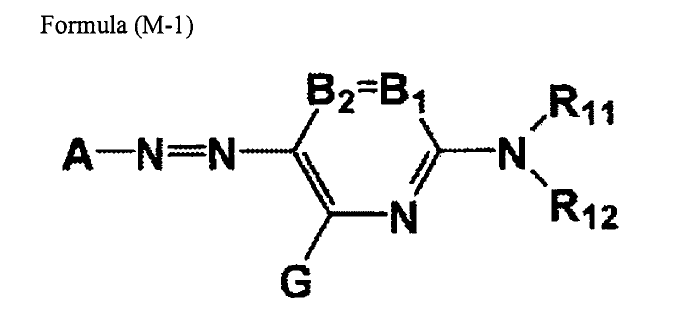 wherein A represents a residue of a 5-membered heterocyclic diazo component A-NH₂; each of B₁ and B₂ represents -CR₁₃= or -CR₁₄=, or either one represents a nitrogen atom and the other represents -CR₁₃= or -CR₁₄=; each of R₁₁ and R₁₂ independently represents a hydrogen atom, an alkyl group, a cycloalkyl group, an alkenyl group, an alkynyl group, an aralkyl group, an aryl group, a heterocyclic group, an acyl group, an alkoxycarbonyl group, an aryloxycarbonyl group, a carbamoyl group, an alkylsulfonyl group, an arylsulfonyl group, or a sulfamoyl group, and each group may further have a substituent; each of G, R₁₃ and R₁₄ independently represents a hydrogen atom, a halogen atom, an alkyl group, an alkenyl group, an alkynyl group, an aralkyl group, an aryl group, a heterocyclic group, a cyano group, a carboxyl group, a carbamoyl group, an alkoxycarbonyl group, an aryloxycarbonyl group, an acyl group, a hydroxyl group, an alkoxy group, an aryloxy group, a silyloxy group, an acyloxy group, a carbamoyloxy group, a heterocyclic oxy group, an alkoxycarbonyloxy group, an aryloxycarbonyloxy group, an amino group substituted with an alkyl group or an aryl group or a heterocyclic group, an acylamino group, a ureido group, a sulfamoylamino group, an alkoxycarbonylamino group, an aryloxycarbonylamino group, an alkylsulfonylamino group, an arylsulfonylamino group, a nitro group, an alkylthio group, an arylthio group, an alkylsulfonyl group, an arylsulfonyl group, an alkylsulfinyl group, an arylsulfinyl group, a sulfamoyl group, a heterocyclic thio group, or an ionic hydrophilic group, and each group may further have a substituent; and R₁₃ and R₁₁, or R₁₁ and R₁₂ may be bonded to form a 5- or 6-membered ring, provided that formula (M-1) has at least one ionic hydrophilic group.

11. The method for forming an ink jet image according to any of claims 5-10, wherein 50 % by mass or more of the black dye is a water-soluble azo dye having a structure represented by formula (B-1): 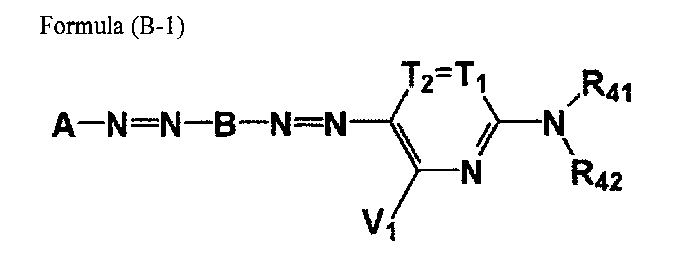 wherein each of A and B independently represents an aromatic group that may be substituted, or a heterocyclic group that may be substituted, in which A is a monovalent group and B is a divalent group; each of T₁ and T₂ represents =CR₄₃- or -CR₄₄=, or either one represents a nitrogen atom and the other represents =CR₄₃- or -CR₄₄=; each of V₁, R₄₃ and R₄₄ independently represents a hydrogen atom, a halogen atom, an alkyl group, an alkenyl group, an alkynyl group, an aralkyl group, an aryl group, a heterocyclic group, a cyano group, a carboxyl group, a carbamoyl group, an alkoxycarbonyl group, an aryloxycarbonyl group, a heterocyclic oxycarbonyl group, an acyl group, a hydroxyl group, an alkoxy group, an aryloxy group, a heterocyclic oxy group, a silyloxy group, an acyloxy group, a carbamoyloxy group, an alkoxycarbonyloxy group, an aryloxycarbonyloxy group, an amino group (including an alkylamino group, an arylamino group, and a heterocyclic amino group), an acylamino group, a ureido group, a sulfamoylamino group, an alkoxycarbonylamino group, an aryloxycarbonylamino group, an alkylsulfonylamino group, an arylsulfonylamino group, a heterocyclic sulfonylamino group, a nitro group, an alkylthio group, an arylthio group, a heterocyclic thio group, an alkylsulfonyl group, an arylsulfonyl group, a heterocyclic sulfonyl group, an alkylsulfinyl group, an arylsulfinyl group, a heterocyclic sulfinyl group, a sulfamoyl group, or a sulfo group, and each group may further be substituted; each of R₄₁ and R₄₂ independently represents a hydrogen atom, an alkyl group, an alkenyl group, an alkynyl group, an aralkyl group, an aryl group, a heterocyclic group, an acyl group, an alkoxycarbonyl group, an aryloxycarbonyl group, a carbamoyl group, an alkylsulfonyl group, an arylsulfonyl group, or a sulfamoyl group, and each group may further have a substituent, provided that R₄₁ and R₄₂ do not represent a hydrogen atom at the same time; and R₄₃ and R₄₁, or R₄₁ and R₄₂ may be bonded to form a 5- or 6-membered ring.

12. The method for forming an ink jet image according to any of claims 1-11,
wherein the image-receiving material comprises a support having provided thereon an ink-receiving layer containing porous white inorganic pigment particles and the image is formed on the ink-receiving layer side of the image-receiving material.
